# EUROPEAN PATENT SPECIFICATION

(11) **EP 4 492 026 B1**
(45) Date of publication and mention of the grant of the patent: **14.10.2026**
(21) Application number: 23766418.0
(22) Date of filing: 10.02.2023
(51) Int. Cl.: G01L 5/00, B60B 35/02, F16C 19/18, F16C 41/00, G01L 5/164, G01L 5/169

(54) **DETECTION DEVICE**
DETEKTIONSVORRICHTUNG
DISPOSITIF DE DÉTECTION

(30) Priority: 07.03.2022 JP 2022034712; 07.10.2022 JP 2022162452
(43) Date of publication of application: 15.01.2025
(73) Proprietor: DENSO CORPORATION, Kariya-city, Aichi 448-8661 (JP)
(72) Inventor: KIDA, Yoshihiro, Nisshin-city, Aichi-pref., 470-0111 (JP); KAWANO, Takanobu, Nisshin-city, Aichi-pref., 470-0111 (JP); KIMURA, Yusuke, Nisshin-city, Aichi-pref., 470-0111 (JP); AKAMA, Sadahiro, Kariya-city, Aichi-pref., 448-8661 (JP); HORIHATA, Harumi, Kariya- city, Aichi-pref., 448-8661 (JP); OHMI, Tetsuya, Kariya- city, Aichi-pref., 448-8661 (JP); KITAURA, Yasuhiro, Kariya- city, Aichi-pref., 448-8661 (JP); KOBAYASHI, Atsushi, Kariya- city, Aichi-pref., 448-8661 (JP); MORIKAWA, Teppei, Kariya- city, Aichi-pref., 448-8661 (JP); HANDA, Akihiro, Kariya-city, Aichi 4488661 (JP)
(74) Representative: TBK
(86) International application number: PCT/JP2023/004554
(87) International publication number: WO 2023/171238

(56) References cited:
- JP-A- 2006 003 268
- JP-A- 2006 003 268
- JP-A- 2006 133 111
- JP-A- 2006 275 251
- JP-A- 2006 275 251
- JP-A- 2020 060 262
- US-A1- 2008 144 985

## Description

### [TECHNICAL FIELD]

The present invention relates to a detection apparatus according to each of the preambles of the independent claims.

### [BACKGROUND ART]

As disclosed in JP 5 436 191 B2, there is known a bearing device that supports a hub, which is fixed to a vehicle wheel, in such a manner as to be rotatable with respect to a vehicle body. The bearing device has an outer ring fixed to the vehicle body, an inner ring fixed to the hub, and rolling elements provided between the outer ring and the inner ring. In order to stabilize driving of the vehicle, it is desirable to perform driving control of the vehicle based on forces acting on the vehicle wheel.

Moreover, in JP 5 436 191 B2, there are disclosed an axial strain sensor, a radial strain sensor and a control unit, which are configured to detect forces acting on the vehicle wheel. Specifically, the axial strain sensor detects axial displacement of the outer ring, while the radial strain sensor detects radial displacement of the outer ring. Since there are correlations between displacements of the outer ring and forces acting on the vehicle wheel, displacements of the outer ring can be converted into forces acting on the vehicle wheel. Therefore, the control unit calculates an axial force acting on the vehicle wheel on the basis of the axial displacement of the outer ring detected by the axial strain sensor; and it also calculates a vertical force acting on the vehicle wheel on the basis of the radial displacement of the outer ring detected by the radial strain sensor.

The sensors disclosed in JP 5 436 191 B2 are provided near the bearing. Therefore, when forces act on the vehicle wheel, the displacements detected by the sensors are small. Consequently, the accuracy of detecting the displacements may be deteriorated. In addition, deterioration of displacement detection accuracy is not limited to vehicles.

JP 2006 - 275 251 A shows a detection apparatus according to each of the preambles of the independent claims, comprising: a base part; and a bearing configured to support a rotating object rotatably with respect to the base part, the bearing having an outer ring member, an inner ring member, and rolling elements provided between the outer ring member and the inner ring member, wherein a first bearing member, which is one of the outer ring member and the inner ring member, is fixed to the rotating object, and a second bearing member, which is the other of the outer ring member and the inner ring member, is fixed to the base part, the detection apparatus further comprising: a discoid rotating part for detection provided in such a manner as to rotate together with the first bearing member, the rotating part for detection extending radially outward of the bearing with respect to the first bearing member; and a displacement detection unit which faces the rotating part for detection in an axial direction of the bearing, the displacement detection unit being configured to output a voltage signal according to displacement of the rotating part for detection in the axial direction and displacement of the rotating part for detection in a direction perpendicular to the axial direction.

A further detection apparatus according to the prior art is shown in JP 2006 - 003 268 A.

### [SUMMARY OF THE INVENTION]

It is the object of the present invention to further develop a detection apparatus according to the preambles of the independent claims such that it is capable of improving the accuracy of detecting displacements.

The object of the present invention is achieved by each of the detection apparatuses having the features of the independent claims.

Further advantageous developments according to the present invention are defined in the dependent claims.

According to an advantage of the present invention, there is provided a detection apparatus which includes a base part, and a bearing configured to support a rotating object rotatably with respect to the base part. The bearing has an outer ring member, an inner ring member, and rolling elements provided between the outer ring member and the inner ring member. A first bearing member, which is one of the outer ring member and the inner ring member, is fixed to the rotating object. A second bearing member, which is the other of the outer ring member and the inner ring member, is fixed to the base part. The detection apparatus further includes a discoid rotating part for detection and a displacement detection unit. The rotating part for detection is provided in such a manner as to rotate together with the first bearing member. The rotating part for detection extends radially outward of the bearing with respect to the first bearing member. The displacement detection unit is provided at a position in the base part which is radially away from the bearing and faces the rotating part for detection in an axial direction of the bearing. The displacement detection unit is configured to output a voltage signal according to displacement of the rotating part for detection in the axial direction and displacement of the rotating part for detection in a direction perpendicular to the axial direction.

The rotating part for detection is provided in such a manner as to rotate together with the first bearing member of the bearing. Therefore, the rotating part for detection rotates together with the rotating object that is fixed to the first bearing member.

Here, the more the rotating part for detection is located away from the first bearing member radially outward, the greater the axial displacement of the rotating part for detection becomes when an axial force acts on the rotating object. Therefore, the displacement detection accuracy of the displacement detection unit can be improved by providing the displacement detection unit at a position where the axial displacement of the rotating part for detection becomes large. In consideration of the above, the displacement detection unit is provided at a position in the base part which is radially away from the bearing and faces the rotating part for detection in the axial direction of the bearing. Consequently, compared to the case of, for example, providing the displacement detection unit near the bearing, it becomes possible to increase change in the voltage signal outputted from the displacement detection unit with respect to change in the axial displacement of the rotating part for detection. As a result, it becomes possible to improve the accuracy of detection of the axial displacement by the displacement detection unit; thus, it also becomes possible to improve, for example, the accuracy of calculation of a lateral force based on the detected axial displacement.

Moreover, the voltage signal is outputted by the displacement detection unit according to displacement of the rotating part for detection in a direction perpendicular to the axial direction as well as to displacement of the rotating part for detection in the axial direction. Consequently, it becomes possible to calculate, based on the voltage signal, a force acting on the rotating object in the direction perpendicular to the axial direction.

### [BRIEF DESCRIPTION OF THE DRAWINGS]

The above-described and other effects, features and beneficial advantages according to the present disclosure will become more apparent from the following detailed explanation with reference to the accompanying drawings. In the drawings:
FIG. 1 is a longitudinal cross-sectional view of a vehicle wheel according to a first embodiment;
FIG. 2 is a plan view of a race part;
FIG. 3 is a diagram illustrating a situation where an inner ring is inclined with respect to an outer ring when a lateral force acts on a tire;
FIG. 4 is a diagram illustrating vertical displacement of the inner ring when a vertical load acts on the tire;
FIG. 5 is a diagram showing a detection unit;
FIG. 6 is a diagram illustrating the electrical configuration of the detection unit and a processing unit;
FIGS. 7(a), 7(b) and 7(c) are projections of an excitation coil and first and second reception coils on a plan view of a multi-layer board;
FIG. 8 is a diagram showing wiring patterns and vias formed to a first layer of the multi-layer board;
FIG. 9 is a diagram showing wiring patterns and vias formed to a second layer of the multi-layer board;
FIG. 10 is a diagram showing wiring patterns and vias formed to a third layer of the multi-layer board;
FIG. 11 is a diagram showing wiring patterns and vias formed to a fourth layer of the multi-layer board;
FIG. 12 is a diagram illustrating the relative positional relationship between the first and second reception coils and a shielding portion;
FIG. 13 is a diagram for explaining the principle of detection of displacement and rotation angle;
FIG. 14 is another diagram for explaining the principle of detection of displacement and rotation angle;
FIG. 15 is a schematic plan view of the second reception coil;
FIG. 16 is a diagram illustrating the changes in an output voltage signal of a reception coil and an envelope of the output voltage signal;
FIG. 17 is a diagram illustrating the changes in first and second envelopes;
FIG. 18 is a characteristic diagram illustrating the relationship between displacement signals and axial displacement;
FIGS. 19(a) and 19(b) are diagrams illustrating the changes in the envelopes from a reference state when a lateral force is applied;
FIGS. 20(a), 20(b) and 20(c) are diagrams illustrating the relative positional relationship between the first and second reception coils and the shielding portion when a vertical load is applied;
FIGS. 21(a), 21(b) and 21(c) are diagrams illustrating the changes in the envelopes from the reference state when a vertical load is applied;
FIG. 22 is a characteristic diagram illustrating the relationship between the displacement signals and vertical displacement;
FIG. 23 is a diagram showing characteristic information associating first and second displacement signals with displacements ΔY and ΔZ, lateral force and vertical load;
FIG. 24 is a plan view of a race part according to a modification of the first embodiment;
FIG. 25 is a perspective view of a race part according to another modification of the first embodiment;
FIG. 26 is a plan view of the race part according to the modification of the first embodiment shown in FIG. 25;
FIG. 27 is a plan view of a race part according to another modification of the first embodiment;
FIG. 28 is a diagram illustrating the arrangement of a race part and a board according to another modification of the first embodiment;
FIG. 29 is a diagram illustrating the relative positional relationship between first and second reception coils and a shielding portion according to a second embodiment;
FIG. 30 is a diagram illustrating a reception coil according to a third embodiment;
FIGS. 31(a), 31(b) and 31(c) are diagrams illustrating the relative positional relationship between the reception coil and a shielding portion and the change in an envelope in a reference state;
FIGS. 32(a), 32(b) and 32(c) are diagrams illustrating the relative positional relationship between the reception coil and the shielding portion and the change in the envelope when a lateral force is applied;
FIGS. 33(a), 33(b) and 33(c) are diagrams illustrating the relative positional relationship between the reception coil and the shielding portion and the change in the envelope when a vertical load is applied;
FIG. 34 is a diagram illustrating a race part and a detection unit according to a fourth embodiment;
FIG. 35 is a longitudinal cross-sectional view of a vehicle wheel according to a fifth embodiment;
FIG. 36 is a longitudinal cross-sectional view of a vehicle wheel according to a sixth embodiment;
FIG. 37 is a block diagram of a processing unit according to a seventh embodiment;
FIG. 38 is a diagram illustrating the relationship between lateral displacement voltage and lateral force;
FIG. 39 is a flowchart illustrating steps of a lateral force calculation process according to the seventh embodiment;
FIG. 40 shows time charts illustrating the changes in a lateral offset voltage, a lateral displacement voltage, etc. according to the seventh embodiment;
FIG. 41 is a block diagram of a processing unit according to an eighth embodiment;
FIG. 42 is a flowchart illustrating steps of a lateral force calculation process according to the eighth embodiment;
FIG. 43 shows time charts illustrating the changes in a lateral offset voltage, a lateral displacement voltage, etc. according to the eighth embodiment;
FIG. 44 is a block diagram of a processing unit according to a ninth embodiment;
FIG. 45 is a flowchart illustrating steps of a lateral force calculation process according to the ninth embodiment;
FIG. 46 shows time charts illustrating the changes in a lateral offset voltage, a lateral displacement voltage, etc. according to the ninth embodiment;
FIG. 47 is a block diagram of a processing unit according to a tenth embodiment;
FIG. 48 is a flowchart illustrating steps of a lateral force calculation process according to the tenth embodiment;
FIG. 49 is a block diagram of a processing unit according to an eleventh embodiment;
FIG. 50 is a flowchart illustrating steps of a process for calculating a lateral force and a vertical load according to the eleventh embodiment;
FIG. 51 is a block diagram of a processing unit according to a twelfth embodiment;
FIG. 52 is a flowchart illustrating steps of a process for calculating a lateral force and a forward/backward load according to the twelfth embodiment;
FIG. 53 is a block diagram of a processing unit according to a thirteenth embodiment;
FIG. 54 is a diagram illustrating low-pass filter characteristics;
FIG. 55 shows a table illustrating the relationship of cut-off frequency with vehicle speed, tire pressure and vehicle weight;
FIG. 56 is a block diagram of a processing unit according to a fourteenth embodiment;
FIG. 57 shows time charts illustrating the changes in a lateral offset voltage, a lateral displacement voltage, etc. according to the fourteenth embodiment;
FIG. 58 is a configuration diagram of an in-vehicle system according to a fifteenth embodiment;
FIG. 59 is a diagram showing an ECU and a circuit unit;
FIG. 60 is another diagram showing an ECU and a circuit unit;
FIG. 61 is another diagram showing an ECU and a circuit unit; and
FIG. 62 is another diagram showing an ECU and a circuit unit.

### [EMBODIMENTS FOR CARRYING OUT THE INVENTION]

### [First Embodiment]

Hereinafter, a first embodiment embodying a vehicular detection apparatus according to the present disclosure will be described with reference to the drawings. The detection apparatus according to the present embodiment is configured to be capable of calculating forces acting on a vehicle wheel (e.g., a drive wheel) that includes an in-wheel motor; the vehicle wheel is a rotating object. The vehicle wheel is arranged so as to be in a horizontal state when the vehicle is in normal use. The vehicle may be, for example, a four-wheeled passenger vehicle which has two front wheels and two rear wheels. It should be noted that the vehicle is not limited to a four-wheeled vehicle, but may be a vehicle other than a four-wheeled vehicle, such as a two-wheeled vehicle. Moreover, it also should be noted that the vehicle is not limited to a passenger vehicle.

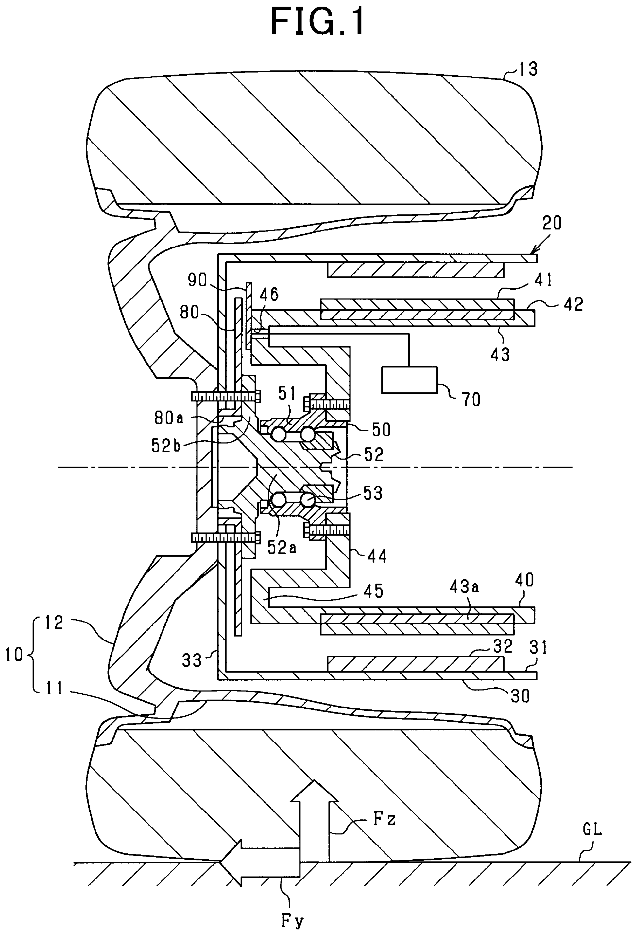

As shown in FIG. 1, the vehicle wheel includes a wheel 10 and an in-wheel motor 20. The wheel 10 has a cylindrical rim part 11, and a disc part 12 provided at an outer end of the rim part 11 in a vehicle width direction. A tire 13 is mounted to an outer periphery of the rim part 11.

The in-wheel motor 20 is received in an inner space of the wheel 10 surrounded by the rim part 11 and the disc part 12, and configured to apply rotational power to the wheel 10. The in-wheel motor 20 is an outer rotor type motor which includes a rotor 30 and a stator 40 that is arranged radially inside the rotor 30.

The rotor 30 includes a cylindrical magnet holder 31 and a magnet unit 32 provided on an inner circumferential surface of the magnet holder 31. The magnet holder 31 faces, over the entire range from its outer end to its inner end in an axial direction of the in-wheel motor 20 (i.e., in the vehicle width direction), an inner circumferential surface of the rim part 11. The magnet unit 32 has a cylindrical shape concentric with the central axis of rotation of the rotor 30, and has a plurality of magnets fixed to the inner circumferential surface of the magnet holder 31. In other words, the in-wheel motor 20 according to the present embodiment is configured as a Surface Permanent Magnet Synchronous Machine (SPMSM). In the magnet unit 32, the magnets are arranged so that their polarities are alternately different in a circumferential direction of the rotor 30. Consequently, the magnet unit 32 has a plurality of magnetic poles formed along the circumferential direction. The magnets may be implemented by, for example, sintered neodymium magnets. It should be noted that the in-wheel motor 20 may alternatively be configured as an Interior Permanent Magnet Synchronous Machine (IPMSM).

The rotor 30 includes a discoid flat plate part 33 that is provided at the outer end of the magnet holder 31 in the vehicle width direction and connects the magnet holder 31 and the disc part 12. The disc part 12 is fixed to the flat plate part 33 by bolts. Consequently, the rotor 30 and the wheel 10 can rotate together with each other.

The stator 40 has a cylindrical stator coil 41 located at a position radially facing the magnet unit 32, and a cylindrical stator base part 42 located radially inside the stator coil 41. The stator coil 41 has a coil side part located at a position radially facing the magnet unit 32, and coil end parts located respectively at opposite axial ends of the coil side part.

The stator base part 42 is fixed to the vehicle body via, for example, a knuckle or the like and holds the stator coil 41. The stator base part 42 has a cylindrical portion 43 fixed to the vehicle body. A part of the cylindrical portion 43 which is radially adjacent to the stator coil 41 constitutes a stator core 43a.

The stator base part 42 also has a fixing portion 44 that extends radially inward from one axial end of the cylindrical portion 43. The rotor 30 is rotatably supported with respect to the stator base part 42 by the fixing portion 44 and a bearing 50. Moreover, a radially outer end part of the fixing portion 44 is formed as an annular protruding part 45 that protrudes toward the flat plate part 33. The protruding part 45 has a flat surface facing the flat plate part 33.

The bearing 50, which is a rolling bearing (e.g., a radial ball bearing), includes an outer ring 51 that corresponds to a "first bearing member", an inner ring 52 that corresponds to a "second bearing member", and a plurality of rolling elements 53 (e.g., balls) arranged between the outer ring 51 and the inner ring 52. The outer ring 51 is fixed to the fixing portion 44 by bolts. The inner ring 52 has a cylindrical portion 52a radially facing the outer ring 51 and a flange portion 52b extending radially outward from one axial end of the cylindrical portion 52a. The flange portion 52b is fixed to the flat plate part 33 and the disc part 12 by bolts. It should be noted that FIG. 1 shows the inner ring 52 and the outer ring 51 in a state of being coaxial with each other.

The vehicle is equipped with an inverter that is electrically connected with the stator coil 41, and a power storage unit that is electrically connected with the inverter. The power storage unit is provided to the vehicle body. The power storage unit may be implemented by, for example, a storage battery such as a lithium-ion storage battery. The inverter includes upper-arm and lower-arm switches; and switching control of these switches is performed by a control device. Consequently, the rotor 30 rotates and thus the vehicle wheel also rotates. In addition, the inverter and the control device may be either provided to the vehicle body or built in the in-wheel motor 20.

In the inner space of the wheel 10, there are provided a discoid race part 80 that corresponds to a "rotating part for detection" and a detection unit 90 that corresponds to a "displacement detection unit". The race part 80 and the detection unit 90 are employed to calculate the rotational angle (more specifically, the electrical angle or mechanical angle) of the rotor 30 of the in-wheel motor 20, the rotational speed of the vehicle wheel, a lateral force Fy acting between a ground surface GL and the vehicle wheel (more specifically, the tire 13), and a force acting between the ground surface GL and the vehicle wheel in a direction perpendicular to the ground surface GL (hereinafter, to be referred to as the vertical load Fz). The direction in which the lateral force acts is perpendicular to the direction in which the vertical load acts. The calculated rotation angle (or electrical angle) is used in the control device for switching control of the inverter; and the rotational speed of the vehicle wheel, the lateral force and the vertical load are used in the control device for driving control of the vehicle.

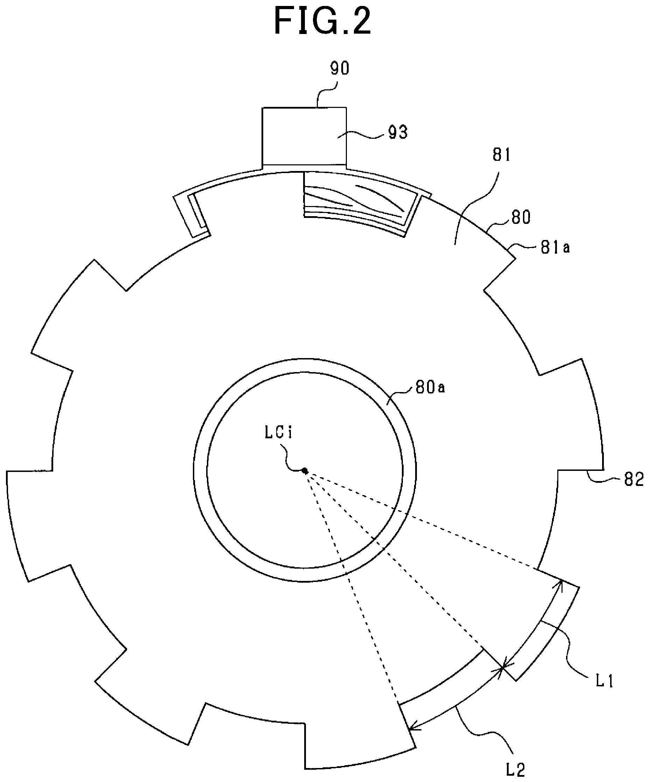

As shown in FIGS. 1 and 2, the race part 80 is discoid in shape and formed of a metal material (e.g., iron or aluminum). Moreover, a through-hole is formed in a central portion of the race part 80. A peripheral edge portion of the through-hole of the race part 80 is bent toward the disc part 12, forming a bent portion 80a. The bent portion 80a is fitted in a through-hole formed in a central portion of the flat plate part 33 of the rotor 30. The race part 80 is fixed, in a state of being spaced apart from the flat plate part 33 of the rotor 30 and in surface contact with the flange portion 52b of the inner ring 52, by bolts. Consequently, the race part 80 and the inner ring 52 are kept coaxial with each other; and the race part 80, the rotor 30 and the wheel 10 can rotate together with each other.

A radially outer end portion of the race part 80 faces the protruding part 45 of the stator base part 42. As shown in FIG. 2, in the radially outer end portion of the race part 80, shielding portions 81 that are metal portions and notches 82 that penetrate the race part 80 in the thickness direction are formed alternately in the circumferential direction. The shielding portions 81 and the notches 82 together constitute an annular "detection target part". In the present embodiment, the circumferential length L1 of the shielding portions 81 is set to be equal to the circumferential length L2 of the notches 82. Moreover, in the example illustrated in FIG. 2, there are eight pairs of the shielding portions 81 and the notches 82 formed in the radially outer end portion of the race part 80. It should be noted that in FIG. 2, LCi designates the central axis of the inner ring 52.

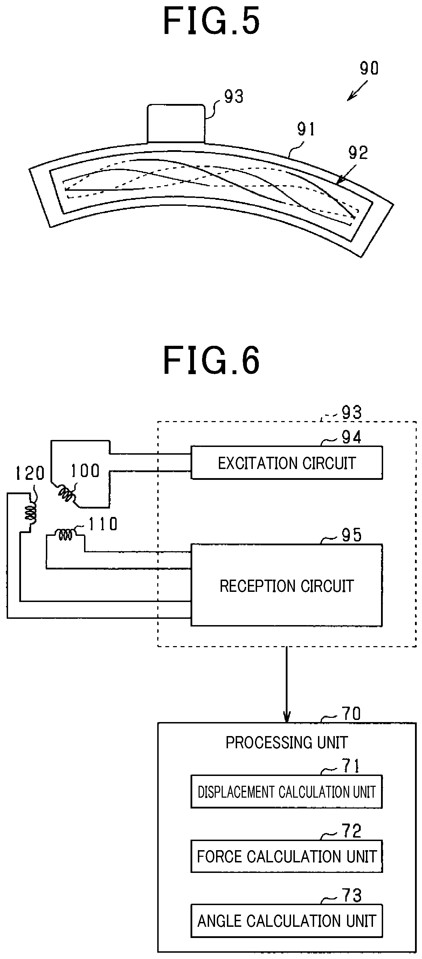

The detection unit 90 is a so-called eddy current type inductive sensor. As shown in FIGS. 2, 5 and 6, the detection unit 90 includes a board 91, a coil unit 92 provided to the board 91 and a circuit unit 93. FIG. 2 is a diagram showing the race part 80 as viewed from the wheel 10 side. FIG. 5 is a diagram showing the board 91 as viewed from the wheel 10 side. The board 91 is fixed to the flat surface of the protruding part 45. Consequently, the board 91 extends in a direction perpendicular to the axial direction of the outer ring 51. More particularly, in the present embodiment, the board 91 is fixed to an upper end part of the flat surface of the annular protruding part 45.

As shown in FIGS. 1 and 6, the circuit unit 93 is electrically connected with a processing unit 70. Specifically, an insertion hole 46 is formed in the protruding part 45; and the processing unit 70 and the circuit unit 93 are electrically connected via a wire inserted in the insertion hole 46. In addition, the processing unit 70 may be either provided to the vehicle body or built in the in-wheel motor 20.

The coil unit 92 includes an excitation coil 100, a first reception coil 110 and a second reception coil 120. Each of the coils 100, 110 and 120 is configured as a planar coil. The circuit unit 93 is configured with an integrated circuit. As shown in FIG. 6, the circuit unit 93 includes an excitation circuit 94 that supplies a high-frequency excitation voltage to the excitation coil 100, and a reception circuit 95. Upon supply of the excitation voltage to the excitation coil 100, voltages having the same or equivalent frequency as the excitation voltage are induced in the first reception coil 110 and the second reception coil 120. The reception circuit 95 detects, for each of the reception coils 110 and 120, the voltage between two ends of the reception coil as an output voltage signal.

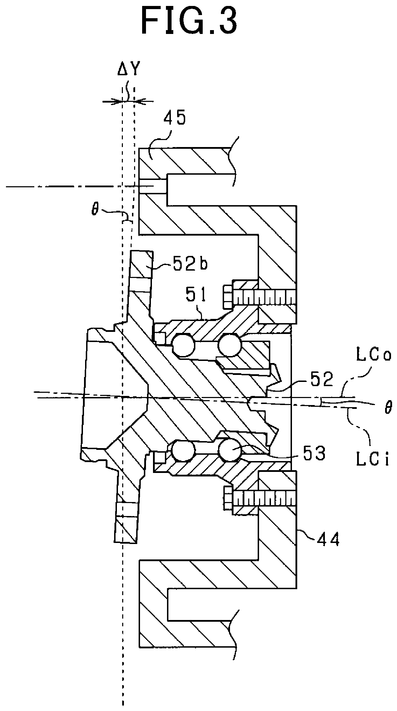

When the lateral force Fy acts on the vehicle wheel as shown in FIG. 1, the inclination θ of the central axis LCi of the inner ring 52 with respect to the central axis LCo of the outer ring 51 increases as shown in FIG. 3. Consequently, the axial distances from the reception coils 110 and 120 to the race part 80 change, causing the amplitudes of the output voltage signals of the reception coils 110 and 120 to change. The detection unit 90 calculates the axial displacement ΔY of the race part 80 on the basis of the changes in the amplitudes, and calculates the lateral force Fy on the basis of the calculated axial displacement ΔY.

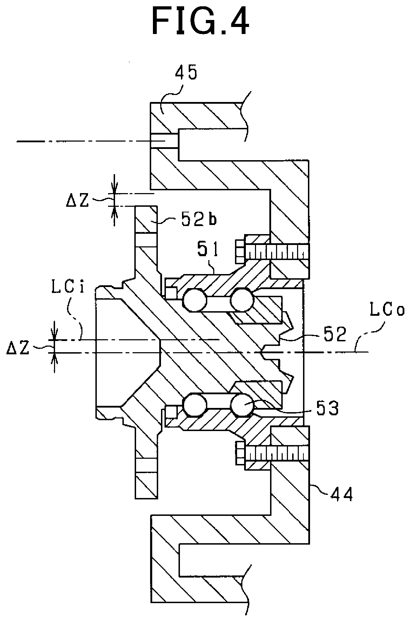

On the other hand, when the vertical load Fz acts on the vehicle wheel, the central axis LCi of the inner ring 52 is displaced in a direction perpendicular to the central axis LCo of the outer ring 51, as shown in FIG. 4. Consequently, the race part 80 fixed to the flange portion 52b is also displaced. In the present embodiment, the detection unit 90 is configured so that the amplitudes of the output voltage signals of the reception coils 110 and 120 change with displacement of the race part 80; this configuration will be described in detail later. The detection unit 90 calculates the displacement of the race part 80 in the direction perpendicular to both the axial direction and the vehicle longitudinal direction (hereinafter, to be referred to as the vertical displacement ΔZ) on the basis of the changes in the amplitudes, and calculates the vertical load Fz on the basis of the calculated vertical displacement ΔZ.

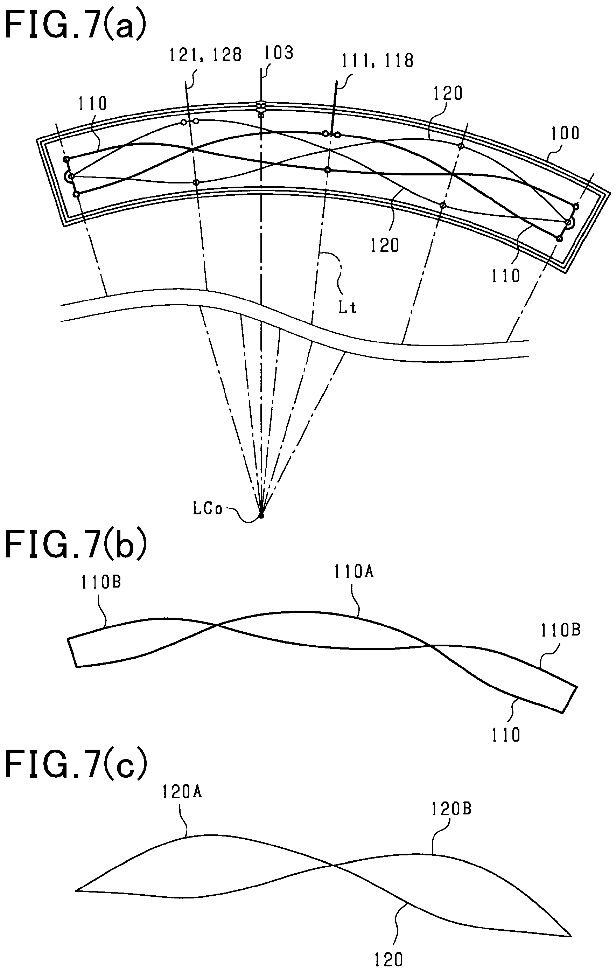

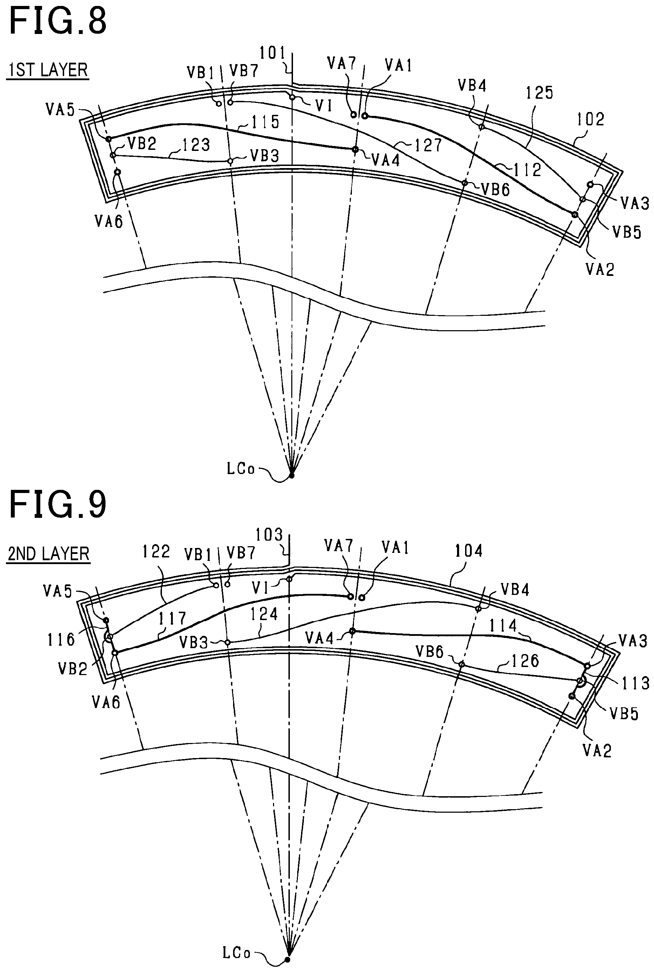

Next, the circuit unit 92 will be described with reference to FIGS. 7(a) to 11. In the present embodiment, the board 91 is a multi-layer board (more specifically, a four-layer board); and the excitation coil 100 and the reception coils 110 and 120, which constitute the coil unit 92, are formed of wiring patterns on the multi-layer board. FIGS. 8 to 11 show the wiring patterns formed on each layer as the board 91 is viewed from the race part 80 side. FIG. 7(a) is a diagram showing the wiring patterns of the second to fourth layers projected onto the wiring patterns of the first layer.

First, the excitation coil 100 will be described. As shown in FIGS. 8 and 9, the excitation coil 100 is formed on the first layer and the second layer that are adjacent to each other in the thickness direction of the board 91. The wiring patterns on the two layers are electrically connected by an electrical conductor filled in an excitation-side via VI. On the first layer, there are formed a first excitation end portion 101 electrically connected with the excitation circuit 94 and a first excitation pattern 102 circling clockwise a plurality times (e.g., three times) from the first excitation end portion 101 to the excitation-side via VI. On the second layer, there are formed a second excitation end portion 103 electrically connected with the excitation circuit 94 and a second excitation pattern 104 circling counterclockwise a plurality times (e.g., three times) from the second excitation end portion 103 to the excitation-side via VI. Consequently, the excitation coil 100, which is a six-turn planar coil, is formed to the board 91. The excitation coil 100 has an arc shape extending in the circumferential direction of the outer ring 51.

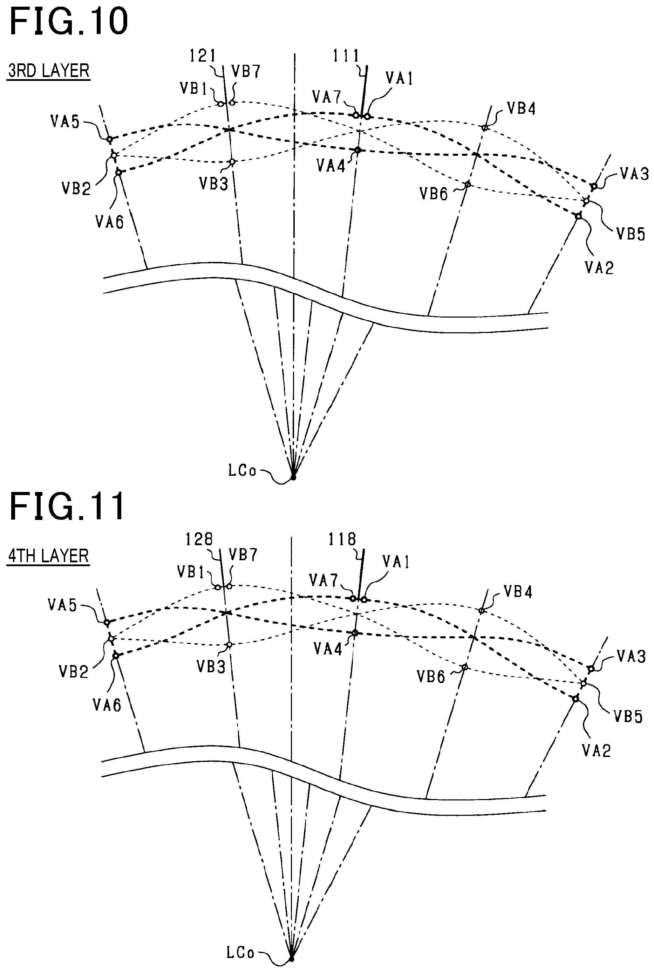

Next, the first reception coil 110 will be described. The first reception coil 110 is formed on the first to fourth layers as shown in FIGS. 8 to 11. Specifically, as shown in FIG. 10, on the third layer, there is formed a first reception end portion 111 electrically connected with the reception circuit 95. To the first reception end portion 111, there is connected, through a first A via VA1, a first end of a pattern 112 formed on the first layer. To a second end of the pattern 112, there is connected, through a second A via VA2, a first end of a pattern 113 formed on the second layer. To a second end of the pattern 113, there is connected, through a third A via VA3, a pattern 114 and a fourth A via VA4, a first end of a pattern 115 formed on the first layer. To a second end of the pattern 115, there is connected, through a fifth A via VA5, a first end of a pattern 116 formed on the second layer. To a second end of the pattern 116, there is connected, through a sixth A via VA6, a pattern 117 and a seventh A via VA7, a second reception end portion 118 formed on the fourth layer. The second reception end portion 118 is connected with the reception circuit 95. The reception circuit 95 detects the electrical potential difference between the first reception end portion 111 and the second reception end portion 118 as a first output voltage signal v1.

As shown in FIG. 7(a), the first reception coil 110 is provided in a region surrounded by the excitation coil 100 in plan view of the board 91. Moreover, the first reception coil 110 has: a first part that generates a voltage of a first polarity between the first reception end portion 111 and the second reception end portion 118 when the excitation voltage is supplied to the excitation coil 100; and a second part that generates a voltage of a second polarity, which is opposite to the first polarity, between the first reception end portion 111 and the second reception end portion 118 when the excitation voltage is supplied to the excitation coil 100. Specifically, as shown in FIG. 7(b), in plan view of the board 91, a central part of the first reception coil 110 in the circumferential direction constitutes the first part 110A of one turn; and two end parts of the first reception coil 110 in the circumferential direction constitute the second part 110B having the same number of turns (i.e., one turn) as the first part 110A. Consequently, the pattern shapes of the first and second parts 110A and 110B on one side of a circumferential central axis Lt of the first reception coil 110 and the pattern shapes of the first and second parts 110A and 110B on the other side of the circumferential central axis Lt are symmetrical with respect to the circumferential central axis Lt.

Next, the second reception coil 120 will be described. The second reception coil 120 is formed on the first to fourth layers as shown in FIGS. 8 to 11. Specifically, as shown in FIG. 10, on the third layer, there is formed a third reception end portion 121 electrically connected with the reception circuit 95. To the third reception end portion 121, there is connected, through a first B via VB 1, a first end of a pattern 122 formed on the second layer. To a second end of the pattern 122, there is connected, through a second B via VB2, a first end of a pattern 123 formed on the first layer. To a second end of the pattern 123, there is connected, through a third B via VB3, a pattern 124 formed on the second layer and a fourth B via VB4, a first end of a pattern 125 formed on the first layer. To a second end of the pattern 125, there is connected, through a fifth B via VB5, a first end of a pattern 126 formed on the second layer. To a second end of the pattern 126, there is connected, through a sixth B via VB6, a pattern 127 formed on the first layer and a seventh B via VB7, a fourth reception end portion 128 formed on the fourth layer. The fourth reception end portion 128 is connected with the reception circuit 95. The reception circuit 95 detects the electrical potential difference between the third reception end portion 121 and the fourth reception end portion 128 as a second output voltage signal v2.

As shown in FIG. 7(a), the second reception coil 120 is also provided in the region surrounded by the excitation coil 100 in plan view of the board 91. The circumferential length of the second reception coil 120 is equal to the circumferential length of the first reception coil 110. On the other hand, the radial length of the second reception coil 120 is greater than the radial length of the first reception coil 110.

Similar to the first reception coil 110, the second reception coil 120 has a first part 120A and a second part 120B as shown in FIG. 7(c). Specifically, in plan view of the board 91, a first half of the second reception coil 120 on one side of a circumferential central axis Lt of the second reception coil 120 constitutes the first part 120A; and a second half of the second reception coil 120 on the other side of the circumferential central axis Lt constitutes the second part 120B.

In the first reception coil 110 and the second reception coil 120, the circumferential length from the central axis Lt to each of the circumferential ends is set to be equal to the circumferential length L1 of each of the shielding portions 81 and the notches 82. Moreover, as shown in FIG. 7(a), in plan view of the board 91, the circumferential ends of the second reception coil 120 are located at the same positions as the circumferential ends of the first reception coil 110.

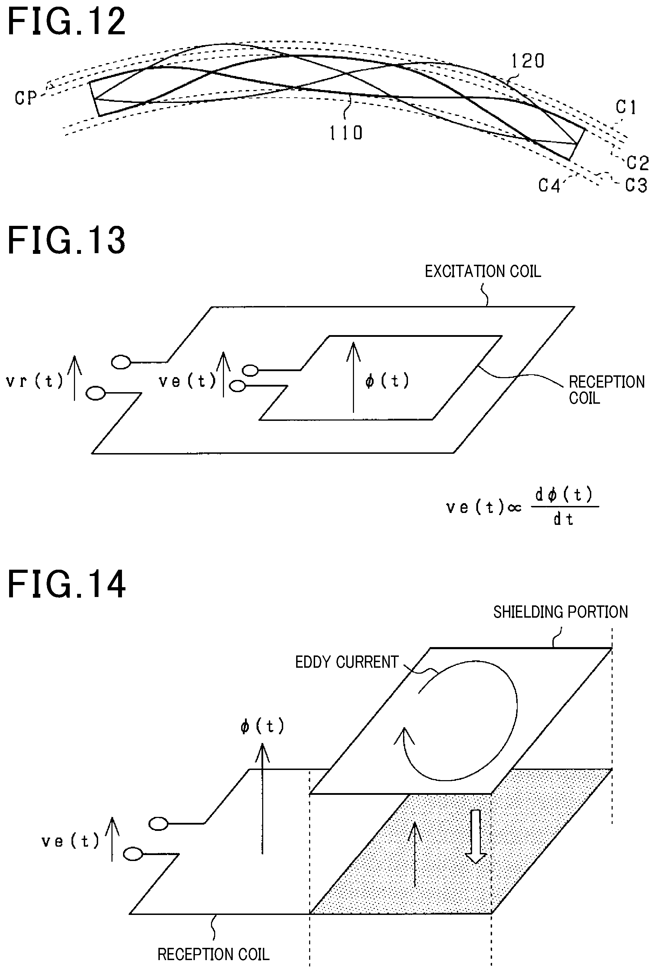

As shown in FIG. 12, in plan view of the board 91, the radially outer end of the second reception coil 120 is located on a first concentric circle C1 centering on the central axis LCo of the outer ring 51. The radially outer end of the first reception coil 110 is located on a second concentric circle C2 centering on the central axis LCo. The radius of the second concentric circle C2 is less than the radius of the first concentric circle C1. The radially inner end of the first reception coil 110 is located on a third concentric circle C3 centering on the central axis LCo. The radius of the third concentric circle C3 is less than the radius of the second concentric circle C2. The radially inner end of the second reception coil 120 is located on a fourth concentric circle C4 centering on the central axis LCo. The radius of the fourth concentric circle C4 is less than the radius of the third concentric circle C3.

The radially outer end of the second reception coil 120 protrudes from the radially outer ends 81a of the shielding portions 81 in a reference state. The reference state may be set arbitrarily. For example, the reference state may be set to a stopped state of the vehicle, more particularly to a state where the vehicle remains stopped on a horizontal road surface. It should be noted that in FIG. 12, CP designates a concentric circle centering on the central axis LCo of the outer ring 51 and passing through the radial outer ends 81a of the shielding portions 81 in the reference state.

Next, the principle by which the detection unit 90 can detect displacement and rotation angle will be described with reference to FIGS. 13 to 23.

First, the outline of the principle will be described with reference to FIGS. 13 and 14. As shown in FIG. 13, when a high-frequency excitation voltage vr(t) is supplied to an excitation coil, high-frequency current flows in the excitation coil. Consequently, magnetic flux φ(t) is generated by the high-frequency current, crossing a reception coil. As a result, a voltage ve(t), which is proportional to the time rate of change of the crossing magnetic flux, is induced between two ends of the reception coil.

FIG. 14 shows the reception coil in a state of being partially covered by a shielding portion that is a metal portion. In that part of the shielding portion which faces the reception coil, eddy current flows due to the crossing magnetic flux caused by the energization of the excitation coil. Consequently, by the eddy current, magnetic flux is generated in a direction of weakening the magnetic flux that generates the induced voltage in the reception coil; thus, the amplitude of the induced voltage in the reception coil is reduced. That is, the amplitude of the electric potential difference between the two ends of the reception coil is proportional to the area of that part of the reception coil which is not covered by the shielding portion.

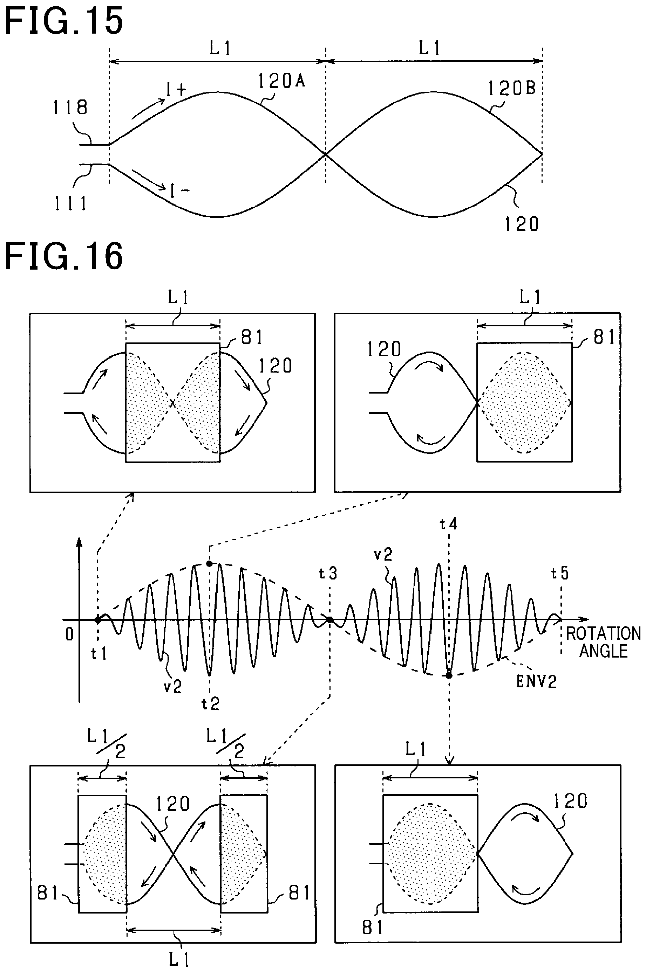

Based on the explanation with reference to FIGS. 13 and 14, the detection principle will be described with reference to FIGS. 15 and 16, taking the second reception coil 120 as an example. FIGS. 15 and 16 are diagrams showing the second reception coil 120 shown in FIGS. 7(a) to 7(c) and one of the shielding portions 81, with the circumferential direction developed to be straight. FIG. 16 is a diagram illustrating the relative positional relationship between the second reception coil 120 and the shielding portion 81 and the change in the second output voltage signal v2 of the second reception coil 120.

It should be noted that in FIGS. 15 and 16, the direction (I+) in which electric current flows from the second reception end portion 118 to the first reception end portion 111 is defined as the positive direction; and the direction (I-) in which electric current flows from the first reception end portion 111 to the second reception end portion 118 is defined as the negative direction. Moreover, it also should be noted that in FIGS. 15 and 16, magnetic flux from the excitation coil 100 flows from the front side to the back side of the paper.

In FIG. 16, at a time instant t1, both the center-side half of the first part 120A and the center-side half of the second part 120B are covered by the shielding portion 81. Consequently, a voltage causing electric current to flow in the positive direction is induced in the first part 120A, while a voltage causing electric current to flow in the negative direction is induced in the second part 120B. As a result, the induced voltage generated in the first part 120A and the induced voltage generated in the second part 120B cancel each other out, so that the amplitude of the second output voltage signal v2 becomes zero.

At a time instant t2, of the first part 120A and the second part 120B, only the second part 120B is covered by the shielding portion 81. Consequently, a voltage causing electric current to flow in the positive direction is induced in the first part 120A, while no voltage is induced in the second part 120B. As a result, the amplitude of the second output voltage signal v2 has a maximum value on the first polarity (i.e., the positive polarity) side. In addition, the closer the race part 80 is to the second reception coil 120, the greater the maximum value.

At a time instant t3, both the end-side half of the first part 120A and the end-side half of the second part 120B are covered by the shielding portion 81. Consequently, a voltage causing electric current to flow in the positive direction is induced in the first part 120A, while a voltage causing electric current to flow in the negative direction is induced in the second part 120B. As a result, the induced voltage generated in the first part 120A and the induced voltage generated in the second part 120B cancel each other out, so that the amplitude of the second output voltage signal v2 becomes zero.

At a time instant t4, of the first part 120A and the second part 120B, only the first part 120A is covered by the shielding portion 81. Consequently, a voltage causing electric current to flow in the negative direction is induced in the second part 120B, while no voltage is induced in the first part 120A. As a result, the amplitude of the second output voltage signal v2 has a maximum value on the second polarity (i.e., the negative polarity) side that is opposite to the first polarity side. In addition, the closer the race part 80 is to the second reception coil 120, the greater the maximum value.

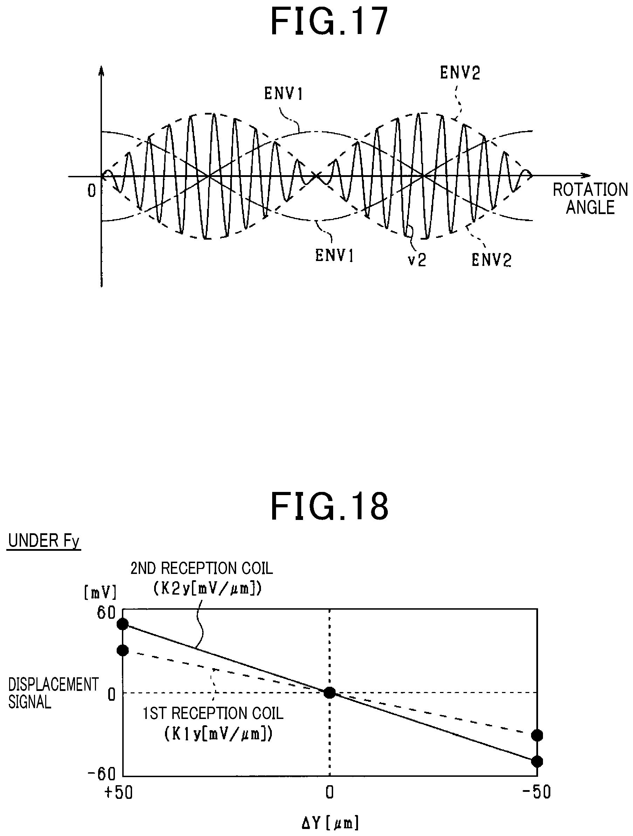

In the present embodiment, the shielding portions 81 and the notches 82 are formed alternatively in the radially outer end portion of the race part 80. Therefore, during rotation of the rotor 30, the amplitude of the second output voltage signal v2 of the second reception coil 120 changes periodically; and the envelope of the second output voltage signal v2 (hereinafter, to be referred to as the second envelope ENV2) has the shape of a sine wave as shown by the dashed lines in FIGS. 16 and 17. In addition, the amplitude or the envelope may be associated with the electrical angle θe by, for example, setting the circumferential lengths of the shielding portions 81 and the notches 82 in association with the circumferential intervals between the positions of the magnetic poles of the magnet unit 32.

In the present embodiment, when the excitation voltage is supplied to the excitation coil 100, the phase difference between the first output voltage signal v1 of the first reception coil 110 and the second output voltage signal v2 of the second reception coil 120 is 90 degrees. Therefore, as shown by the one-dot chain lines in FIG. 17, the phase difference between the envelope of the first output voltage signal v1 (hereinafter, to be referred to as the first envelope ENV1) and the second envelope ENV2 is also 90 degrees.

As shown in FIG. 17, the amplitude of the second envelope ENV2 is higher than the amplitude of the first envelope ENV1. This is because, as shown in FIG. 7(a), the area surrounded by the second reception coil 120 is greater than the area surrounded by the first reception coil 110 in plan view of the board 91.

The reception circuit 95 outputs, to the processing unit 70, the amount of deviation of the amplitude of the actual first envelope ENV1 from the amplitude of the first envelope ES1 in the reference state as a first displacement signal. Moreover, the reception circuit 95 also outputs, to the processing unit 70, the amount of deviation of the amplitude of the actual second envelope ENV2 from the amplitude of the second envelope ES2 in the reference state as a second displacement signal. In the present embodiment, the reception circuit 95 is configured so that the first and second displacement signals become zero in the reference state. Moreover, the displacement signals are updated every time that an amplitude maximum value on the positive polarity side and an amplitude maximum value on the negative polarity side appear in the output voltage signals v1 and v2.

Next, explanation will be given of a case where the lateral force acting on the vehicle wheel changes.

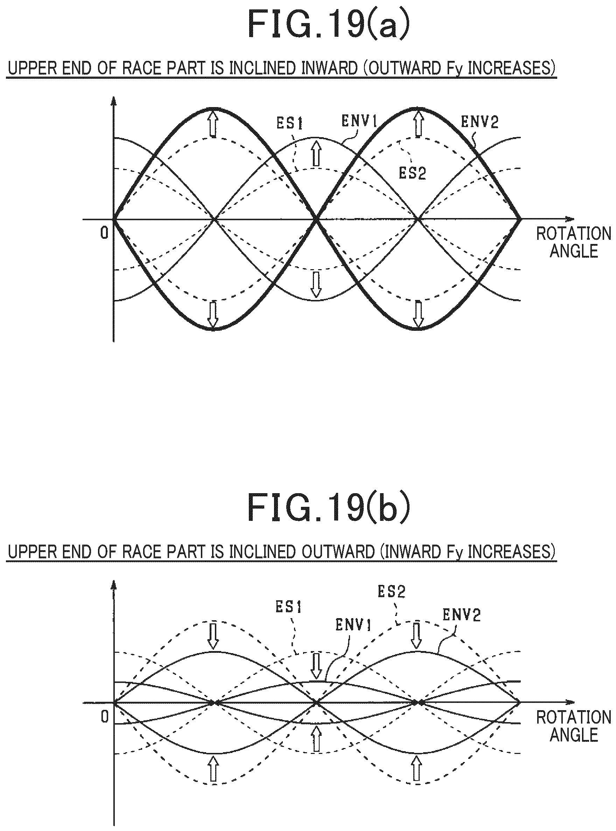

When the direction of the lateral force is outward in the vehicle width direction, the inner ring 52 is inclined with respect to the outer ring 51 so that the upper end of the race part 80 becomes closer to the stator base part 42 whereas the lower end of the same becomes closer to the wheel 10. In this case, the axial displacement ΔY and the polarities of the displacement signals are defined to be positive as shown in FIG. 18. Moreover, with increase in the axial displacement ΔY in the positive direction, the displacement signals also increase in the positive direction. This is because, as shown in FIG. 19(a), the closer the race part 80 is to the first and second reception coils 110 and 120, the larger the actual first and second envelopes ENV1 and ENV2 become with respect to the first and second envelopes ES1 and ES2 in the reference state.

In contrast, when the direction of the lateral force is inward in the vehicle width direction, the inner ring 52 is inclined with respect to the outer ring 51 so that the lower end of the race part 80 becomes closer to the stator base part 42 whereas the upper end of the same becomes closer to the wheel 10. In this case, the axial displacement ΔY and the polarities of the displacement signals are defined to be negative as shown in FIG. 18. Moreover, with increase in the axial displacement ΔY in the negative direction, the displacement signals also increase in the negative direction. This is because, as shown in FIG. 19(b), the farther the race part 80 is from the first and second reception coils 110 and 120, the smaller the actual first and second envelopes ENV1 and ENV2 become with respect to the first and second envelopes ES1 and ES2 in the reference state. In addition, the first and second displacement signals in the reference state are zero.

Next, explanation will be given of a case where the vertical load acting on the vehicle wheel changes.

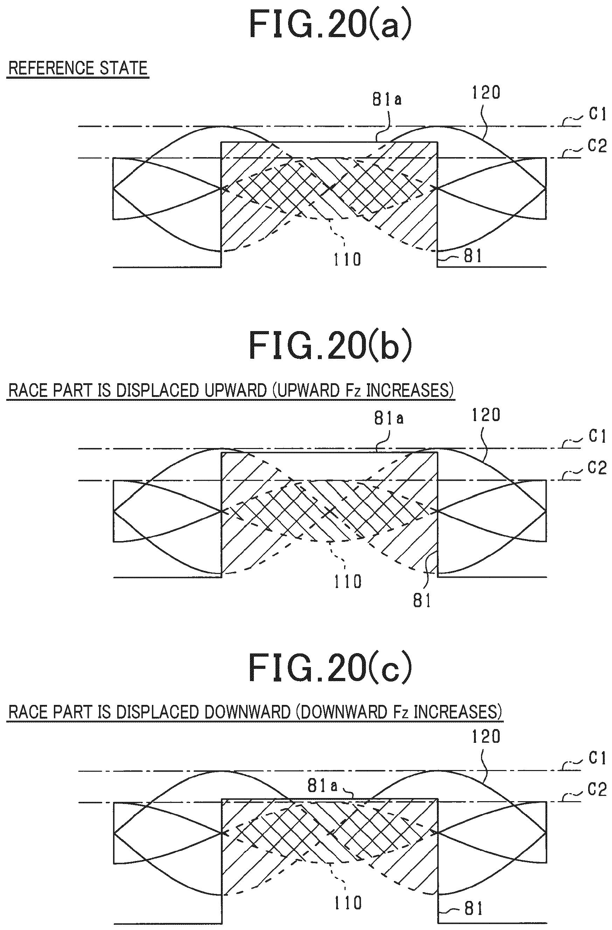

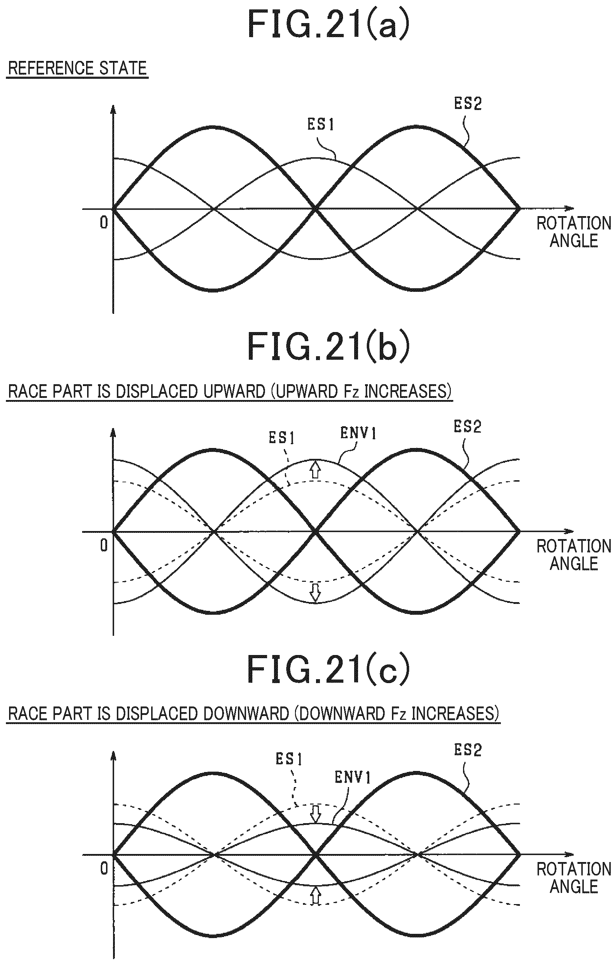

FIG. 20(a) illustrates the relative positional relationship between the reception coils 110 and 120 and the shielding portions 81 in the reference state. It should be noted that FIGS. 20(a) to 20(b) are diagrams showing the first and second reception coils 110 and 120 shown in FIGS. 7(a) to 7(c) and one of the shielding portions 81, with the circumferential direction developed to be straight. Moreover, it also should be noted that in the figures, the hatched portions are those portions of the reception coils 110 and 120 which are covered by the shielding portion 81. FIG. 21(a) illustrates the changes in the envelopes in the reference state.

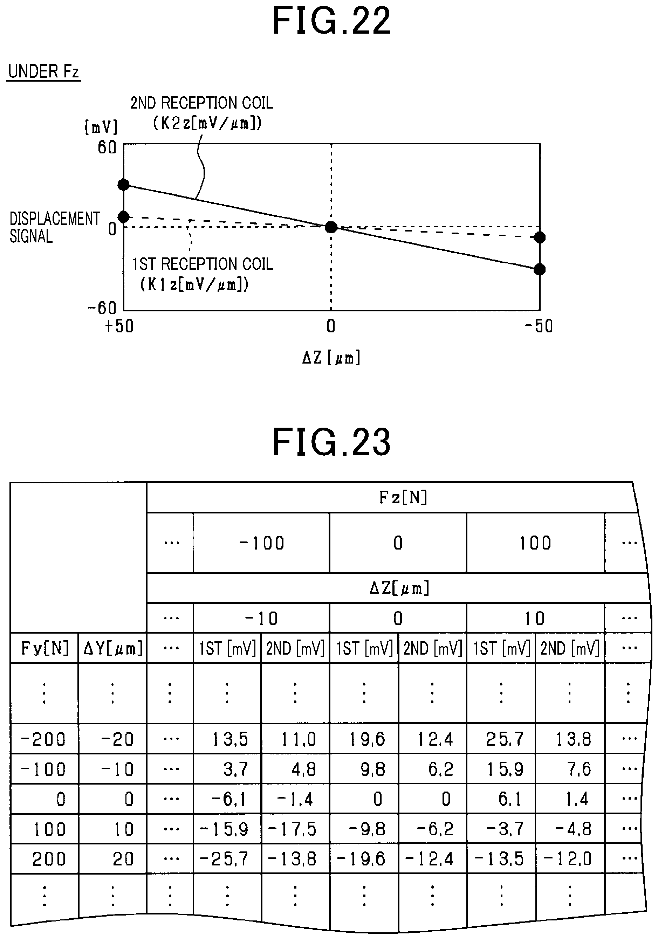

When the upward vertical load increases, the upper end of the race part 80 is displaced upward. In this case, the vertical displacement ΔZ and the polarities of the displacement signals are defined to be positive as shown in FIG. 22. Moreover, with increase in the vertical displacement ΔZ in the positive direction, the displacement signals also increase in the positive direction. This is because the more the race part 80 is displaced upward as shown in FIG. 20(b), the larger the area of the second reception coil 120 covered by the shielding portion 81 becomes and thus, as shown in FIG. 21(b), the larger the actual first and second envelopes ENV1 and ENV2 become with respect to the first and second envelopes ES1 and ES2 in the reference state.

In contrast, when the downward vertical load increases, the upper end of the race part 80 is displaced downward. In this case, the vertical displacement ΔZ and the polarities of the displacement signals are defined to be negative as shown in FIG. 22. Moreover, with increase in the vertical displacement ΔZ in the negative direction, the displacement signals also increase in the negative direction. This is because the more the race part 80 is displaced downward as shown in FIG. 20(c), the smaller the area of the second reception coil 120 covered by the shielding portion 81 becomes and thus, as shown in FIG. 21(c), the smaller the actual first and second envelopes ENV1 and ENV2 become with respect to the first and second envelopes ES1 and ES2 in the reference state.

As shown in FIG. 18, a second lateral force coefficient K2y, which represents the amount of change in the second displacement signal per unit amount of change in the axial displacement ΔY, is greater than a first lateral force coefficient K1y that represents the amount of change in the first displacement signal per unit amount of change in the axial displacement ΔY. This is because the area surrounded by the second reception coil 120 is larger than the area surrounded by the first reception coil 110 in plan view of the board 91.

As shown in FIG. 22, a second vertical load coefficient K2z, which represents the amount of change in the second displacement signal per unit amount of change in the vertical displacement ΔZ, is greater than a first vertical load coefficient K1z that represents the amount of change in the first displacement signal per unit amount of change in the vertical displacement ΔZ. This is also because the area surrounded by the second reception coil 120 is larger than the area surrounded by the first reception coil 110 in plan view of the board 91.

Moreover, the second vertical load coefficient K2z is less than the second lateral force coefficient K2y; and the first vertical load coefficient K1z is less than the first lateral force coefficient K1y. This is due to, for example, the fact that the rigidity of the vehicle wheel in the vertical direction is greater than the rigidity of the same in the vehicle width direction. In the present embodiment, the following relationship is satisfied: K2y > K1y > K2z > K1z.

From the above, it is clear that the combination of the axial displacement ΔY and the vertical displacement ΔZ and the combination of the first displacement signal and the second displacement signal can be uniquely associated with each other. Therefore, a displacement calculation unit 71 of the processing unit 70 calculates the axial displacement ΔY and the vertical displacement ΔZ on the basis of the first and second displacement signals and map information or formula information; the map information or formula information associates the first and second displacement signals with the axial displacement ΔY and the vertical displacement ΔZ.

A force calculation unit 72 of the processing unit 70 calculates the lateral force Fy on the basis of the calculated axial displacement ΔY and map information or formula information; the map information or formula information associates the axial displacement ΔY with the lateral force Fy. Moreover, the force calculation unit 72 also calculates the vertical load Fz on the basis of the calculated vertical displacement ΔZ and map information or formula information; the map information or formula information associates the vertical displacement ΔZ with the vertical load Fz.

The above-described map information or formula information may be stored in a storage unit (e.g., a nonvolatile memory) included in the processing unit 70. Moreover, the force calculation unit 72 may calculate the lateral force Fy and the vertical load Fz on the basis of the first and second displacement signals and map information or formula information; the map information or formula information associates the first and second displacement signals with the lateral force Fy and the vertical load Fz. In addition, the calculation of the loads based on the first and second displacement signals and the map information or formula information can be similarly applied to embodiments which will be described later and in which the first and second displacement signals are used.

An angle calculation unit 73 of the processing unit 70 calculates the rotation angle (e.g., the electrical angle θe) of the rotor 30 on the basis of at least one of the first output voltage signal v1 and the second output voltage signal v2.

Specifically, the angle calculation unit 73 may calculate the electrical angle θe on the basis of, for example, the first envelope ENV1 or the second envelope ENV2. This calculation method is based on the fact that: the envelopes are information indicating the changes in the amplitudes of the output voltage signals; and the amplitudes of the output voltage signals depend on the rotation angle.

Alternatively, the angle calculation unit 73 may calculate the electrical angle θe, with the first output voltage signal v1, the second output voltage signal v2 and the excitation voltage vr as the inputs, by synchronous detection using a low-pass filter. This calculation method is a digital tracking method and described in, for example, paragraphs [0028] to [0030] of the description of Japanese Patent Application Publication No. JP 2015-073407 A.

According to the present embodiment described above in detail, it becomes possible to properly calculate the axial displacement ΔY and the vertical displacement ΔZ, thereby improving the accuracy of calculating the lateral force Fy and the vertical load Fz. Moreover, according to the present embodiment, it also becomes possible to achieve the following advantageous effects.

In the present embodiment, the detection unit 90 is provided at a position in the stator base part 42 which is radially away from the bearing 50 and axially faces the radial end portion of the race part 80. That is, that portion of the race part 80 which axially faces the detection unit 90 is a portion away from the bearing 50 radially outward. Consequently, when a lateral force acts on the vehicle wheel, the axial displacement of that portion of the race part 80 which axially faces the detection unit 90 will become large. As a result, it becomes possible to improve the accuracy of detecting the axial displacement ΔY; thus, it also becomes possible to improve the accuracy of calculating the lateral force Fy acting on the vehicle wheel that constitutes the unsprung mass of the vehicle.

In the present embodiment, the in-wheel motor 20 is configured as an outer rotor type motor. Consequently, it becomes possible to arrange the radial end portion of the race part 80 at a position sufficiently away from the bearing 50 radially outward. As a result, it becomes possible to further improve the accuracy of detecting the axial displacement ΔY.

In the present embodiment, the first reception coil 110 and the second reception coil 120 are provided axially closer to the wheel 10 than any of the coil end parts of the stator coil 41 is. Consequently, it becomes possible to suppress the influence of noise and the like, which are caused by energization of the stator coil 41, on the induced voltages in the first reception coil 110 and the second reception coil 120. As a result, it becomes possible to improve all of the accuracy of detecting the axial displacement ΔY, the accuracy of detecting the vertical displacement ΔZ and the accuracy of detecting the rotation angle.

### [First Modification of First Embodiment]

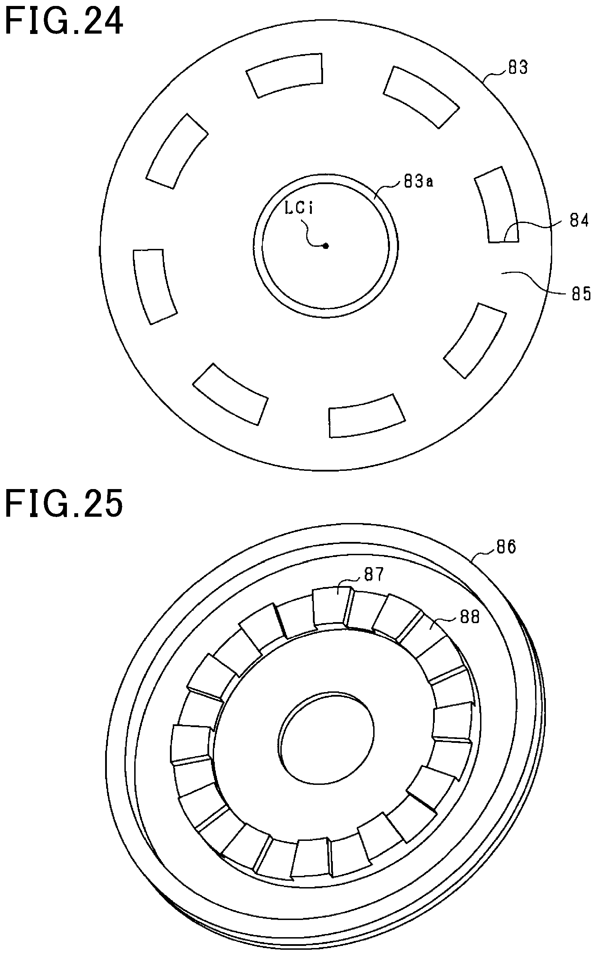

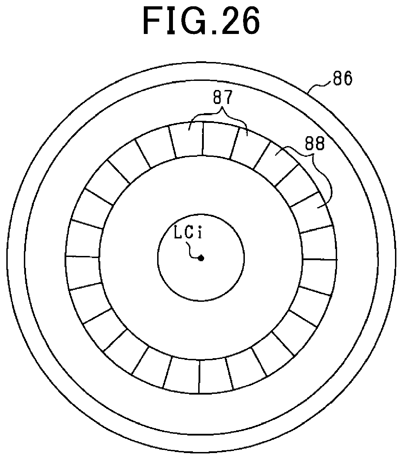

The configuration of a race part is not limited to that shown in FIG. 1 and the like, but may alternatively be, for example, either of the following configurations (A) and (B).
(A) As shown in FIG. 24, a race part 83 has shielding portions 85 and openings 84 formed alternately in the circumferential direction; the openings 84 each axially penetrate the race part 83. It should be noted that a portion 83a shown in FIG. 24 corresponds to the bent portion 80a shown in FIGS. 1 and 2. It also should be noted that the circumferential length of each of the openings 84 shown in FIG. 24 corresponds to the circumferential length of each of the notches 82 shown in FIG. 2.
(B) As shown in FIGS. 25 and 26, a race part 86 has protruding portions 87 and recessed portions 88 formed alternately in the circumferential direction. The protruding portions 87 protrude from a flat surface of the race part 86 in the axial direction of the inner ring 52. The recessed portions 88 also protrude from the flat surface of the race part 86 in the axial direction of the inner ring 52, but are recessed from the protruding portions 87 in the axial direction of the inner ring 52. It should be noted that: the circumferential length of each of the protruding portions 87 corresponds to the circumferential length of each of the shielding portions 81 shown in FIG. 2; and the circumferential length of each of the recessed portions 88 corresponds to the circumferential length of each of the notches 82 shown in FIG. 2. With the protruding portions 87 and the recessed portions 88 formed in the race part 86, the axial distances from the reception coils 110 and 120 to the race part 86 change during rotation of the rotor 30. Consequently, by utilizing the changes in the axial distances, the axial displacement ΔY can be detected in the same manner as in the first embodiment.

### [Second Modification of First Embodiment]

The two reception coils formed to the board 91 may be coils having the same shape (e.g., the shape of the second reception coil 120). In this case, the phases of the induced voltages in the two reception coils are the same.

### [Third Modification of First Embodiment]

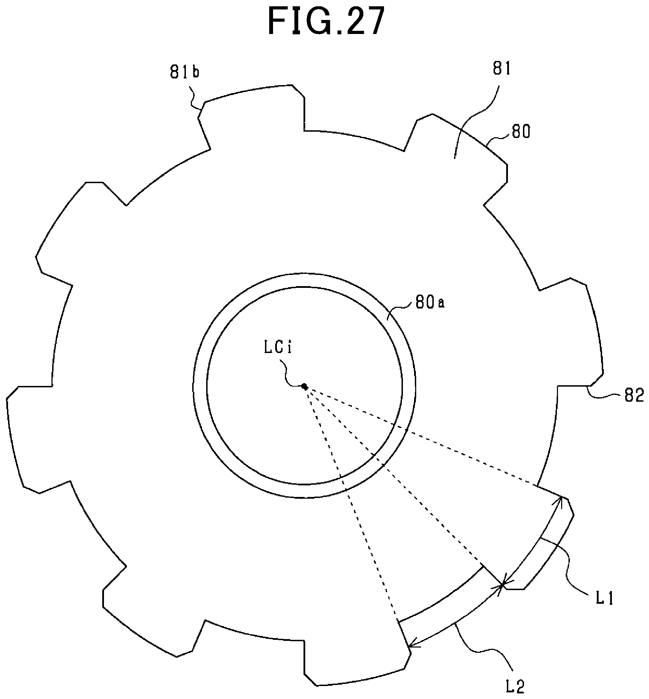

As shown in FIG. 27, chamfers 81b may be formed, for each of the shielding portions 81, at both circumferential ends of a radially outer end part of the shielding portion 81. In this case, the radially outer end parts of the shielding portions 81 have a trapezoidal shape; and the circumferential length of each of the radially outer end parts of the shielding portions 81 decreases radially outward. Consequently, it will become possible to increase the amount of change in the amplitude of the second envelope ENV2 when the race part 80 is displaced in the vertical direction; and it will also become possible to make the lateral force coefficients further greater than the vertical load coefficients. As a result, it will become possible to improve the accuracy of detecting the vertical displacement ΔZ.

### [Fourth Modification of First Embodiment]

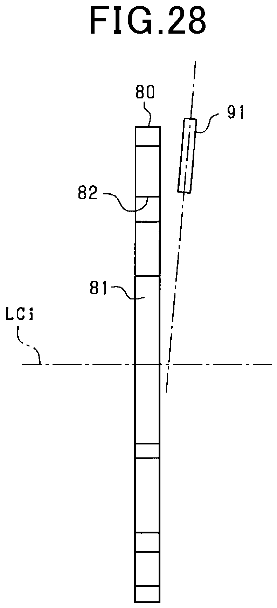

As shown in FIG. 28, the board 91 may be inclined with respect to the vertical direction. More particularly, in the example illustrated in FIG. 28, the board 91 is inclined with respect to the vertical direction so that the axial distance between the board 91 and the shielding portions 81 of the race part 80 increases in the upward direction. Consequently, it will become possible to change the lateral force coefficients and the vertical load coefficients from the values thereof shown in FIGS. 18 and 22.

### [Second Embodiment]

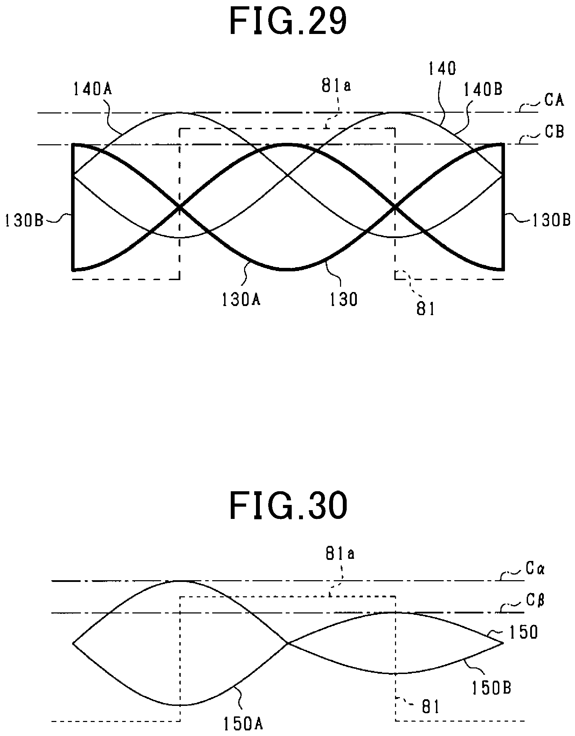

In the present embodiment, as shown in FIG. 29, the shapes of a first reception coil 130 and a second reception coil 140 are changed compared to those in the first embodiment. FIG. 29 is a diagram showing the first and second reception coils 130 and 140 and one of the shielding portions 81, with the circumferential direction developed to be straight. The first reception coil 130 corresponds to the first reception coil 110 in the first embodiment; and the second reception coil 140 corresponds to the second reception coil 120 in the first embodiment. Hereinafter, the differences of the present embodiment from the first embodiment will be mainly described.

In the present embodiment, the radial dimension of the first reception coil 130 and the radial dimension of the second reception coil 140 are equal to each other. In plan view of the board 91, the radially outer end of the second reception coil 140 is located on a first concentric circle CA centering on the central axis LCo of the outer ring 51. The radially outer end of the first reception coil 130 is located on a second concentric circle CB centering on the central axis LCo. The radius of the second concentric circle CB is less than the radius of the first concentric circle CA. The radially outer end of the second reception coil 140 protrudes from the radially outer ends 81a of the shielding portions 81 in the reference state.

In the present embodiment, there also exist characteristics as shown in FIGS. 18 and 22. Therefore, the displacement calculation unit 71 and the force calculation unit 72 can perform calculation processes in the same manner as in the first embodiment.

### [Third Embodiment]

In the present embodiment, the axial displacement ΔY and the vertical displacement ΔZ are calculated based on the output voltage signal of a single reception coil, not on the output voltage signals of two reception coils as in the first embodiment. Hereinafter, the differences of the present embodiment from the first embodiment will be mainly described.

FIG. 30 is a diagram showing a reception coil 150, with the circumferential direction developed to be straight. The reception coil 150, which corresponds to the second reception coil 120 in the first embodiment, has a first part 150A and a second part 150B. The reception coil 150 is formed to the board 91. The circumferential dimension of the first part 150A, the circumferential dimension of the second part 150B and the circumferential dimensions of each of the shielding portions 81 are equal to each other.

In plan view of the board 91, the radially outer end of the first part 150A is located on a first concentric circle Cα centering on the central axis LCo of the outer ring 51. The radially outer end of the second part 150B is located on a second concentric circle Cβ centering on the central axis LCo. The radius of the second concentric circle Cβ is less than the radius of the first concentric circle Cα. The area enclosed by the first part 150A is greater than the area enclosed by the second part 150B. The radially outer end of the first part 150A protrudes from the radially outer ends 81a of the shielding portions 81 in the reference state.

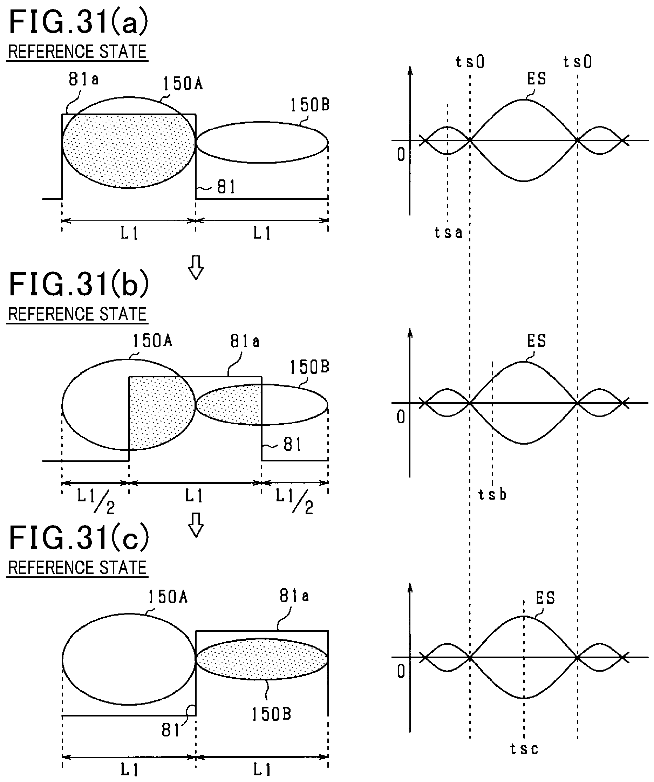

Next, the reason why the axial displacement ΔY and the vertical displacement ΔZ can be calculated based on the output voltage signal of the single reception coil 150 will be explained with reference to FIGS. 31 to 33.

FIGS. 31(a), 31(b) and 31(c) illustrate the relative positional relationship between the reception coil 150 and one of the shielding portions 81 in the reference state and the change in the envelope of the output voltage signal in the reference state (hereinafter, to be referred to as the reference envelope ES). Specifically, FIG. 31(a) shows a state in which the first part 150A is partially covered by the shielding portion 81 in plan view of the reception coil 150. FIG. 31(b) shows a state in which the race part 80 has rotated so that both the first part 150A and the second part 150B are partially covered by the shielding portion 81. FIG. 31(c) shows a state in which the race part 80 has further rotated so that the second part 150B is completely covered by the shielding portion 81.

In the reference envelope ES, a low amplitude that is relatively low and a high amplitude that is relatively high appear alternately. In FIGS. 31(a), 31(b) and 31(c), the zero-crossing timings of the reference envelope ES are designated by ts0. When the relative positional relationship between the reception coil 150 and the shielding portion 81 is as shown in FIG. 31(a), the reference envelope ES has the value taken at a time instant tsa (i.e., the low amplitude). When the relative positional relationship between the reception coil 150 and the shielding portion 81 is as shown in FIG. 31(b), the reference envelope ES has the value taken at a time instant tsb. When the relative positional relationship between the reception coil 150 and the shielding portion 81 is as shown in FIG. 31(c), the reference envelope ES has the value taken at a time instant tsc (i.e., the high amplitude).

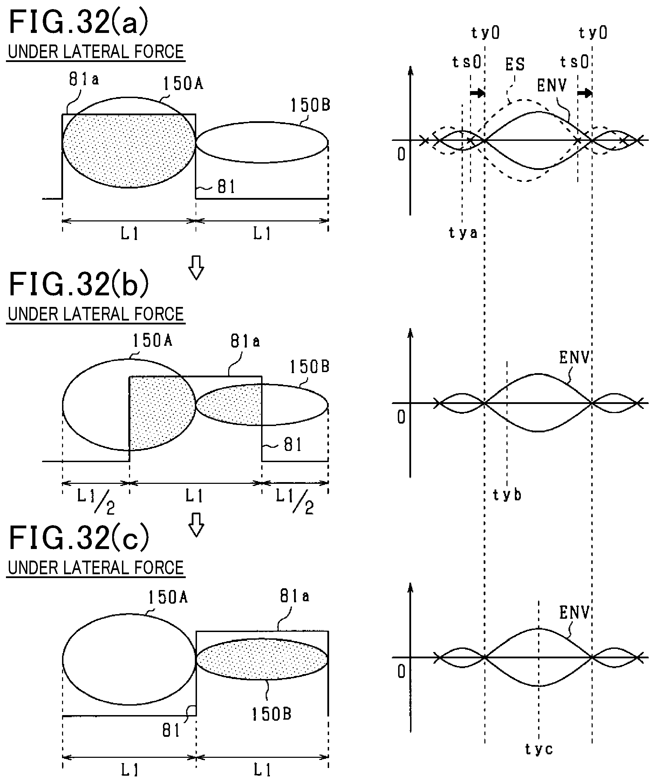

FIGS. 32(a), 32(b) and 32(c) illustrate the relative positional relationship between the reception coil 150 and one of the shielding portions 81 and the change in the envelope ENV of the output voltage signal when a lateral force acts inward in the vehicle width direction on the vehicle wheel. When the relative positional relationship between the reception coil 150 and the shielding portion 81 is as shown in FIG. 32(a), the envelope ENV has the value taken at a time instant tya (i.e., a low amplitude). When the relative positional relationship between the reception coil 150 and the shielding portion 81 is as shown in FIG. 32(b), the envelope ENV has the value taken at a time instant tyb. When the relative positional relationship between the reception coil 150 and the shielding portion 81 is as shown in FIG. 32(c), the envelope ENV has the value taken at a time instant tyc (i.e., a high amplitude).

Under the action of the lateral force inward in the vehicle width direction on the vehicle wheel, the shielding portion 81 is displaced to become farther from the reception coil 150. Consequently, the low amplitude of the envelope ENV becomes lower than the low amplitude of the reference envelope ES; and the high amplitude of the envelope ENV becomes lower than the high amplitude of the reference envelope ES. Moreover, the zero-crossing timings ty0 of the envelope ENV lag behind the zero-crossing timings ts0 of the reference envelope ES.

In contrast, when a lateral force acts outward in the vehicle width direction on the vehicle wheel, the shielding portion 81 is displaced to become closer to the reception coil 150. Consequently, the low amplitude of the envelope ENV becomes higher than the low amplitude of the reference envelope ES; and the high amplitude of the envelope ENV becomes higher than the high amplitude of the reference envelope ES. Moreover, the zero-crossing timings ty0 of the envelope ENV become earlier than the zero-crossing timings ts0 of the reference envelope ES.

Therefore, the axial displacement ΔY can be determined based on the high and low amplitudes of the envelope ENV and the amount of deviation of the zero-crossing timings ty0 of the envelope ENV from the zero-crossing timings ts0 of the reference envelope ES.

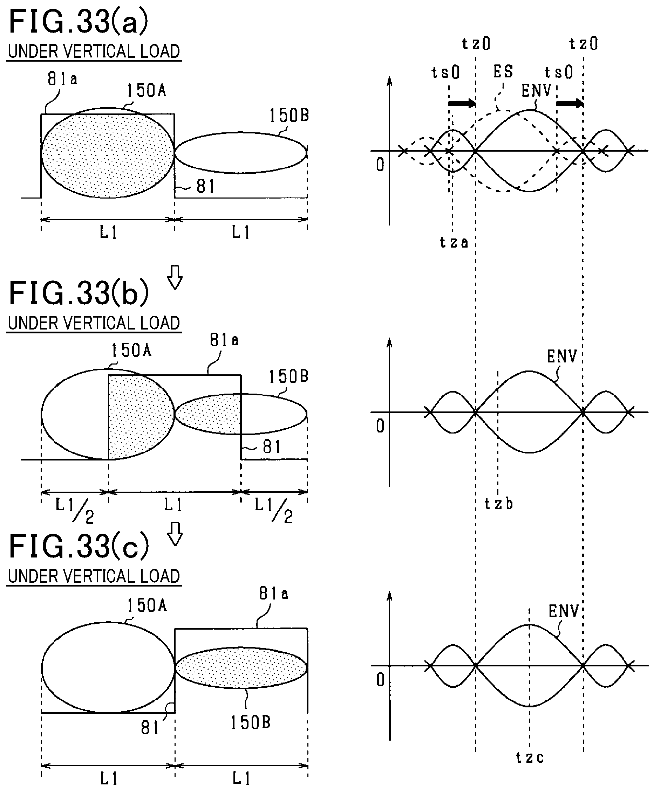

FIGS. 33(a), 33(b) and 33(c) illustrate the relative positional relationship between the reception coil 150 and one of the shielding portions 81 and the change in the envelope ENV of the output voltage signal when an upward vertical load acting on the vehicle wheel increases. When the relative positional relationship between the reception coil 150 and the shielding portion 81 is as shown in FIG. 33(a), the envelope ENV has the value taken at a time instant tza (i.e., a low amplitude). When the relative positional relationship between the reception coil 150 and the shielding portion 81 is as shown in FIG. 33(b), the envelope ENV has the value taken at a time instant tzb. When the relative positional relationship between the reception coil 150 and the shielding portion 81 is as shown in FIG. 33(c), the envelope ENV has the value taken at a time instant tzc (i.e., a high amplitude).

With increase in the upward vertical load with respect to the reference state, the shielding portion 81 is displaced upward. Consequently, the low amplitude of the envelope ENV becomes higher than the low amplitude of the reference envelope ES. This is because in this case, the area of the first part 150A covered by the shielding portion 81 increases and thus the induced voltage in the first part 150A which may cancel out the electrical potential difference generated on the second part 150B side decreases. On the other hand, the high amplitude of the envelope ENV remains unchanged from the high amplitude of the reference envelope ES. This is because when the shielding portion 81 is displaced upward, the radially outer end of the second part 150B is kept from protruding from the shielding portion 81.

Moreover, with increase in the upward vertical load with respect to the reference state, the zero-crossing timings tz0 of the envelope ENV lag behind the zero-crossing timings ts0 of the reference envelope ES.

In contrast, when a downward vertical load acting on the vehicle wheel increases with respect to the reference state, the shielding portion 81 is displaced downward. Consequently, the low amplitude of the envelope ENV becomes lower than the low amplitude of the reference envelope ES, while the high amplitude of the envelope ENV remains unchanged from the high amplitude of the reference envelope ES. Moreover, the zero-crossing timings tz0 of the envelope ENV become earlier than the zero-crossing timings ts0 of the reference envelope ES.

Therefore, the vertical displacement ΔZ can be determined based on the high and low amplitudes of the envelope ENV and the amount of deviation of the zero-crossing timings tz0 of the envelope ENV from the zero-crossing timings ts0 of the reference envelope ES.

From the above, map information or formula information can be created which associates the combination of the low and high amplitudes of the envelope ENV and the amount of deviation of the zero-crossing timings of the envelope ENV from the zero-crossing timings of the reference envelope ES with the combination of the axial displacement ΔY and the vertical displacement ΔZ. In the present embodiment, the displacement calculation unit 71 calculates, based on the output voltage signal of the reception coil 150, the low and high amplitudes of the envelope ENV and the amount of deviation of the zero-crossing timings of the envelope ENV from the zero-crossing timings of the reference envelope ES. Further, the displacement calculation unit 71 calculates the axial displacement ΔY and the vertical displacement ΔZ on the basis of the calculated low and high amplitudes, the calculated amount of deviation and the map information or formula information. The force calculation unit 72 calculates the lateral force Fy on the basis of the calculated axial displacement ΔY and map information or formula information; the map information or formula information associates the axial displacement ΔY with the lateral force Fy. Moreover, the force calculation unit 72 also calculates the vertical load Fz on the basis of the calculated vertical displacement ΔZ and map information or formula information; the map information or formula information associates the vertical displacement ΔZ with the vertical load Fz. In addition, the displacement calculation unit 71 may determine, for example, reference timings set in association with the electrical angle of the rotor 30 as the zero-crossing timings of the reference envelope ES. Moreover, instead of the aforementioned map information or formula information, map information or formula information, which associates the combination of the low and high amplitudes of the envelope ENV and the amount of deviation of the zero-crossing timings of the envelope ENV from the zero-crossing timings of the reference envelope ES with the combination of the lateral force Fy and the vertical load Fz, may be stored in a storage unit. In this case, the force calculation unit 72 may calculate the lateral force Fy and the vertical load Fz on the basis of the calculated low and high amplitudes, the calculated amount of deviation and the stored map information or formula information.

### [Modification of Third Embodiment]

A reception coil having the shape shown in FIG. 7(b) may alternatively be employed as the reception coil in the third embodiment. In this case, it is necessary that the radial dimension of one of the first and second parts of the reception coil is greater than the radial dimension of the other of the first and second parts.

### [Fourth Embodiment]

Hereinafter, a fourth embodiment will be described with reference to the drawings, focusing on the differences thereof from the first embodiment. In the present embodiment, the detection unit 90 calculates a force acting between the ground surface GL and the vehicle wheel in the vehicle longitudinal direction (hereinafter, to be referred to as the forward/backward load Fx) instead of the vertical load Fz. The direction in which the forward/backward load Fx acts is perpendicular to the direction in which the lateral force Fy acts. The forward/backward load Fx is used in the control device for driving control of the vehicle.

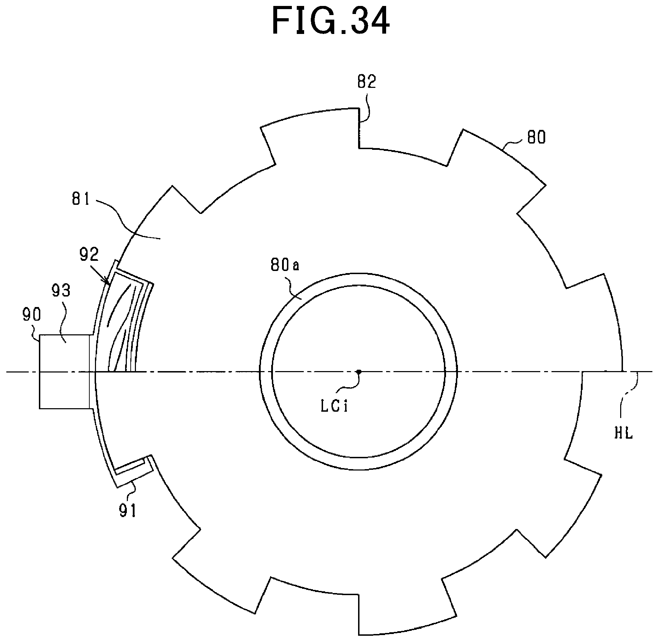

FIG. 34 shows the race part 80 and the detection unit 90 according to the present embodiment.

In the present embodiment, the first and second reception coils 110 and 120 formed to the board 91 are provided astride a horizontal axis HL that passes through the central axis LCi of the inner ring 52 (or the center of rotation of the race part 80). For example, in plan view of the flat surface of the race part 80, the board 91 may be arranged so that the circumferential central axis Lt of each of the first and second reception coils 110 and 120 coincides with the horizontal axis HL.

Moreover, the first and second reception coils 110 and 120 are provided near, of two ends of the race part 80 in the vehicle longitudinal direction, the end of the race part 80 on the vehicle front side or the end of the race part 80 on the vehicle rear side. Hereinafter, explanation will be given taking the case of the first and second reception coils 110 and 120 being provided near the end of the race part 80 on the vehicle front side as an example.

The forward/backward load Fx is defined to be positive when the vehicle accelerates, and to be negative when the vehicle decelerates. When the forward/backward load Fx is positive, the shielding portions 81 are displaced in the vehicle traveling direction. This state corresponds to the state in the first embodiment where the upward vertical load acting on the vehicle wheel increases. In contrast, when the forward/backward load Fx is negative, the shielding portions 81 are displaced in a direction opposite to the vehicle traveling direction. This state corresponds to the state in the first embodiment where the downward vertical load acting on the vehicle wheel increases.

As described in the first embodiment, the reception circuit 95 outputs, to the processing unit 70, the amount of deviation of the amplitude of the actual first envelope ENV1 from the amplitude of the first envelope ES1 in the reference state as the first displacement signal. Moreover, the reception circuit 95 also outputs, to the processing unit 70, the amount of deviation of the amplitude of the actual second envelope ENV2 from the amplitude of the second envelope ES2 in the reference state as the second displacement signal.

The displacement calculation unit 71 calculates the axial displacement ΔY and the displacement ΔX in the vehicle longitudinal direction on the basis of the first and second displacement signals and map information or formula information; the map information or formula information associates the first and second displacement signals with the axial displacement ΔY and the displacement ΔX in the vehicle longitudinal direction.

The force calculation unit 72 calculates the lateral force Fy on the basis of the calculated axial displacement ΔY and map information or formula information; the map information or formula information associates the axial displacement ΔY with the lateral force Fy. Moreover, the force calculation unit 72 also calculates the forward/backward load Fx on the basis of the calculated displacement ΔX in the vehicle longitudinal direction and map information or formula information; the map information or formula information associates the displacement ΔX in the vehicle longitudinal direction with the forward/backward load Fx.

According to the present embodiment described above, both the axial displacement ΔY and the displacement ΔX in the vehicle longitudinal direction can be detected by the single detection unit 90.

### [Modification of Fourth Embodiment]

The first and second reception coils 130 and 140 shown in FIG. 29 may alternatively be employed as the first and second reception coils in the fourth embodiment. Moreover, the number of reception coils in the fourth embodiment is not limited to two. For example, a single reception coil as shown in FIG. 30 may alternatively be employed in the fourth embodiment.

### [Fifth Embodiment]

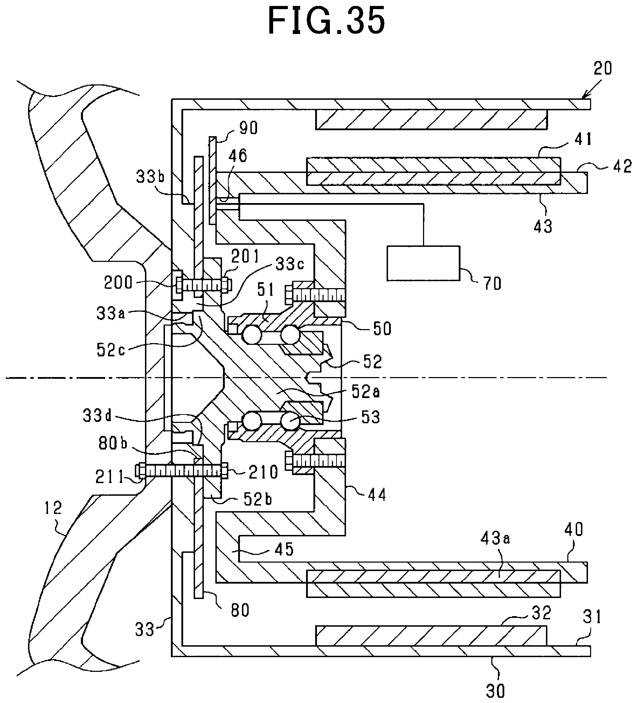

Hereinafter, a fifth embodiment will be described with reference to the drawings, focusing on the differences thereof from the first embodiment. In the present embodiment, as shown in FIG. 35, a configuration is employed which can minimize the coaxiality between the rotor 30, the race part 80 and the bearing 50. It should be noted that for the sake of convenience, in FIG. 35, components identical or corresponding to those shown in FIG. 1 and the like are designated by the same reference signs as those shown in FIG. 1 and the like. It also should be noted that in the present embodiment, no bent portion 80a is formed in the race part 80.

In the present embodiment, a through-hole 33a is formed in a radially central portion of the flat plate part 33 of the rotor 30. Moreover, on a surface of the flat plate part 33 on the inner side in the vehicle width direction, there is formed an annular step portion 33b that extends radially outward from a radially inner end of the flat plate part 33. The step portion 33b has a flat surface on the inner side in the vehicle width direction. Furthermore, on a radially inner end portion of the step portion 33b, there is formed an annular positioning portion 33c that protrudes inward in the vehicle width direction.

A through-hole 80b is formed in a radially central portion of the race part 80. The positioning portion 33c is fitted in the through-hole 80b of the race part 80, with a flat surface of the race part 80 abutting against the flat surface of the step portion 33b. Consequently, the central axis of rotation of the rotor 30 and the central axis of rotation of the race part 80 are coaxial with each other.

On a radially inner end portion of the flange portion 52b of the inner ring 52, there is formed an annular bearing-side step portion 52c that protrudes outward in the vehicle width direction. In the flat plate part 33, there is formed, on the radially inner side of the positioning portion 33c, a circular recess 33d that is recessed outward in the vehicle width direction. The bearing-side step portion 52c is fitted in the recess 33d, thereby making the central axis of the inner ring 52, the central axis of rotation of the rotor 30 and the central axis of rotation of the race part 80 coaxial with each other. In particular, in the present embodiment, a flat surface of the flange portion 52b on the outer side in the vehicle width direction abuts flat surfaces of the race part 80 and the positioning portion 33c. Consequently, it becomes possible to suitably minimize the coaxiality between the central axis of rotation of the rotor 30, the central axis of rotation of the race part 80 and the central axis of the inner ring 52.

First through-holes are formed in the flat plate part 33, the race part 80 and the flange portion 52b so as to penetrate them in the axial direction. Specifically, in each of the flat plate part 33, the race part 80 and the flange portion 52b, there are formed a plurality of first through-holes in alignment with each other in the circumferential direction (e.g., arranged at equal intervals in the circumferential direction). In each of the first through-holes, there is inserted a bolt 200. Specifically, the bolt 200 is inserted in the corresponding first through-holes of the flat plate part 33, the race part 80 and the flange portion 52b, with a head portion of the bolt 200 oriented outward in the vehicle width direction and a shaft portion of the bolt 200 oriented inward in the vehicle width direction. Further, a female thread of a nut 201 is fastened onto a male thread of a distal end portion of the shaft portion. Consequently, the flat plate part 33, the race part 80 and the flange portion 52b, which are in a state of overlapping each other, are together sandwiched between the head portion of the bolt 200 and the nut 201. As a result, the rotor 30, the race part 80 and the bearing 50 are integrated into one body.

Moreover, second through-holes are formed in the flat plate part 33, the race part 80, the flange portion 52b and the disc part 12 so as to penetrate them in the axial direction. Specifically, in each of the flat plate part 33, the race part 80, the flange portion 52b and the disc part 12, there are formed, at positions radially offset from those where the first through-holes are formed, a plurality of second through-holes in alignment with each other in the circumferential direction (e.g., arranged at equal intervals in the circumferential direction). In each of the second through-holes, there is inserted a bolt 210. Specifically, the bolt 210 is inserted in the corresponding second through-holes of the flat plate part 33, the race part 80, the flange portion 52b and the disc part 12, with a head portion of the bolt 210 oriented inward in the vehicle width direction and a shaft portion of the bolt 210 oriented outward in the vehicle width direction. Further, a female thread of a nut 211 is fastened onto a male thread of the bolt 210. Consequently, the flat plate part 33, the flange portion 52b, the race part 80 and the disc part 12, which are in a state of overlapping each other, are together sandwiched between the head portion of the bolt 210 and the nut 211. As a result, the rotor 30, the bearing 50, the race part 80 and the wheel 10 are integrated into one body.

Next, a method of manufacturing a drive wheel will be described. In the manufacturing method, after assembling a motor ASSY including the race part 80, the motor ASSY is further assembled to the wheel 10.

Specifically, the positioning portion 33c is fitted into the through-hole 80b of the race part 80, with the flat surface of the race part 80 abutting against the flat surface of the step portion 33b. Then, the bearing-side step portion 52c is fitted into the recess 33d, with the race part 80 being sandwiched between the step portion 33b and the flange portion 52b.

Further, each blot 200 is inserted, with the head portion thereof oriented outward of the rotor 30, into the corresponding first through-holes of the flat plate part 33, the race part 80 and the flange portion 52b that are in a state of overlapping each other. Then, the female thread of a nut 201 is fastened onto the male thread of each bolt 200. Consequently, the flat plate part 33, the race part 80 and the flange portion 52b, which are in the state of overlapping each other, are together sandwiched between the head portions of the bolts 200 and the nuts 201. As a result, the rotor 30, the race part 80 and the bearing 50 are integrated together to form the motor ASSY. In addition, with the flat surface of the race part 80 abutting against the flat surface of the step portion 33b, warpage of the race part 80 can be suppressed during the fastening of the nuts 201 onto the bolts 200.

Further, each bolt 210 is inserted, with the head portion thereof oriented toward the stator base part 42, into the corresponding second through-holes of the motor ASSY and the disc part 12 that are in a state of overlapping each other. Then, the female thread of a nut 211 is fastened onto the male thread of each bolt 210. As a result, the motor ASSY and the wheel 10 are integrated into one body.

According to the present embodiment described above, it becomes possible to provide a drive wheel in which the coaxiality between the rotor 30, the race part 80 and the bearing 50 is minimized. Consequently, it becomes possible to improve the detection accuracy of the detection unit 90.

### [Sixth Embodiment]

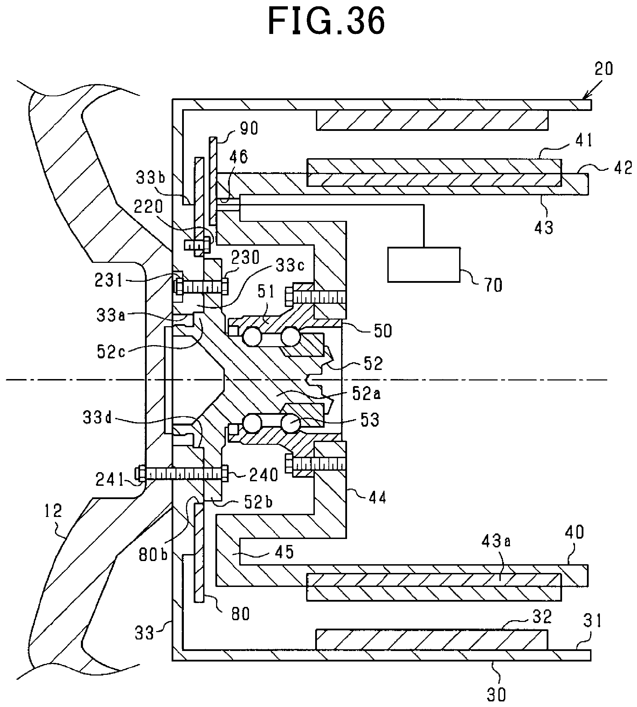

Hereinafter, a sixth embodiment will be described with reference to the drawings, focusing on the differences thereof from the fifth embodiment. In the present embodiment, as shown in FIG. 36, the race part 80 is fixed to the rotor 30 instead of the inner ring 52. It should be noted that for the sake of convenience, in FIG. 36, components identical or corresponding to those shown in FIG. 35 and the like are designated by the same reference signs as those shown in FIG. 35 and the like.

In the present embodiment, the positioning portion 33c is fitted in the through-hole 80b of the race part 80, with the flat surface of the race part 80 abutting against the flat surface of the step portion 33b. Further, the race part 80 and the step portion 33b are fixed together by bolts 220.

First through-holes are formed in the flat plate part 33 and the flange portion 52b so as to penetrate them in the axial direction. Specifically, in each of the flat plate part 33 and the flange portion 52b, there are formed a plurality of first through-holes in alignment with each other in the circumferential direction (e.g., arranged at equal intervals in the circumferential direction). In each of the first through-holes, there is inserted a bolt 230. Specifically, the bolt 230 is inserted in the corresponding first through-holes of the flat plate part 33 and the flange portion 52b, with a head portion of the bolt 230 oriented inward in the vehicle width direction and a shaft portion of the bolt 230 oriented outward in the vehicle width direction. Further, a female thread of a nut 231 is fastened onto a male thread of the bolt 230. Consequently, the flat plate part 33 and the flange portion 52b, which are in a state of overlapping each other, are together sandwiched between the head portion of the bolt 230 and the nut 231. As a result, the rotor 30, the race part 80 and the bearing 50 are integrated into one body.

Moreover, second through-holes are formed in the flat plate part 33, the flange portion 52b and the disc part 12 so as to penetrate them in the axial direction. Specifically, in each of the flat plate part 33, the flange portion 52b and the disc part 12, there are formed, at positions radially offset from those where the first through-holes are formed, a plurality of second through-holes in alignment with each other in the circumferential direction (e.g., arranged at equal intervals in the circumferential direction). In each of the second through-holes, there is inserted a bolt 240. Specifically, the bolt 240 is inserted in the corresponding second through-holes of the flat plate part 33, the flange portion 52b and the disc part 12, with a head portion of the bolt 240 oriented inward in the vehicle width direction and a shaft portion of the bolt 240 oriented outward in the vehicle width direction. Further, a female thread of a nut 241 is fastened onto a male thread of the bolt 240. Consequently, the flat plate part 33, the flange portion 52b and the disc part 12, which are in a state of overlapping each other, are together sandwiched between the head portion of the bolt 240 and the nut 241. As a result, the rotor 30 and the wheel 10 are integrated into one body.

### [Seventh Embodiment]

Hereinafter, a seventh embodiment will be described with reference to the drawings, focusing on the differences thereof from the first embodiment. In the present embodiment, the method of calculating the lateral force Fy by the processing unit 70 is changed compared to that in the first embodiment.

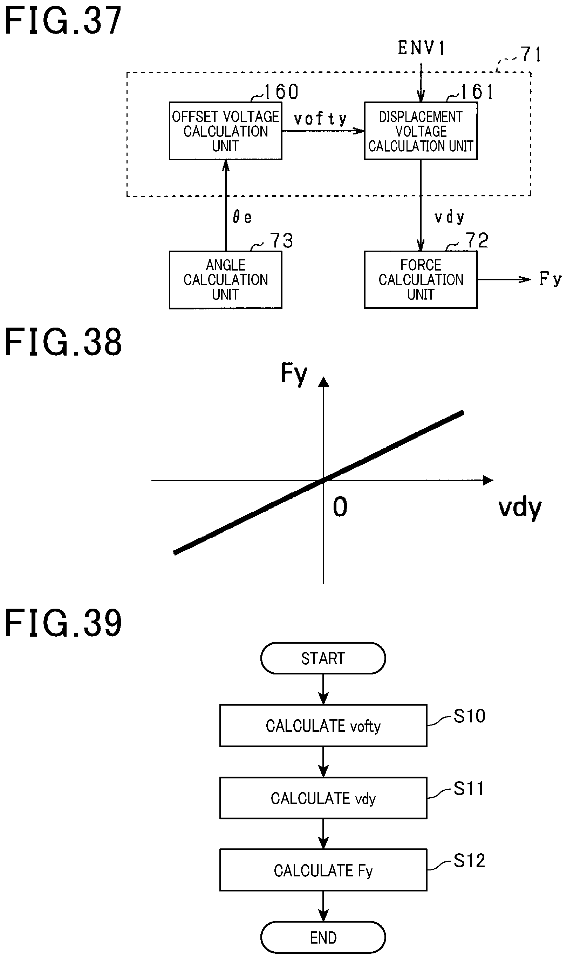

The processing unit 70 is mainly composed of a microcomputer which includes a CPU. The functions of the microcomputer may be provided by software recorded in a tangible memory device and a computer that executes it, only software, only hardware, or a combination thereof. For example, in the case of the microcomputer being configured with an electronic circuit that is hardware, it may be configured with a digital circuit that includes a number of logic circuits, or with an analog circuit. For example, the microcomputer may execute programs stored in a non-transitory tangible storage medium that is included in the microcomputer as a storage unit. The programs may include, for example, a program for performing a force calculation process shown in FIG. 39 which will be described later. Moreover, methods corresponding to the programs may be carried out by executing the programs. The storage unit may be, for example, a nonvolatile memory. In addition, the programs stored in the storage unit may be updated, for example by OTA (Over-The-Air), via a communication network such as the Internet.

FIG. 37 is a block diagram of the processing unit 70 according to the present embodiment.

In the present embodiment, the displacement calculation unit 71 of the processing unit 70 includes an offset voltage calculation unit 160 and a displacement voltage calculation unit 161. The electrical angle θe calculated by the angle calculation unit 73 is inputted to the offset voltage calculation unit 160.

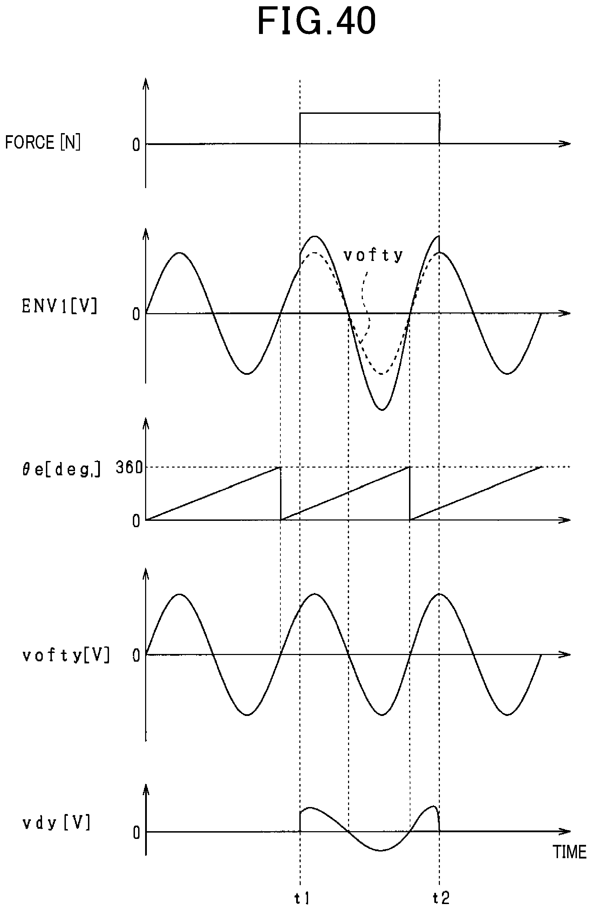

The offset voltage calculation unit 160 calculates an axial offset voltage vofty on the basis of the electrical angle θe. The axial offset voltage vofty represents the first envelope ENV1 in the reference state. In the present embodiment, the axial offset voltage vofty is a signal whose average value per period is 0 and whose zero-upcrossing and zero-downcrossing timings are the same as those of the first envelope ENV1 (see FIG. 17). The reference state may be set arbitrarily. For example, as described above, the reference state may be set to a stopped state of the vehicle, more particularly to a state where the vehicle remains stopped on a horizontal road surface. Moreover, in the present embodiment, one period of the first envelope ENV1 and one electrical angle period of the rotor 30 are set to be equal (see FIG. 40). It should be noted that the axial offset voltage vofty may be, for example, a signal that is adapted when the vehicular detection apparatus is designed or a signal that is measured during shipment inspection of the vehicular detection apparatus.

The displacement voltage calculation unit 161 also functions as a signal acquisition unit that acquires the first envelope ENV1 from the reception circuit 95. The displacement voltage calculation unit 161 calculates the axial displacement voltage vdy by subtracting the axial offset voltage vofty from the first envelope ENV1 (i.e., vdy = ENV1 - vofty). It should be noted that the displacement voltage calculation unit 161 may alternatively acquire the first output voltage signal v1 from the reception circuit 95 and calculate the first envelope ENV1 based on the acquired first output voltage signal v1.

When the current state is the reference state, the first envelope ENV1 and the axial offset voltage vofty are identical to each other so that the axial displacement voltage vdy becomes zero. On the other hand, when the current state deviates from the reference state, during periods excluding the zero-crossing timings of the axial offset voltage vofty, the values of the first envelope ENV1 and the axial offset voltage vofty are different from each other so that the axial displacement voltage vdy has nonzero values. It should be noted that the axial displacement voltage vdy is a signal which is obtained by eliminating the influence of fluctuation components accompanying rotation of the rotor 30 from the first envelope ENV1, and which has a correlation with the lateral force Fy.

In the present embodiment, of the first and second envelopes ENV1 and ENV2, the first envelope ENV1 is used for calculation of the axial displacement voltage vdy. This is because the first envelope ENV1 is not influenced by the vertical load Fz.

The force calculation unit 72 calculates the lateral force Fy on the basis of the axial displacement voltage vdy. For example, as shown in FIG. 38, the force calculation unit 72 may calculate the lateral force Fy as the product of a coefficient of proportionality Ky (> 0) and the axial displacement voltage vdy. Alternatively, the force calculation unit 72 may calculate the lateral force Fy on the basis of the axial displacement voltage vdy and map information which associates the axial displacement voltage vdy with the lateral force Fy.

In addition, in the example illustrated in FIG. 38, the intercept of a linear equation, whose independent variable is the axial displacement voltage vdy and whose dependent variable is the lateral force Fy, is 0. However, depending on the manner of setting the reference state, the intercept may be a nonzero value.

FIG. 39 is a flowchart illustrating the calculation process of the lateral force Fy executed by the processing unit 70 according to the present embodiment.

In step S10, the offset voltage calculation unit 160 calculates the axial offset voltage vofty on the basis of the electrical angle θe.

In step S11, the displacement voltage calculation unit 161 calculates the axial displacement voltage vdy by subtracting the axial offset voltage vofty from the acquired first envelope ENV1.

In step S12, the force calculation unit 72 calculates the lateral force Fy on the basis of the axial displacement voltage vdy.

FIG. 40 illustrates the changes with time of the axial offset voltage vofty, the axial displacement voltage vdy, etc. in the case of the rotational speed of the rotor 30 being constant. In the example illustrated in FIG. 40, the lateral force Fy acts on the vehicle wheel during the period from a time instant t1 to a time instant t2. Therefore, during the period from the time instant t1 to the time instant t2, the first envelope ENV1 deviates from the axial offset voltage vofty. Consequently, during the period from the time instant t1 to the time instant t2 excluding the zero-crossing timings of the axial offset voltage vofty, the axial displacement voltage vdy has nonzero values reflecting the lateral force Fy. As a result, it becomes possible to improve the accuracy of calculating the lateral force Fy.

### [Eighth Embodiment]

Hereinafter, an eighth embodiment will be described with reference to the drawings, focusing on the differences thereof from the seventh embodiment. In the present embodiment, the method of calculating the lateral force Fy by the processing unit 70 is changed compared to that in the seventh embodiment.

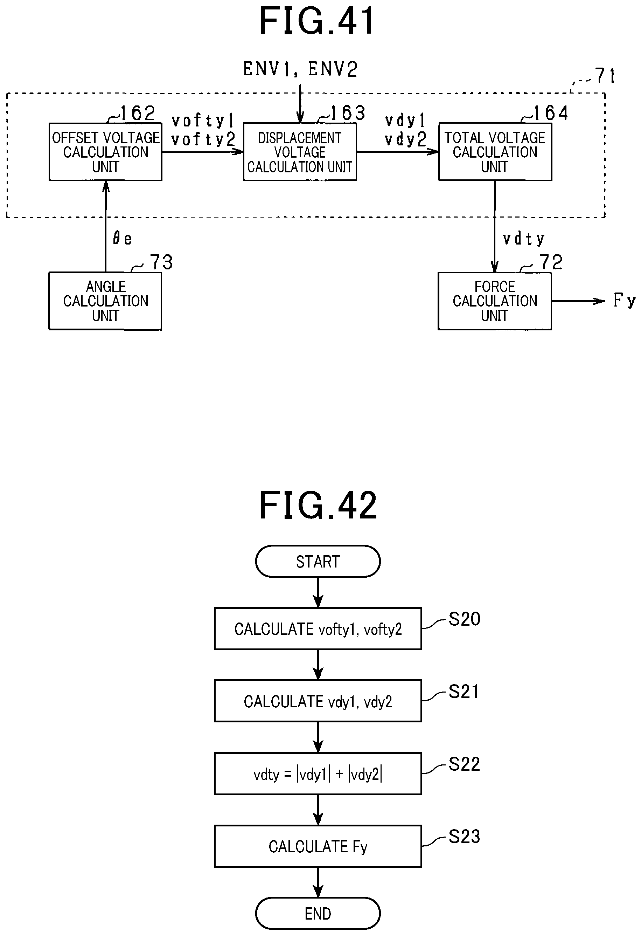

FIG. 41 is a block diagram of the processing unit 70 according to the present embodiment.

In the present embodiment, the displacement calculation unit 71 of the processing unit 70 includes an offset voltage calculation unit 162, a displacement voltage calculation unit 163, and a total voltage calculation unit 164. The electrical angle θe calculated by the angle calculation unit 73 is inputted to the offset voltage calculation unit 162.

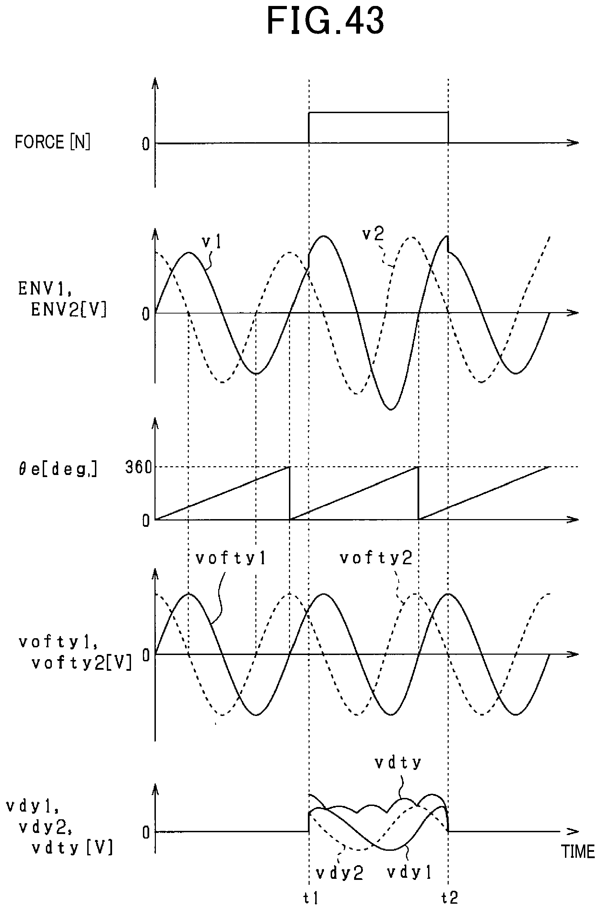

The offset voltage calculation unit 162 calculates both a first axial offset voltage vofty1 and a second axial offset voltage vofty2 on the basis of the electrical angle θe. The first axial offset voltage vofty1 represents the first envelope ENV1 in the reference state; and the second axial offset voltage vofty2 represents the second envelope ENV2 in the reference state. In the present embodiment, the average value of each of the axial offset voltages vofty1 and vofty2 per period is 0. Moreover, the first axial offset voltage vofty1 is a signal whose zero-upcrossing and zero-downcrossing timings are the same as those of the first envelope ENV1; and the second axial offset voltage vofty2 is a signal whose zero-upcrossing and zero-downcrossing timings are the same as those of the second envelope ENV2. Since the phase difference between the first envelope ENV1 and the second envelope ENV2 is 90° in electrical angle, the phase difference between the first axial offset voltage vofty1 and the second axial offset voltage vofty2 is also 90° in electrical angle (see FIG. 43).

The displacement voltage calculation unit 163 acquires both the first envelope ENV1 and the second envelope ENV2 from the reception circuit 95. Then, the displacement voltage calculation unit 163 calculates the first axial displacement voltage vdy1 by subtracting the first axial offset voltage vofty 1 from the first envelope ENV1 (i.e., vdy1 = ENV1 - vofty1). Moreover, the displacement voltage calculation unit 163 also calculates the second axial displacement voltage vdy2 by subtracting the second axial offset voltage vofty2 from the second envelope ENV2 (i.e., vdy2 = ENV2 - vofty2). It should be noted that the displacement voltage calculation unit 163 may alternatively acquire the first and second output voltage signals v1 and v2 from the reception circuit 95 and calculate the first and second envelopes ENV1 and ENV2 based on the acquired first and second output voltage signals v1 and v2.

When the current state is the reference state, the first envelope ENV1 and the first axial offset voltage vofty1 are identical to each other so that the first axial displacement voltage vdy1 becomes zero. On the other hand, when the current state deviates from the reference state, during periods excluding the zero-crossing timings of the first axial offset voltage vofty1, the values of the first envelope ENV1 and the first axial offset voltage vofty 1 are different from each other so that the first axial displacement voltage vdy1 has nonzero values.

Similarly, when the current state is the reference state, the second envelope **ENV2 and** the second axial offset voltage vofty2 are identical to each other so that the second axial displacement voltage vdy2 becomes zero. On the other hand, when the current state deviates from the reference state, during periods excluding the zero-crossing timings of the second axial offset voltage vofty2, the values of the second envelope ENV2 and the second axial offset voltage vofty2 are different from each other so that the second axial displacement voltage vdy2 has nonzero values.

The total voltage calculation unit 164 calculates a total voltage vdty by adding together the absolute value of the first axial displacement voltage vdy1 and the absolute value of the second axial displacement voltage vdy2 (i.e., vdty = |vdy1| + |vdy2|).

The force calculation unit 72 calculates the lateral force Fy on the basis of the total voltage vdty. For example, the force calculation unit 72 may calculate the lateral force Fy by the following equation (eq1), where Ka (> 0) is a coefficient of proportionality.
$Fy = Ka \times vdty$ (eq1)

Alternatively, the force calculation unit 72 may calculate the lateral force Fy on the basis of the total voltage vdty and map information which associates the total voltage vdty with the lateral force Fy.

FIG. 42 is a flowchart illustrating the calculation process of the lateral force Fy executed by the processing unit 70 according to the present embodiment.

In step S20, the offset voltage calculation unit 162 calculates both the first and second axial offset voltages vofty1 and vofty2 on the basis of the electrical angle θe.

In step S21, the displacement voltage calculation unit 163 calculates the first axial displacement voltage vdy1 by subtracting the first axial offset voltage vofty1 from the acquired first envelope ENV1. Moreover, the displacement voltage calculation unit 163 also calculates the second axial displacement voltage vdy2 by subtracting the second axial offset voltage vofty2 from the acquired second envelope ENV2.

In step S22, the total voltage calculation unit 164 calculates the total voltage vdty on the basis of the first and second axial displacement voltages vdy1 and vdy2.

In step S23, the force calculation unit 72 calculates the lateral force Fy on the basis of the total voltage vdty.

FIG. 43 illustrates the changes with time of the axial offset voltages vofty1 and vofty2, the first and second axial displacement voltages vdy1 and vdy2, the total voltage vdty, etc. in the case of the rotational speed of the rotor 30 being constant. In the example illustrated in FIG. 43, the lateral force Fy acts on the vehicle wheel during the period from a time instant t1 to a time instant t2. Therefore, during the period from the time instant t1 to the time instant t2, the first envelope ENV1 deviates from the first axial offset voltage vofty1; and the second envelope ENV2 deviates from the second axial offset voltage vofty2. Consequently, the first axial displacement voltage vdy1 has nonzero values during the period from the time instant t1 to the time instant t2 excluding the zero-crossing timings of the first axial offset voltage vofty1; and the second axial displacement voltage vdy2 has nonzero values during the period from the time instant t1 to the time instant t2 excluding the zero-crossing timings of the second axial offset voltage vofty2.

Moreover, since the phase difference between the first axial offset voltage vofty1 and the second axial offset voltage vofty2 is 90°, in the example illustrated in FIG. 43, the total voltage vdty has nonzero values and does not cross zero during the period from the time instant t1 to the time instant t2. Therefore, even when one of the first and second axial offset voltages vofty 1 and vofty2 crosses zero, the lateral force Fy can still be determined based on the other of the first and second axial offset voltages vofty1 and vofty2. That is, with the total voltage vdty, it becomes possible improve the accuracy of calculating the lateral force Fy.

### [Ninth Embodiment]

Hereinafter, a ninth embodiment will be described with reference to the drawings, focusing on the differences thereof from the eighth embodiment. In the present embodiment, the method of calculating the lateral force Fy by the processing unit 70 is changed compared to that in the eighth embodiment.

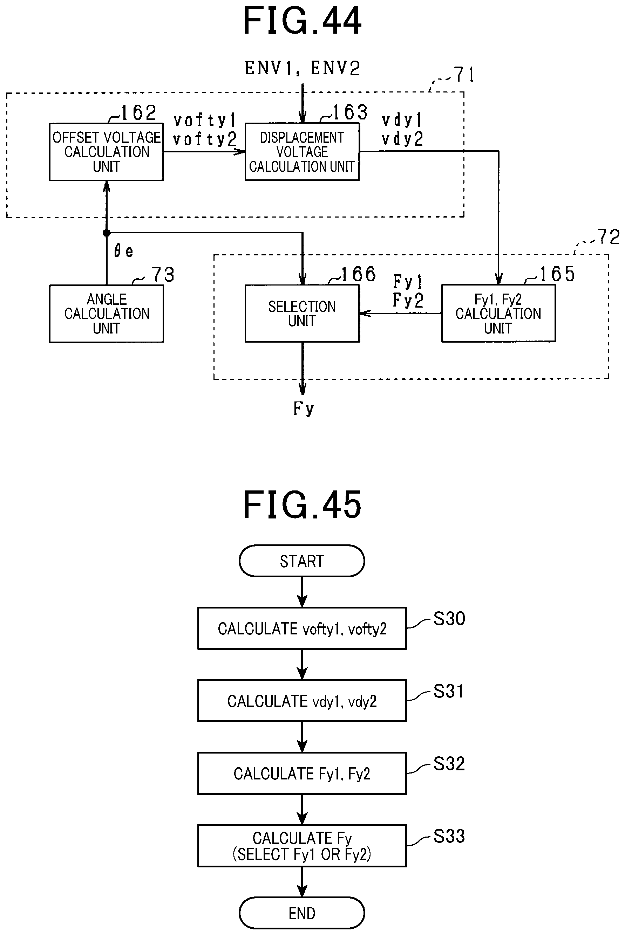

FIG. 44 is a block diagram of the processing unit 70 according to the present embodiment.

In the present embodiment, the displacement calculation unit 71 of the processing unit 70 includes an offset voltage calculation unit 162 and a displacement voltage calculation unit 163.

**The offset** voltage calculation unit 162 calculates both a first axial offset voltage vofty1 and a second axial offset voltage vofty2 on the basis of the electrical angle θe.

The displacement voltage calculation unit 163 acquires both the first envelope ENV1 and the second envelope ENV2 from the reception circuit 95. Then, the displacement voltage calculation unit 163 calculates the first axial displacement voltage vdy1 by subtracting the first axial offset voltage vofty 1 from the first envelope ENV1. Moreover, the displacement voltage calculation unit 163 also calculates the second axial displacement voltage vdy2 by subtracting the second axial offset voltage vofty2 from the second envelope ENV2.

**In** the present embodiment, the force calculation unit 72 of the processing unit 70 includes a candidate lateral force calculation unit 165 and a selection unit 166. The candidate lateral force calculation unit 165 calculates a first lateral force Fy1 (corresponding to a "first axial force") on the basis of the first axial displacement voltage vdy1, and calculates a second lateral force Fy2 (corresponding to a "second axial force") on the basis of the second axial displacement voltage vdy2. For example, the candidate lateral force calculation unit 165 may calculate the first lateral force Fy1 as the product of a first coefficient of proportionality Ky1 (> 0) and the first axial displacement voltage vdy1, and calculate the second lateral force Fy2 as the product of a second coefficient of proportionality Ky2 (> 0) and the second axial displacement voltage vdy2. It should be noted that each of the lateral forces Fy1 and Fy2 may alternatively be calculated on the basis of map information as in the seventh embodiment and the like.

In the present embodiment, first periods L1 during which the absolute value of the first axial offset voltage vofty1 is greater than the absolute value of the second axial offset voltage vofty2, and second periods L2 during which the absolute value of the second axial offset voltage vofty2 is greater than the absolute value of the first axial offset voltage vofty 1 are associated with the electrical angle θe. The selection unit 166 selects the first lateral force Fy1 as the lateral force Fy when the current timing is determined, based on the electrical angle θe, to be included in one of the first periods L1, and selects the second lateral force Fy2 as the lateral force Fy when the current timing is determined, based on the electrical angle θe, to be included in one of the second periods L2. As a result, it becomes possible to improve the accuracy of calculating the lateral force Fy.

FIG. 45 is a flowchart illustrating the calculation process of the lateral force Fy executed by the processing unit 70 according to the present embodiment.

In step S30, the offset voltage calculation unit 162 calculates both the first and second axial offset voltages vofty1 and vofty2 on the basis of the electrical angle θe.

In step S31, the displacement voltage calculation unit 163 calculates the first axial displacement voltage vdy1 by subtracting the first axial offset voltage vofty1 from the acquired first envelope ENV1. Moreover, the displacement voltage calculation unit 163 also calculates the second axial displacement voltage vdy2 by subtracting the second axial offset voltage vofty2 from the acquired second envelope ENV2.

In step S32, the candidate lateral force calculation unit 165 calculates the first and second lateral forces Fy1 and Fy2 on the basis of the first and second axial displacement voltages vdy1 and vdy2.

In step S33, if the current timing is determined to be included in one of the first periods L1, the selection unit 166 selects the first lateral force Fy1 as the lateral force Fy. In contrast, if the current timing is determined to be included in one of the second periods L2, the selection unit 166 selects the second lateral force Fy2 as the lateral force Fy.

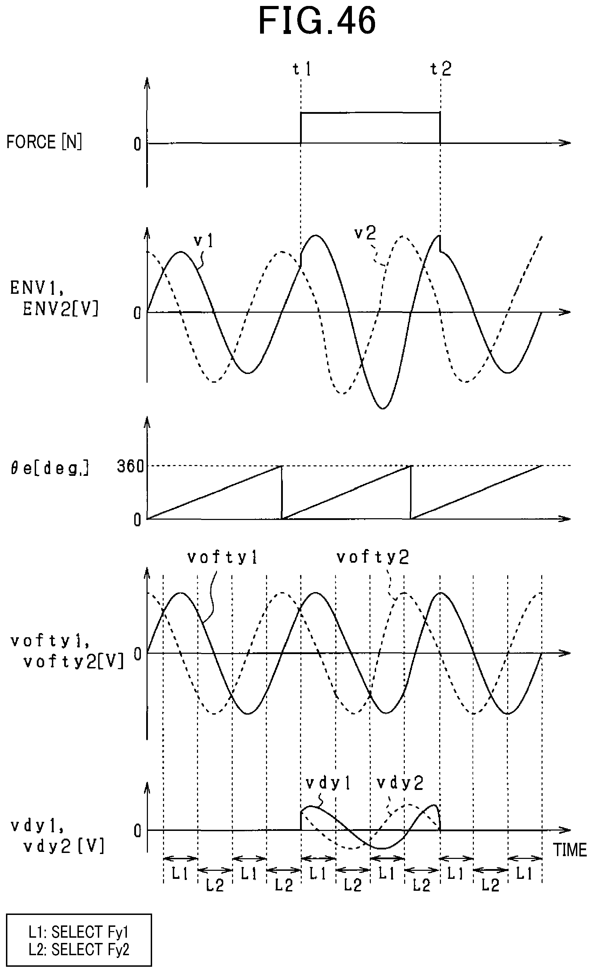

FIG. 46 illustrates the changes with time of the axial offset voltages vofty1 and vofty2, the first and second axial displacement voltages vdy1 and vdy2, etc. in the case of the rotational speed of the rotor 30 being constant. In the example illustrated in FIG. 46, the lateral force Fy acts on the vehicle wheel during the period from a time instant t1 to a time instant t2. The selection unit 166 selects the first lateral force Fy1 as the lateral force Fy when the current timing is determined to be included in one of the first periods L1, and selects the second lateral force Fy2 as the lateral force Fy when the current timing is determined to be included in one of the second periods L2.

According to the present embodiment described above, it becomes possible to improve the accuracy of calculating the lateral force Fy.

### [Tenth Embodiment]

Hereinafter, a tenth embodiment will be described with reference to the drawings, focusing on the differences thereof from the ninth embodiment. In the present embodiment, the method of calculating the lateral force Fy by the processing unit 70 is changed compared to that in the ninth embodiment.

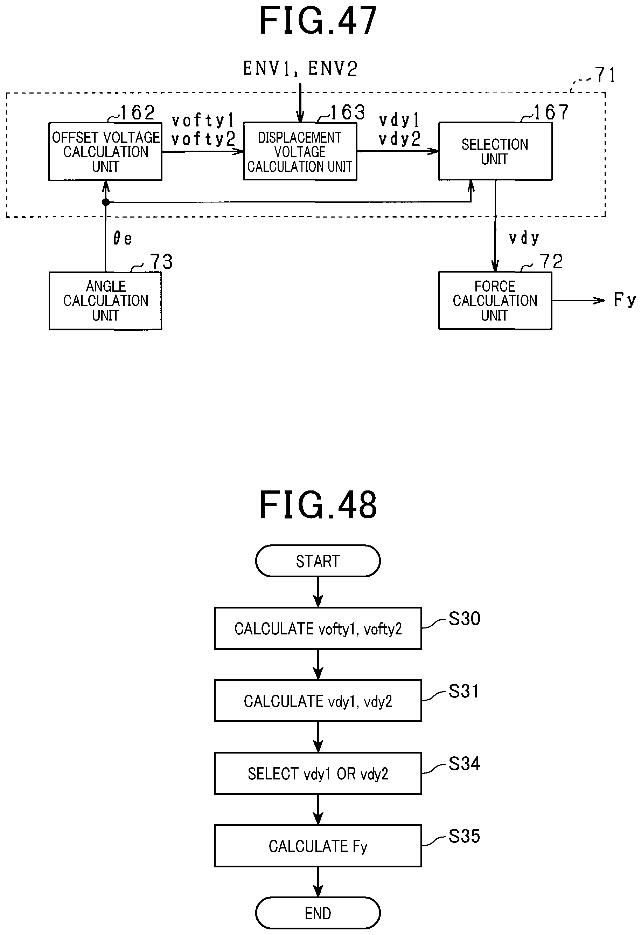

FIG. 47 is a block diagram of the processing unit 70 according to the present embodiment.

In the present embodiment, the displacement calculation unit 71 includes a selection unit 167. The selection unit 167 outputs the first axial displacement voltage vdy1 as the axial displacement voltage vdy to the force calculation unit 72 when the current timing is determined, based on the electrical angle θe, to be included in one of the first periods L1, and outputs the second axial displacement voltage vdy2 as the axial displacement voltage vdy to the force calculation unit 72 when the current timing is determined, based on the electrical angle θe, to be included in one of the second periods L2. Then, the force calculation unit 72 calculates the lateral force Fy on the basis of the axial displacement voltage vdy inputted thereto. As a result, it becomes possible to improve the accuracy of calculating the lateral force Fy.

FIG. 48 is a flowchart illustrating the calculation process of the lateral force Fy executed by the processing unit 70 according to the present embodiment.

After step S31, in step S34, if the current timing is determined to be included in one of the first periods L1, the selection unit 167 outputs the first axial displacement voltage vdy1 as the axial displacement voltage vdy to the force calculation unit 72. In contrast, if the current timing is determined to be included in one of the second periods L2, the selection unit 167 outputs the second axial displacement voltage vdy2 as the axial displacement voltage vdy to the force calculation unit 72.

In step S35, the lateral force Fy is calculated on the basis of the axial displacement voltage vdy.

According to the present embodiment described above, it is possible to achieve the same advantageous effects as achievable according to the ninth embodiment.

### [Eleventh Embodiment]

Hereinafter, an eleventh embodiment will be described with reference to the drawings, focusing on the differences thereof from the first embodiment. In the present embodiment, explanation will be given of a force calculation method used when both a lateral force Fy and a vertical load Fz act simultaneously on the vehicle wheel.

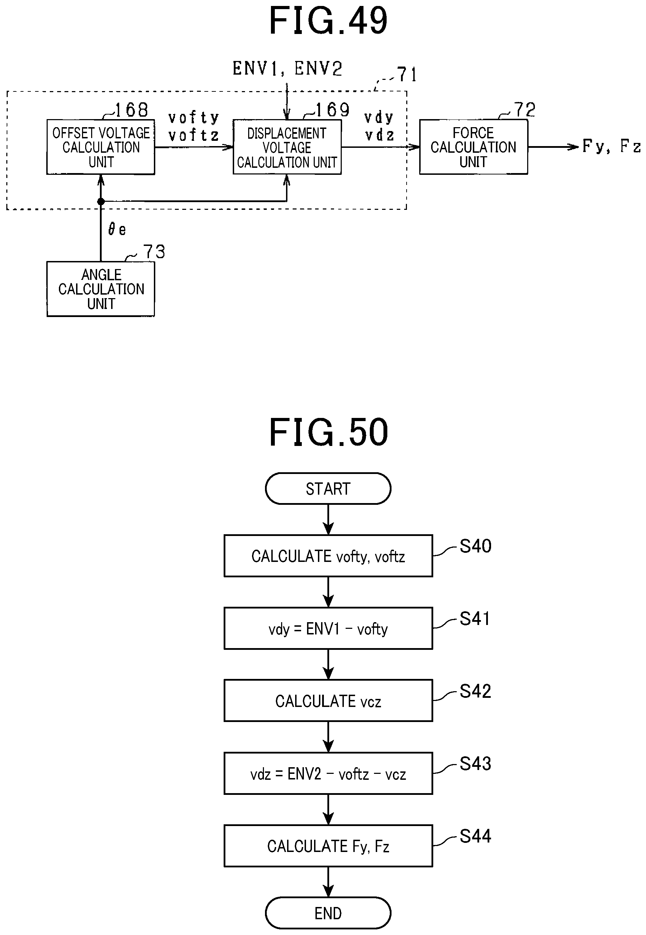

FIG. 49 is a block diagram of the processing unit 70 according to the present embodiment.

In the present embodiment, the displacement calculation unit 71 of the processing unit 70 includes an offset voltage calculation unit 168 and a displacement voltage calculation unit 169.

The offset voltage calculation unit 162 calculates both the axial offset voltage vofty and a vertical offset voltage voftz on the basis of the electrical angle θe. The vertical offset voltage voftz represents the second envelope ENV2 in the reference state. The average value of the vertical offset voltage voftz per period is 0. Moreover, the vertical offset voltage voftz is a signal whose zero-upcrossing and zero-downcrossing timings are the same as those of the second envelope ENV2. The phase difference between the axial offset voltage vofty and the vertical offset voltage voftz is 90° in electrical angle.

The displacement voltage calculation unit 168 acquires both the first and second envelopes ENV1 and ENV2 from the reception circuit 95. Then, the displacement voltage calculation unit 168 calculates the axial displacement voltage vdy by subtracting the axial offset voltage vofty from the first envelope ENV1.

Further, the displacement voltage calculation unit 168 calculates a vertical correction voltage vcz on the basis of the calculated axial displacement voltage vdy and the electrical angle θe. The vertical correction voltage vcz is a signal that quantifies, when a lateral force acts on the vehicle wheel, the effect of the lateral force on the second envelope ENV2. More specifically, the vertical correction voltage vcz is a signal that represents the amount of change in the second envelope ENV2 due to the lateral force. The vertical correction voltage vcz varies with the same period as the second envelope ENV2; and the average value of the vertical correction voltage vcz per period is 0. Moreover, the vertical correction voltage vcz is a signal whose zero-upcrossing and zero-downcrossing timings are the same as those of the second envelope ENV2. That is, the phase difference between the vertical correction voltage vcz and the second envelope ENV2 is 0°. For example, the displacement voltage calculation unit 169 may calculate the vertical correction voltage vcz such that the higher the axial displacement voltage vdy, the higher the amplitude of the vertical correction voltage vcz.

The displacement voltage calculation unit 169 calculates a vertical displacement voltage vdz by subtracting both the vertical offset voltage voftz and the vertical correction voltage vcz from the second envelope ENV2. The effect of the lateral force on the vertical displacement voltage vdz can be eliminated by subtracting the vertical correction voltage vcz therefrom. **In** other words, the vertical displacement voltage vdz becomes independent of the lateral force.

The force calculation unit 72 calculates the lateral force Fy on the basis of the axial displacement voltage vdy, and calculates the vertical load Fz on the basis of the vertical displacement voltage vdz. For example, the force calculation unit 72 may calculate the vertical load Fz as the product of a coefficient of proportionality Kz (> 0) and the vertical displacement voltage vdz. Alternatively, the force calculation unit 72 may calculate the vertical load Fz on the basis of the vertical displacement voltage vdz and map information which associates the vertical displacement voltage vdz with the vertical load Fz.

FIG. 50 is a flowchart illustrating the calculation process of the lateral force Fy and the vertical load Fz executed by the processing unit 70 according to the present embodiment.

In step S40, the offset voltage calculation unit 168 calculates both the axial offset voltage vofty and the vertical offset voltage voftz on the basis of the electrical angle θe.

In step S41, the displacement voltage calculation unit 169 calculates the axial displacement voltage vdy by subtracting the axial offset voltage vofty from the acquired first envelope ENV1.

In step S42, the displacement voltage calculation unit 169 calculates the vertical correction voltage vcz on the basis of the axial displacement voltage vdy.

In step S43, the displacement voltage calculation unit 169 calculates the vertical displacement voltage vdz by subtracting both the vertical offset voltage voftz and the vertical correction voltage vcz from the second envelope ENV2.

In step S44, the force calculation unit 72 calculates the lateral force Fy on the basis of the axial displacement voltage vdy, and calculates the vertical load Fz on the basis of the vertical displacement voltage vdz.

According to the present embodiment described above, it becomes possible to improve the accuracy of calculating the lateral force Fy and the vertical load Fz.

### [Twelfth Embodiment]

Hereinafter, a twelfth embodiment will be described with reference to the drawings, focusing on the differences thereof from the eleventh embodiment. In the present embodiment, the forward/backward load Fx is calculated instead of the vertical load Fz. Therefore, the race part 80 and the detection unit 90 described in the fourth embodiment (see FIG. 34) is employed in the present embodiment.

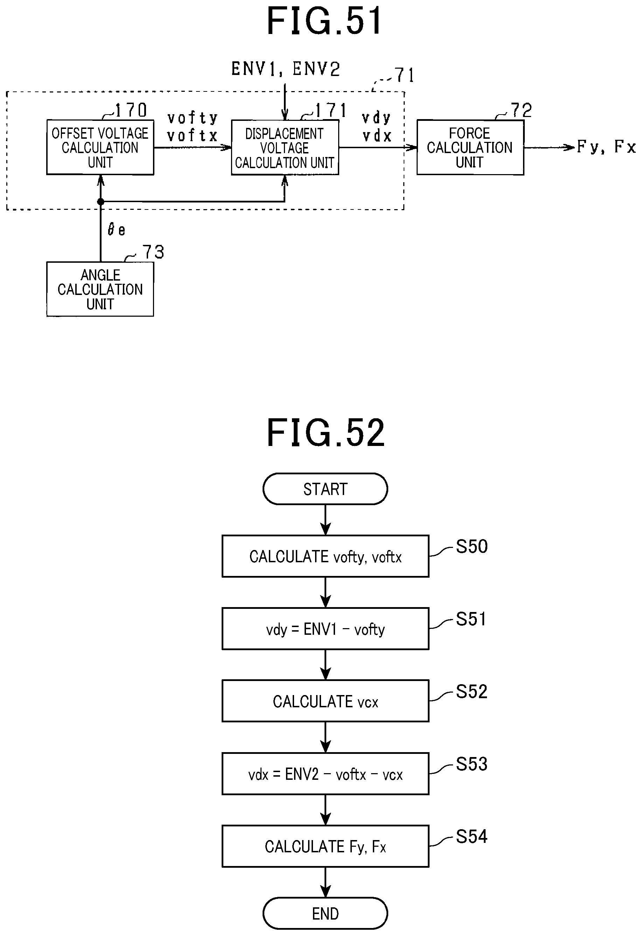

FIG. 51 is a block diagram of the processing unit 70 according to the present embodiment.

In the present embodiment, the displacement calculation unit 71 of the processing unit 70 includes an offset voltage calculation unit 170 and a displacement voltage calculation unit 171.

The offset voltage calculation unit 170 calculates both the axial offset voltage vofty and a forward/backward offset voltage voftx on the basis of the electrical angle θe. The forward/backward offset voltage voftx represents the second envelope ENV2 in the reference state. The average value of the forward/backward offset voltage voftx per period is 0. Moreover, the forward/backward offset voltage voftx is a signal whose zero-upcrossing and zero-downcrossing timings are the same as those of the second envelope ENV2. The phase difference between the axial offset voltage vofty and the forward/backward offset voltage voftx is 90° in electrical angle.

The displacement voltage calculation unit 171 acquires both the first and second envelopes ENV1 and ENV2 from the reception circuit 95. Then, the displacement voltage calculation unit 171 calculates the axial displacement voltage vdy by subtracting the axial offset voltage vofty from the first envelope ENV1.

Further, the displacement voltage calculation unit 171 calculates a vehicle-longitudinal-direction correction voltage vcx on the basis of the calculated axial displacement voltage vdy and the electrical angle θe. The vehicle-longitudinal-direction correction voltage vcx is a signal that quantifies, when a lateral force acts on the vehicle wheel, the effect of the lateral force on the second envelope ENV2. More specifically, the vehicle-longitudinal-direction correction voltage vcx is a signal that represents the amount of change in the second envelope ENV2 due to the lateral force. The vehicle-longitudinal-direction correction voltage vcx varies with the same period as the second envelope ENV2; and the average value of the vehicle-longitudinal-direction correction voltage vcx per period is 0. Moreover, the vehicle-longitudinal-direction correction voltage vcx is a signal whose zero-upcrossing and zero-downcrossing timings are the same as those of the second envelope ENV2. That is, the phase difference between the vehicle-longitudinal-direction correction voltage vcx and the second envelope ENV2 is 0°. For example, the displacement voltage calculation unit 171 may calculate the vehicle-longitudinal-direction correction voltage vcx such that the higher the axial displacement voltage vdy, the higher the amplitude of the vehicle-longitudinal-direction correction voltage vcx.

The displacement voltage calculation unit 171 calculates a forward/backward displacement voltage vdx by subtracting both the forward/backward offset voltage voftx and the vehicle-longitudinal-direction correction voltage vcx from the second envelope ENV2. The effect of the lateral force on the forward/backward displacement voltage vdx can be eliminated by subtracting the vehicle-longitudinal-direction correction voltage vcx therefrom. **In** other words, the forward/backward displacement voltage vdx becomes independent of the lateral force.

The force calculation unit 72 calculates the lateral force Fy on the basis of the axial displacement voltage vdy, and calculates the forward/backward load Fx on the basis of the forward/backward displacement voltage vdx. For example, the force calculation unit 72 may calculate the forward/backward load Fx as the product of a coefficient of proportionality Kx (> 0) and the forward/backward displacement voltage vdx. Alternatively, the force calculation unit 72 may calculate the forward/backward load Fx on the basis of the forward/backward displacement voltage vdx and map information which associates the forward/backward displacement voltage vdx with the forward/backward load Fx.

FIG. 52 is a flowchart illustrating the calculation process of the lateral force Fy and the forward/backward load Fx executed by the processing unit 70 according to the present embodiment.

**In** step S50, the offset voltage calculation unit 170 calculates both the axial offset voltage vofty and the forward/backward offset voltage voftx on the basis of the electrical angle θe.

In step S51, the displacement voltage calculation unit 171 calculates the axial displacement voltage vdy by subtracting the axial offset voltage vofty from the acquired first envelope ENV1.

In step S52, the displacement voltage calculation unit 171 calculates the vehicle-longitudinal-direction correction voltage vcx on the basis of the axial displacement voltage vdy.

In step S53, the displacement voltage calculation unit 171 calculates the forward/backward displacement voltage vdx by subtracting both the forward/backward offset voltage voftx and the vehicle-longitudinal-direction correction voltage vcx from the second envelope ENV2.

In step S54, the force calculation unit 72 calculates the lateral force Fy on the basis of the axial displacement voltage vdy, and calculates the forward/backward load Fx on the basis of the forward/backward displacement voltage vdx.

According to the present embodiment described above, it becomes possible to improve the accuracy of calculating the lateral force Fy and the forward/backward load Fx.

### [Thirteenth Embodiment]

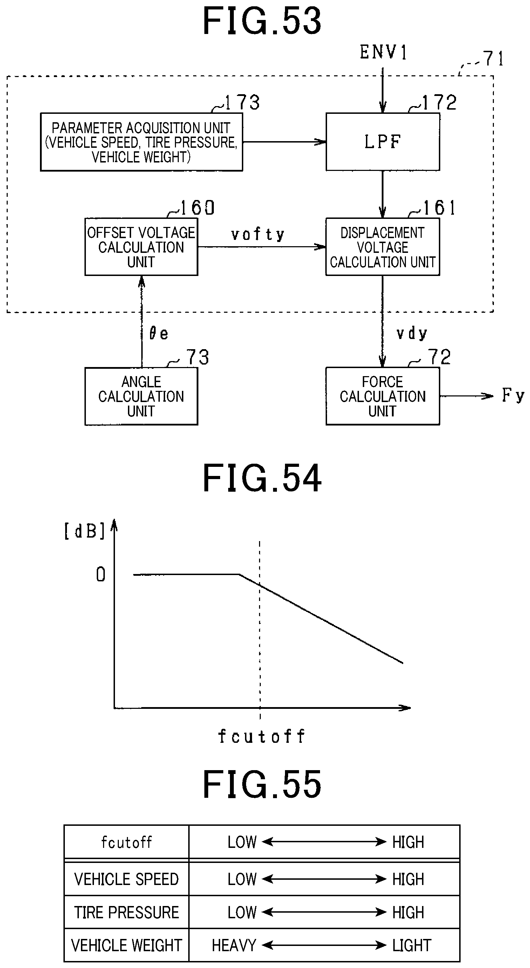

Hereinafter, a thirteenth embodiment will be described with reference to the drawings, focusing on the differences thereof from the seventh embodiment. In the present embodiment, as shown in FIG. 53, a low-pass filter process is performed on the first envelope ENV1 used in the displacement voltage calculation unit 161.

FIG. 53 is a block diagram of the processing unit 70 according to the present embodiment.

In the present embodiment, the displacement calculation unit 71 of the processing unit 70 includes a filter unit 172 and a parameter acquisition unit 173. The parameter acquisition unit 173 acquires vehicle speed information of the vehicle, air pressure information of the tire 13 of the vehicle wheel, and vehicle weight information of the vehicle. The vehicle speed information, the tire pressure information and the vehicle weight information are inputted to the filter unit 172.

The filter unit 172 acquires the first envelope ENV1 from the reception circuit 95, performs the low-pass filter process on the acquired first envelope ENV1, and outputs the first envelope ENV1 having been subjected to the low-pass filter process to the displacement voltage calculation unit 161. In the displacement voltage calculation unit 161, the first envelope ENV1 from which high-frequency noise components have been removed by the low-pass filter process is used for calculation of the axial displacement voltage vdy. Consequently, it becomes possible to improve the accuracy of calculating the axial displacement voltage vdy.

As shown in FIG. 54, the filter unit 172 has a cutoff frequency fcutoff. In the present embodiment, the filter unit 172 changes the low-pass filter characteristics so that as shown in FIG. 55, the lower the vehicle speed, the lower the tire pressure and the heavier the vehicle weight, the lower the cutoff frequency fcutoff becomes.

The greater the contact area of the tire 13 with the road surface, the lower the frequencies of the high-frequency noise components mixed into the first envelope ENV1 tend to be. Therefore, by lowering the cutoff frequency fcutoff with increase in the contact area of the tire 13 with the road surface, the high-frequency noise components can be properly removed from the first envelope ENV1. In addition, the lower the vehicle speed, the lower the tire pressure and the heavier the vehicle weight, the greater the contact area of the tire 13 with the road surface becomes.

According to the present embodiment described above, it becomes possible to improve the accuracy of calculating the axial displacement voltage vdy, thereby improving the accuracy of calculating the lateral force Fy.

### [Modification of Thirteenth Embodiment]

The low-pass filter process may be performed, by the filter unit 172, also on the first and second envelopes ENV1 and ENV2 inputted to the displacement voltage calculation unit 163 shown in FIGS. 41, 44 and 47, the first and second envelopes ENV1 and ENV2 inputted to the displacement voltage calculation unit 169 shown in FIG. 49, and the first and second envelopes ENV1 and ENV2 inputted to the displacement voltage calculation unit 171 shown in FIG. 51.

### [Fourteenth Embodiment]

Hereinafter, a fourteenth embodiment will be described with reference to the drawings, focusing on the differences thereof from the seventh and thirteenth embodiments. In the present embodiment, the method of calculating the lateral force Fy is changed compared to those in the seventh and thirteenth embodiments.

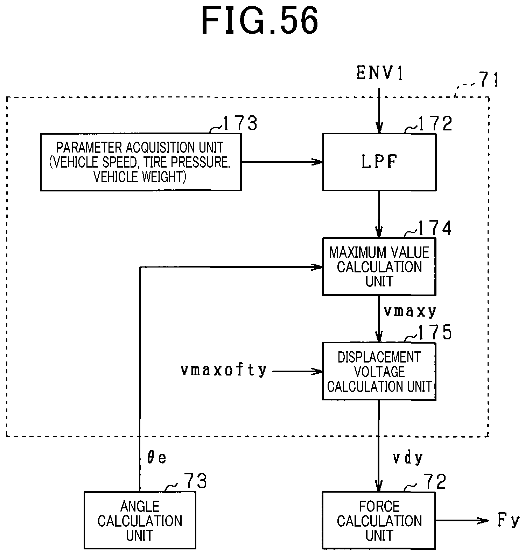

FIG. 56 is a block diagram of the processing unit 70 according to the present embodiment.

In the present embodiment, the displacement calculation unit 71 of the processing unit 70 includes a maximum value calculation unit 174 (corresponding to an "amplitude information calculation unit") and a displacement voltage calculation unit 175. The maximum value calculation unit 174 calculates an amplitude absolute value vmaxy (corresponding to an "amplitude information voltage") of the first envelope ENV1 on the basis of the electrical angle θe and the first envelope ENV1 that has been subjected to the low-pass filter process. For example, the maximum value calculation unit 174 may calculate the amplitude absolute value vmaxy for each half electrical angle period, each electrical angle period or every N electrical angle periods (N is an integer greater than or equal to 2).

The displacement voltage calculation unit 175 calculates the axial displacement voltage vdy by subtracting a reference amplitude value vmaxofty (corresponding to a "reference voltage") from the calculated amplitude absolute value vmaxy. The reference amplitude value vmaxofty is the amplitude absolute value of the first envelope ENV1 in the reference state.

When the current state is the reference state, the amplitude absolute value vmaxy and the reference amplitude value vmaxofty are equal to each other so that the axial displacement voltage vdy becomes zero. On the other hand, when the current state deviates from the reference state, the amplitude absolute value vmaxy and the reference amplitude value vmaxofty are different from each other so that the axial displacement voltage vdy has a nonzero value. It should be noted that the reference amplitude value vmaxofty may be, for example, a value that is adapted when the vehicular detection apparatus is designed or a value that is measured during shipment inspection of the vehicular detection apparatus. It also should be noted that since the amplitude absolute value vmaxy may change depending on the temperature of the detection unit 90 or the like, it may be corrected based on the detected value of a temperature sensor that detects that the temperature.

The force calculation unit 72 calculates the lateral force Fy on the basis of the axial displacement voltage vdy.

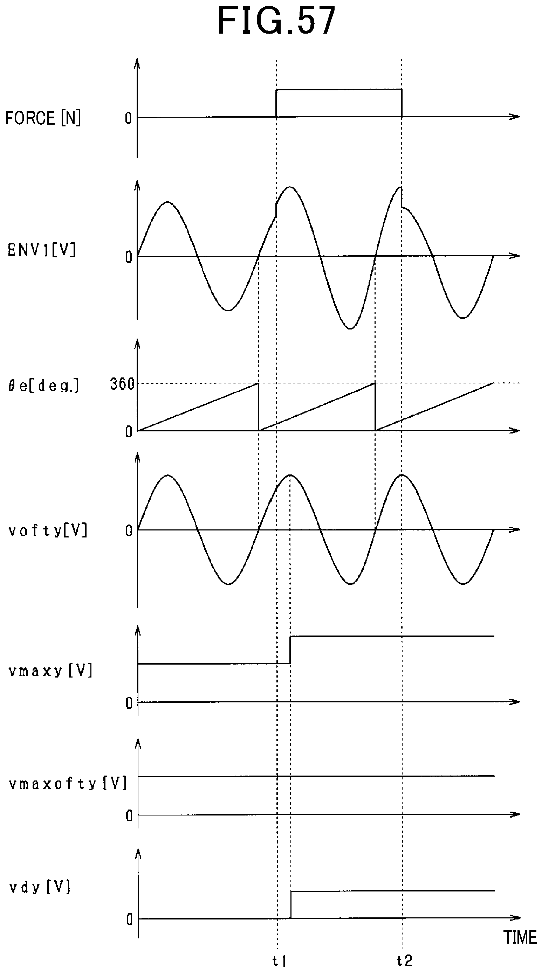

FIG. 57 illustrates the changes with time of the amplitude absolute value vmaxy, the reference amplitude value vmaxofty, etc. in the case of the rotational speed of the rotor 30 being constant. In addition, in FIG. 57, there is also shown the axial offset voltage vofty. In the example illustrated in FIG. 57, the lateral force Fy acts on the vehicle wheel during the period from a time instant t1 to a time instant t2.

The maximum value calculation unit 174 determines, based on the electrical angle θe, the timing at which the value of the first envelope ENV1 becomes maximum in each period of the first envelope ENV1. The maximum value calculation unit 174 calculates the amplitude absolute value vmaxy on the basis of the electrical angle θe and the first envelope ENV1. In the example illustrated in FIG. 57, the amplitude absolute value vmaxy is updated every electrical angle period. The maximum value calculation unit 174 calculates the axial displacement voltage vdy by subtracting the reference amplitude value vmaxofty from the amplitude absolute value vmaxy. Therefore, the axial displacement voltage vdy is also updated every electrical angle period.

The lateral force Fy can also be calculated according to the present embodiment described above.

### [Modifications of Fourteenth Embodiment]

The filter unit 172 may not be provided in the displacement calculation unit 71.

The maximum value calculation unit 174 may calculate, instead of the amplitude absolute value vmaxy, a time-integrated value (corresponding to an "amplitude information voltage") of the first envelope ENV1 for a predetermined period of time. The predetermined period of time may be, for example, each half electrical angle period, each electrical angle period or every N electrical angle periods (N is an integer greater than or equal to 2).

Further, the maximum value calculation unit 174 may calculate the axial displacement voltage vdy by subtracting a reference integrated value (corresponding to a "reference voltage") from the calculated time-integrated value. The reference integrated value may be the time-integrated value of the first envelope ENV1 for the predetermined period of time in the reference state.

When the current state is the reference state, the time-integrated value and the reference integrated value would be equal to each other so that the axial displacement voltage vdy would become zero. On the other hand, when the current state deviates from the reference state, the time-integrated value and the reference integrated value would be different from each other so that the axial displacement voltage vdy would have a nonzero value.

### [Fifteenth Embodiment]

Hereinafter, a fifteenth embodiment will be described with reference to the drawings, focusing on the differences thereof from the seventh to fourteenth embodiments. In the present embodiment, explanation will be given of mounting locations of the displacement calculation unit 71, the force calculation unit 72 and the angle calculation unit 73.

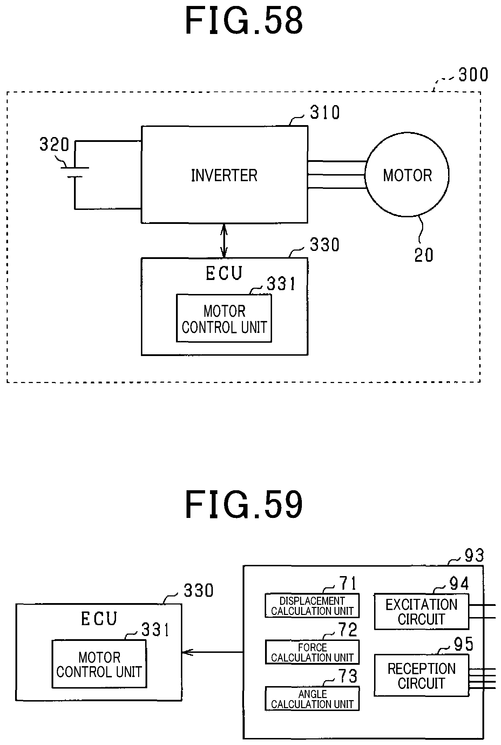

FIG. 58 illustrates the outline of a system installed in a vehicle 300.

The vehicle 300 includes an inverter 310, a storage battery 320 and a motor ECU 330. The inverter 310 includes series connection units the number of which is equal to the number of phases (e.g., three); each of the series connection units consists of an upper-arm switch and a lower-arm switch that are connected in series with each other. The motor ECU 330 includes a motor control unit 331 that controls switching of the upper-arm and lower-arm switches of the inverter 310, thereby converting DC power of the storage battery 320 into AC power and supplying the AC power to the stator coil 41 of the in-wheel motor 20. Consequently, the drive wheels of the vehicle 300 rotate, causing the vehicle 300 to travel.

As shown in FIG. 59, the displacement calculation unit 71, the force calculation unit 72 and the angle calculation unit 73 may be provided in the circuit unit 93. Specifically, the displacement calculation unit 71, the force calculation unit 72 and the angle calculation unit 73 may be provided, together with the excitation circuit 94 and the reception circuit 95, on a common control board of the circuit unit 93. The lateral force Fy and the like, which are calculated by the force calculation unit 72, are inputted to the motor ECU 330.

With the configuration shown in FIG. 59, it is easy to secure synchronization with the electrical angle θe in the calculation of the axial offset voltage and the like. Consequently, the accuracy of calculating the axial displacement voltage and thus the accuracy of calculating the lateral force Fy can be improved.

The axial displacement voltage may be a signal whose absolute value is very small. In this case, if the force calculation unit 72 is provided in the motor ECU 330, noise may be mixed into the axial displacement voltage during transmission of the axial displacement voltage from the circuit unit 93 to the motor ECU 330, thereby lowering the S/N ratio of the axial displacement voltage. Consequently, the accuracy of calculating the lateral force Fy may be lowered. In contrast, with the configuration shown in FIG. 59, the calculation process of the lateral force Fy is completed in the circuit unit 93; therefore, the accuracy of calculating the lateral force Fy can be improved.

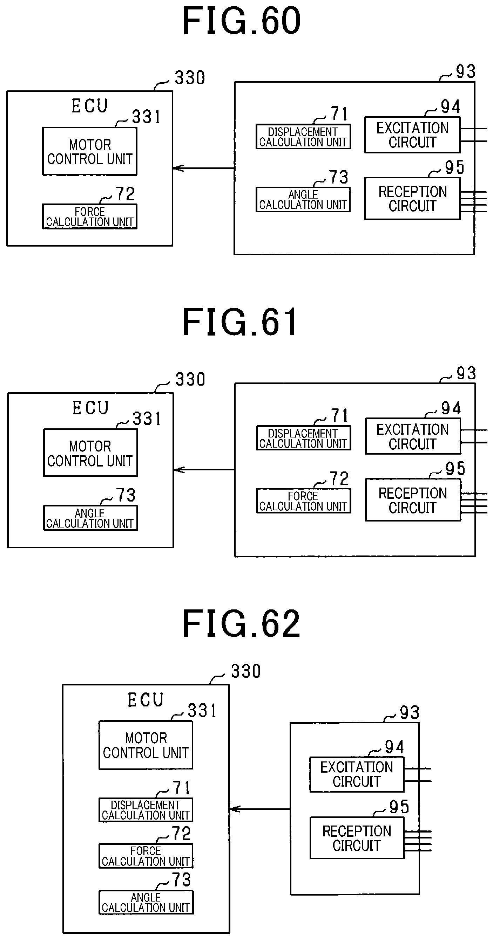

Instead of the configuration shown in FIG. 59, the configurations shown in FIGS. 60 to 62 may also be employed. In the configuration shown in FIG. 60, the force calculation unit 72 is provided in the motor ECU 330. In the configuration shown in FIG. 61, the angle calculation unit 73 is provided in the motor ECU 330. In the configuration shown in FIG. 62, the displacement calculation unit 71, the force calculation unit 72 and the angle calculation unit 73 are provided in the motor ECU 330.

By providing at least one of the displacement calculation unit 71, the force calculation unit 72 and the angle calculation unit 73 in the motor ECU 330, reduction in the size of the control board of the circuit unit 93 can be achieved.

### [Other Embodiments]

The above-described embodiments may be modified and implemented as follows.

In the first to third, fifth and sixth embodiments, the detection unit 90 may be provided at a position facing a lower end of the race part 80 in the axial direction. Moreover, the detection unit 90 may be arranged on the disc part 12 side with respect to the race part 80.

Nonmetal portions, which are formed of, for example, a synthetic resin, may be provided in the notches 82 shown in FIG. 2 or the openings 84 shown in FIG. 24. In this case, a configuration can be realized in which metal portions and nonmetal portions are provided alternately in the circumferential direction in the race part; with the configuration, the rotation angle can be detected in the same manner as in the first embodiment and the like.

The in-wheel motor 20 shown in FIG. 1 may not include the race part 80. In this case, for example, that part of the flat plate part 33 of the in-wheel motor 20 which faces the circuit unit 92 in the axial direction may have shielding portions and openings formed alternately in the circumferential direction, or have recessed portions and protruding portions formed alternately in the circumferential direction. In addition, in this case, the flat plate part 33 corresponds to the "rotating part for detection".

In the first, second, fifth and sixth embodiments, there may be only one reception coil formed to the board 91.

In the seventh to fourteenth embodiments, instead of the first and second reception coils 110 and 120 shown in FIG. 7, the first and second reception coils 130 and 140 shown in FIG. 29 and described in the second embodiment may be employed.

In the eighth to twelfth embodiments, the radially outer end of the second reception coil 120 may be located on the second concentric circle C2; and the radially inner end of the second reception coil 120 may be located on the third concentric circle C3 (see FIG. 12). In this case, the second envelope ENV2 based on the second output voltage signal v2 of the second reception coil 120 would not be influenced by the vertical load Fz.

The sensor for detecting displacement is not limited to the eddy current type sensor, but may alternatively be, for example, a sensor that detects displacement using a laser beam.

The bearing is not limited to the one in which the outer ring 51 is fixed to the stator base part 42 and the inner ring 52 is fixed to the wheel 10, but may alternatively be one in which an outer ring is fixed to the wheel 10 and an inner ring is fixed to the stator base part 42. In this case, the inner ring corresponds to the "first bearing member"; and the outer ring corresponds to the "second bearing member".

The motor is not limited to the one received in a vehicle wheel, but may alternatively be, for example, an on-board motor provided on the vehicle body. Moreover, the motor is not limited to the outer rotor type, but may alternatively be of an inner rotor type.

At least part of the detection unit 90 may be provided in contact with the race part 80.

The application of the detection apparatus is not limited to a vehicle wheel. Instead, the detection apparatus can be applied to any rotating object, such as an aircraft's propeller, a ship's screw, a rotating member (e.g., a crankshaft) of an internal combustion engine or a turbine for electric power generation. Moreover, the rotating object is not limited to being used with its axial direction coinciding with a horizontal direction, but may alternatively be used with its axial direction coinciding with a non-horizontal direction (e.g., the vertical direction).

The control unit and the control method described in the present disclosure may be realized by a dedicated computer that includes a processor, which is programmed to perform one or more functions embodied by a computer program, and a memory. As an alternative, the control unit and the control method described in the present disclosure may be realized by a dedicated computer that includes a processor configured with one or more dedicated hardware logic circuits. As another alternative, the control unit and the control method described in the present disclosure may be realized by one or more dedicated computers configured with a combination of a processor programmed to perform one or more functions, a memory and a processor configured with one or more dedicated hardware logic circuits. In addition, the computer program may be stored as computer-executable instructions in a computer-readable non-transitory tangible recording medium.

Hereinafter, characteristic configurations extracted from the above-described embodiments will be described.

### [First Configuration]

A detection apparatus comprising:
a base part (42); and
a bearing (50) configured to support a rotating object rotatably with respect to the base part, the bearing having an outer ring member (51), an inner ring member (52), and rolling elements (53) provided between the outer ring member and the inner ring member,
wherein
a first bearing member (52), which is one of the outer ring member and the inner ring member, is fixed to the rotating object, and
a second bearing member (51), which is the other of the outer ring member and the inner ring member, is fixed to the base part,
the detection apparatus further comprising:
   a discoid rotating part for detection (80, 83, 86) provided in such a manner as to rotate together with the first bearing member, the rotating part for detection extending radially outward of the bearing with respect to the first bearing member; and
   a displacement detection unit (90) provided at a position in the base part which is radially away from the bearing and faces the rotating part for detection in an axial direction of the bearing, the displacement detection unit being configured to output a voltage signal according to displacement of the rotating part for detection in the axial direction and displacement of the rotating part for detection in a direction perpendicular to the axial direction.

### [Second Configuration]

The detection apparatus according to the first configuration, wherein
in the rotating part for detection, there is formed, at a position radially away from the bearing, an annular detection target part (81, 82, 84, 85, 87, 88) that extends in a circumferential direction of the bearing,
the displacement detection unit includes:
   two planar reception coils (110, 120, 130, 140) fixed to the base part, located at a position facing an upper end or a lower end of the detection target part in the axial direction, and extending in a direction intersecting the axial direction; and
   an excitation coil (100) to which an AC excitation voltage is supplied,
   when the excitation voltage is supplied to the excitation coil, voltages are induced in the reception coils,
   in plan view of the reception coils, a radially outer end of one (120, 140) of the reception coils protrudes from a radially outer end (81a) of the detection target part,
   radial positions of the radially outer ends of the reception coils are different from each other, and
   each of the reception coils is configured to output a voltage signal according to the displacement of the rotating part for detection in the axial direction and the displacement of the rotating part for detection in the direction perpendicular to the axial direction.

### [Third Configuration]

The detection apparatus according to the second configuration, wherein
each of the reception coils (110, 120) has:
a first part (110A, 120A) that generates a voltage of a first polarity between two ends of the reception coil when the excitation voltage is supplied to the excitation coil; and
a second part (110B, 120B) that generates a voltage of a second polarity, which is opposite to the first polarity, between the two ends of the reception coil when the excitation voltage is supplied to the excitation coil,
each of the reception coils has:
   a configuration such that in plan view of the reception coil, the first part (120A) is located on one side of a circumferential center of the reception coil, the second part (120B) is located on the other side of the circumferential center, and the first part and the second part are aligned in the circumferential direction; or
   a configuration such that in plan view of the reception coil, shapes of the first part (110A) and the second part (110B) on one side of the circumferential center of the reception coil and shapes of the first part and the second part on the other side of the circumferential center are symmetrical with respect to the circumferential center,
   circumferential dimensions of the reception coils are equal to each other, and
   a radial dimension of the one (120) of the reception coils which has the radially outer end thereof protruding from the radially outer end of the detection target part is greater than a radial dimension of the other of the reception coils.

### [Fourth Configuration]

The detection apparatus according to the second configuration, wherein
each of the reception coils (130, 140) has:
a first part (130A, 140A) that generates a voltage of a first polarity between two ends of the reception coil when the excitation voltage is supplied to the excitation coil; and
a second part (130B, 140B) that generates a voltage of a second polarity, which is opposite to the first polarity, between the two ends of the reception coil when the excitation voltage is supplied to the excitation coil,
each of the reception coils has:
   a configuration such that in plan view of the reception coil, the first part (140A) is located on one side of a circumferential center of the reception coil, the second part (140B) is located on the other side of the circumferential center, and the first part and the second part are aligned in the circumferential direction; or
   a configuration such that in plan view of the reception coil, shapes of the first part (130A) and the second part (130B) on one side of the circumferential center of the reception coil and shapes of the first part and the second part on the other side of the circumferential center are symmetrical with respect to the circumferential center,
   circumferential dimensions of the reception coils are equal to each other, and
   radial dimensions of the reception coils are also equal to each other.

### [Fifth Configuration]

The detection apparatus according to the first configuration, wherein
in the rotating part for detection, there is formed, at a position radially away from the bearing, an annular detection target part (81, 82, 84, 85, 87, 88) that extends in a circumferential direction of the bearing,
the displacement detection unit includes:
   a planar reception coil (150) fixed to the base part, located at a position facing an end of the detection target part in the axial direction, and extending in a direction intersecting the axial direction; and
   an excitation coil (100) to which an AC excitation voltage is supplied,
   the reception coil has:
      a first part (150A) that generates a voltage of a first polarity between two ends of the reception coil when the excitation voltage is supplied to the excitation coil; and
      a second part (150B) that generates a voltage of a second polarity, which is opposite to the first polarity, between the two ends of the reception coil when the excitation voltage is supplied to the excitation coil,
      the reception coil has:
         a configuration such that in plan view of the reception coil, the first part is located on one side of a circumferential center of the reception coil, the second part is located on the other side of the circumferential center, and the first part and the second part are aligned in the circumferential direction; or
         a configuration such that in plan view of the reception coil, shapes of the first part and the second part on one side of the circumferential center of the reception coil and shapes of the first part and the second part on the other side of the circumferential center are symmetrical with respect to the circumferential center,
         a circumferential dimension of the first part is equal to a circumferential dimension of the second part,
         a radial dimension of one of the first and second parts is greater than a radial dimension of the other of the first and second parts,
         in plan view of the reception coil, a radially outer end of that one of the first and second parts which has the greater radial dimension protrudes from a radially outer end (81a) of the detection target part,
         radial positions of the radially outer ends of the first and second parts are different from each other, and
         the reception coil is configured to output a voltage signal according to the displacement of the rotating part for detection in the axial direction and the displacement of the rotating part for detection in the direction perpendicular to the axial direction.

### [Sixth Configuration]

The detection apparatus according to any one of the second to fifth configurations, wherein
the rotating object is arranged so that a center of rotation thereof is in a horizontal state, and
the detection apparatus further comprises a displacement calculation unit (71) configured to calculate, based on the voltage signal outputted from each reception coil, both the displacement of the rotating part for detection in the axial direction and the displacement of the rotating part for detection in a vertical direction that is the direction perpendicular to the axial direction.

### [Seventh Configuration]

The detection apparatus according to the sixth configuration, further comprising a force calculation unit (72) configured to:
calculate, based on the calculated displacement in the axial direction, an axial force acting on the rotating object; and
calculate, based on the calculated displacement in the vertical direction, a vertical load acting on the rotating object.

### [Eighth Configuration]

The detection apparatus according to the first configuration, wherein
in the rotating part for detection, there is formed, at a position radially away from the bearing, an annular detection target part (81, 82, 84, 85, 87, 88) that extends in a circumferential direction of the bearing,
the displacement detection unit includes:
   a planar reception coil (110, 120, 130, 140, 150) fixed to the base part, located at a position facing the detection target part in the axial direction, and extending in a direction intersecting the axial direction; and
   an excitation coil (100) to which an AC excitation voltage is supplied,
   the reception coil has:
      a first part (110A, 120A, 130A, 140A, 150A) that generates a voltage of a first polarity between two ends of the reception coil when the excitation voltage is supplied to the excitation coil; and
      a second part (110B, 120B, 130B, 140B, 150B) that generates a voltage of a second polarity, which is opposite to the first polarity, between the two ends of the reception coil when the excitation voltage is supplied to the excitation coil,
      the reception coil has:
         a configuration such that in plan view of the reception coil, the first part is located on one side of a circumferential center of the reception coil, the second part is located on the other side of the circumferential center, and the first part and the second part are aligned in the circumferential direction; or
         a configuration such that in plan view of the reception coil, shapes of the first part and the second part on one side of the circumferential center of the reception coil and shapes of the first part and the second part on the other side of the circumferential center are symmetrical with respect to the circumferential center,
         the reception coil is provided astride a horizontal axis that passes through a central axis of rotation of the rotating part for detection, and
         the reception coil is configured to output a voltage signal according to the displacement of the rotating part for detection in the axial direction and the displacement of the rotating part for detection in the direction perpendicular to the axial direction.

### [Ninth Configuration]

The detection apparatus according to the eighth configuration, wherein
the rotating object is arranged so that a center of rotation thereof is in a horizontal state, and
the detection apparatus further comprises a displacement calculation unit (71) configured to calculate, based on the voltage signal outputted from the reception coil, both the displacement of the rotating part for detection in the axial direction and the displacement of the rotating part for detection in a forward/backward direction that is perpendicular to both the axial direction and a vertical direction.

### [Tenth Configuration]

The detection apparatus according to the ninth configuration, further comprising a force calculation unit (72) configured to:
calculate, based on the calculated displacement in the axial direction, an axial force acting on the rotating object; and
calculate, based on the calculated displacement in the forward/backward direction, a forward/backward force acting on the rotating object.

### [Eleventh Configuration]

The detection apparatus according to the first configuration, wherein
the rotating object is arranged so that a center of rotation thereof is in a horizontal state,
in the rotating part for detection, there is formed, at a position radially away from the bearing, an annular detection target part (81, 82, 84, 85, 87, 88) that extends in a circumferential direction of the bearing,
the displacement detection unit includes:
   two planar reception coils (110, 120, 130, 140) fixed to the base part, located at a position facing the detection target part in the axial direction, and extending in a direction intersecting the axial direction; and
   an excitation coil (100) to which an AC excitation voltage is supplied,
   each of the reception coils has:
      a first part (110A, 120A, 130A, 140A) that generates a voltage of a first polarity between two ends of the reception coil when the excitation voltage is supplied to the excitation coil; and
      a second part (110B, 120B, 130B, 140B) that generates a voltage of a second polarity, which is opposite to the first polarity, between the two ends of the reception coil when the excitation voltage is supplied to the excitation coil,
      each of the reception coils has:
         a configuration such that in plan view of the reception coil, the first part is located on one side of a circumferential center of the reception coil, the second part is located on the other side of the circumferential center, and the first part and the second part are aligned in the circumferential direction; or
         a configuration such that in plan view of the reception coil, shapes of the first part and the second part on one side of the circumferential center of the reception coil and shapes of the first part and the second part on the other side of the circumferential center are symmetrical with respect to the circumferential center,
         each of the reception coils is provided astride a horizontal axis that passes through a central axis of rotation of the rotating part for detection, and
         each of the reception coils is configured to output a voltage signal according to the displacement of the rotating part for detection in the axial direction and a voltage signal according to the displacement of the rotating part for detection in a forward/backward direction that is perpendicular to both the axial direction and a vertical direction.

### [Twelfth Configuration]

The detection apparatus according to any one of the third, fourth and eleventh configurations, further comprising:
a signal acquisition unit (161) configured to acquire an envelope (ENV1) of the voltage signal (v1) outputted from one of the reception coils;
an offset voltage calculation unit (160) configured to calculate, based on rotation angle information of the rotating part for detection, an axial offset voltage (vofty) that represents the envelope in a reference state; and
a displacement voltage calculation unit (161) configured to calculate an axial displacement voltage (vdy) by subtracting the calculated axial offset voltage from the acquired envelope.

### [Thirteenth Configuration]

The detection apparatus according to the twelfth configuration, further comprising a force calculation unit (72) configured to calculate, based on the calculated axial displacement voltage, an axial force (Fy) acting on the rotating object.

### [Fourteenth Configuration]

The detection apparatus according to any one of the third, fourth and eleventh configurations, wherein
the two reception coils are a first reception coil (110, 130) and a second reception coil (120, 140),
the detection apparatus further comprising:
   a signal acquisition unit (163) configured to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation unit (162) configured to calculate, based on rotation angle information of the rotating part for detection, both a first axial offset voltage (vofty1) that represents the first envelope in a reference state and a second axial offset voltage (vofty2) that represents the second envelope in the reference state;
   a displacement voltage calculation unit (163) configured to calculate a first axial displacement voltage (vdy1) by subtracting the calculated first axial offset voltage from the acquired first envelope and calculate a second axial displacement voltage (vdy2) by subtracting the calculated second axial offset voltage from the acquired second envelope; and
   a total voltage calculation unit (164) configured to calculate a total voltage (vdty) by adding together an absolute value of the calculated first axial displacement voltage and an absolute value of the calculated second axial displacement voltage.

### [Fifteenth Configuration]

The detection apparatus according to the fourteenth configuration, further comprising a force calculation unit (72) configured to calculate, based on the calculated total voltage, an axial force (Fy) acting on the rotating object.

### [Sixteenth Configuration]

The detection apparatus according to any one of the third, fourth and eleventh configurations, wherein
the two reception coils are a first reception coil (110, 130) and a second reception coil (120, 140),
the detection apparatus further comprising:
   a signal acquisition unit (163) configured to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation unit (162) configured to calculate, based on rotation angle information of the rotating part for detection, both a first axial offset voltage (vofty1) that represents the first envelope in a reference state and a second axial offset voltage (vofty2) that represents the second envelope in the reference state;
   a displacement voltage calculation unit (163) configured to calculate a first axial displacement voltage (vdy1) by subtracting the calculated first axial offset voltage from the acquired first envelope and calculate a second axial displacement voltage (vdy2) by subtracting the calculated second axial offset voltage from the acquired second envelope; and
   a force calculation unit (72) configured to calculate, based on the calculated first axial displacement voltage, a first axial force (Fy1) that represents an axial force acting on the rotating object and calculate, based on the calculated second axial displacement voltage, a second axial force (Fy2) that also represents the axial force acting on the rotating object,
   wherein
   the force calculation unit calculates the first axial force as the axial force acting on the rotating object during a period when the first axial offset voltage is higher than the second axial offset voltage, and calculates the second axial force as the axial force acting on the rotating object during a period when the second axial offset voltage is higher than the first axial offset voltage.

### [Seventeenth Configuration]

The detection apparatus according to any one of the third, fourth and eleventh configurations, wherein
the two reception coils are a first reception coil (110, 130) and a second reception coil (120, 140),
the detection apparatus further comprising:
   a signal acquisition unit (163) configured to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation unit (162) configured to calculate, based on rotation angle information of the rotating part for detection, both a first axial offset voltage (vofty1) that represents the first envelope in a reference state and a second axial offset voltage (vofty2) that represents the second envelope in the reference state;
   a displacement voltage calculation unit (163) configured to calculate a first axial displacement voltage (vdy1) by subtracting the calculated first axial offset voltage from the acquired first envelope and calculate a second axial displacement voltage (vdy2) by subtracting the calculated second axial offset voltage from the acquired second envelope; and
   a force calculation unit (72) configured to calculate, during a period when the first axial offset voltage is higher than the second axial offset voltage, an axial force (Fy) acting on the rotating object based on the first axial displacement voltage and calculate, during a period when the second axial offset voltage is higher than the first axial offset voltage, the axial force acting on the rotating object based on the second axial displacement voltage.

### [Eighteenth Configuration]

The detection apparatus according to the third or fourth configuration, wherein
the two reception coils are a first reception coil (110, 130) and a second reception coil (120, 140),
the detection apparatus further comprising:
   a signal acquisition unit (169) configured to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation unit (168) configured to calculate, based on rotation angle information of the rotating part for detection, both an axial offset voltage (vofty) that represents the first envelope in a reference state and a vertical offset voltage (voftz) that represents the second envelope in the reference state; and
   a displacement voltage calculation unit (169),
   wherein
   the displacement voltage calculation unit is configured to:
      calculate an axial displacement voltage (vdy) by subtracting the calculated axial offset voltage from the acquired first envelope;
      calculate, based on the calculated axial displacement voltage, a vertical correction voltage (vcz) that quantifies an effect of the displacement of the rotating part for detection in the axial direction on the second envelope; and
      calculate a vertical displacement voltage (vdz) by subtracting both the calculated vertical offset voltage and the calculated vertical correction voltage from the acquired second envelope.

### [Nineteenth Configuration]

The detection apparatus according to the eighteenth configuration, further comprising a force calculation unit (72) configured to:
calculate, based on the calculated axial displacement voltage, an axial force (Fy) acting on the rotating object; and
calculate, based on the calculated vertical displacement voltage, a vertical load (Fz) acting on the rotating object.

### [Twentieth Configuration]

The detection apparatus according to the eleventh configuration, wherein
the two reception coils are a first reception coil (110, 130) and a second reception coil (120, 140),
the detection apparatus further comprising:
   a signal acquisition unit (171) configured to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation unit (170) configured to calculate, based on rotation angle information of the rotating part for detection, both an axial offset voltage (vofty) that represents the first envelope in a reference state and a forward/backward offset voltage (voftx) that represents the second envelope in the reference state; and
   a displacement voltage calculation unit (171),
   wherein
   the displacement voltage calculation unit is configured to:
      calculate an axial displacement voltage (vdy) by subtracting the calculated axial offset voltage from the acquired first envelope;
      calculate, based on the calculated axial displacement voltage, a forward/backward correction voltage (vcx) that quantifies an effect of the displacement of the rotating part for detection in the axial direction on the second envelope; and
      calculate a forward/backward displacement voltage (vdx) by subtracting both the calculated forward/backward offset voltage and the calculated forward/backward correction voltage from the acquired second envelope.

### [Twenty-first Configuration]

The detection apparatus according to the twentieth configuration, further comprising a force calculation unit (72) configured to:
calculate, based on the calculated axial displacement voltage, an axial force (Fy) acting on the rotating object; and
calculate, based on the calculated forward/backward displacement voltage, a forward/backward force (Fx) acting on the rotating object.

### [Twenty-second Configuration]

The detection apparatus according to any one of the twelfth to twenty-first configurations, further comprising a filter unit (172) configured to perform a low-pass filter process on the acquired envelope, wherein
to the displacement voltage calculation unit, there is inputted the envelope that has been subjected to the low-pass filter process.

### [Twenty-third Configuration]

The detection apparatus according to any one of the third, fourth and eleventh configurations, further comprising:
a signal acquisition unit (172) configured to acquire an envelope (ENV1) of the voltage signal (v1) outputted from one of the reception coils;
an amplitude information calculation unit (174) configured to calculate, based on rotation angle information of the rotating part for detection and the acquired envelope, an amplitude information voltage (vmaxy) of the envelope; and
a displacement voltage calculation unit (175) configured to calculate an axial displacement voltage (vdy) by subtracting a reference voltage (vmaxofty), which represents the amplitude information voltage in a reference state, from the calculated amplitude information voltage.

### [Twenty-fourth Configuration]

The detection apparatus according to the twenty-third configuration, further comprising a force calculation unit (72) configured to calculate, based on the calculated axial displacement voltage, an axial force (Fy) acting on the rotating object.

### [Twenty-fifth Configuration]

The detection apparatus according to any one of the second to twenty-fourth configurations, wherein
the detection target part has:
a configuration in which metal portions (81) and portions (82) penetrated in the axial direction are provided alternately in the circumferential direction;
a configuration in which recessed portions (88) that are recessed in the axial direction and protruding portions (87) that protrude in the axial direction with respect to the recessed portions are provided alternately in the circumferential direction; or
a configuration in which metal portions and nonmetal portions are provided alternately in the circumferential direction,
the detection apparatus further comprises an angle calculation unit (73) configured to calculate, based on the voltage signal outputted from each reception coil, a rotation angle of the rotating part for detection.

### [Twenty-sixth Configuration]

A program applicable to the detection apparatus according to any one of the third, fourth and eleventh configurations, the program being configured to cause a computer (70) provided in the detection apparatus to execute:
a signal acquisition process to acquire an envelope (ENV1) of the voltage signal (v1) outputted from one of the reception coils;
an offset voltage calculation process to calculate, based on rotation angle information of the rotating part for detection, an axial offset voltage (vofty) that represents the envelope in a reference state; and
a displacement voltage calculation process to calculate an axial displacement voltage (vdy) by subtracting the calculated axial offset voltage from the acquired envelope.

### [Twenty-seventh Configuration]

A program applicable to the detection apparatus according to any one of the third, fourth and eleventh configurations, wherein
the two reception coils are a first reception coil (110, 130) and a second reception coil (120, 140),
the program being configured to cause a computer provided in the detection apparatus to execute:
   a signal acquisition process to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation process to calculate, based on rotation angle information of the rotating part for detection, both a first axial offset voltage (vofty1) that represents the first envelope in a reference state and a second axial offset voltage (vofty2) that represents the second envelope in the reference state;
   a displacement voltage calculation process to calculate a first axial displacement voltage (vdy1) by subtracting the calculated first axial offset voltage from the acquired first envelope and calculate a second axial displacement voltage (vdy2) by subtracting the calculated second axial offset voltage from the acquired second envelope; and
   a total voltage calculation process to calculate a total voltage (vdty) by adding together an absolute value of the calculated first axial displacement voltage and an absolute value of the calculated second axial displacement voltage.

### [Twenty-eighth Configuration]

A program applicable to the detection apparatus according to any one of the third, fourth and eleventh configurations, wherein
the two reception coils are a first reception coil (110, 130) and a second reception coil (120, 140),
the program being configured to cause a computer provided in the detection apparatus to execute:
   a signal acquisition process to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation process to calculate, based on rotation angle information of the rotating part for detection, both a first axial offset voltage (vofty1) that represents the first envelope in a reference state and a second axial offset voltage (vofty2) that represents the second envelope in the reference state;
   a displacement voltage calculation process to calculate a first axial displacement voltage (vdy1) by subtracting the calculated first axial offset voltage from the acquired first envelope and calculate a second axial displacement voltage (vdy2) by subtracting the calculated second axial offset voltage from the acquired second envelope; and
   a force calculation process to calculate, based on the calculated first axial displacement voltage, a first axial force (Fy1) that represents an axial force acting on the rotating object and calculate, based on the calculated second axial displacement voltage, a second axial force (Fy2) that also represents the axial force acting on the rotating object,
   wherein
   in the force calculation process:
      the first axial force is calculated, as the axial force acting on the rotating object, during a period when the first axial offset voltage is higher than the second axial offset voltage; and
      the second axial force is calculated, as the axial force acting on the rotating object, during a period when the second axial offset voltage is higher than the first axial offset voltage.

### [Twenty-ninth Configuration]

A program applicable to the detection apparatus according to any one of the third, fourth and eleventh configurations, wherein
the two reception coils are a first reception coil (110, 130) and a second reception coil (120, 140),
the program being configured to cause a computer provided in the detection apparatus to execute:
   a signal acquisition process to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation process to calculate, based on rotation angle information of the rotating part for detection, both a first axial offset voltage (vofty1) that represents the first envelope in a reference state and a second axial offset voltage (vofty2) that represents the second envelope in the reference state;
   a displacement voltage calculation process to calculate a first axial displacement voltage (vdy1) by subtracting the calculated first axial offset voltage from the acquired first envelope and calculate a second axial displacement voltage (vdy2) by subtracting the calculated second axial offset voltage from the acquired second envelope; and
   a force calculation process to calculate, during a period when the first axial offset voltage is higher than the second axial offset voltage, an axial force (Fy) acting on the rotating object based on the first axial displacement voltage and calculate, during a period when the second axial offset voltage is higher than the first axial offset voltage, the axial force acting on the rotating object based on the second axial displacement voltage.

### [Thirtieth Configuration]

A program applicable to the detection apparatus according to the third or fourth configuration, wherein
the two reception coils are a first reception coil (110, 130) and a second reception coil (120, 140),
the program being configured to cause a computer provided in the detection apparatus to execute:
   a signal acquisition process to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation process to calculate, based on rotation angle information of the rotating part for detection, both an axial offset voltage (vofty) that represents the first envelope in a reference state and a vertical offset voltage (voftz) that represents the second envelope in the reference state; and
   a displacement voltage calculation process,
   wherein
   in the displacement voltage calculation process:
      an axial displacement voltage (vdy) is calculated by subtracting the calculated axial offset voltage from the acquired first envelope;
      a vertical correction voltage (vcz), which quantifies an effect of the displacement of the rotating part for detection in the axial direction on the second envelope, is calculated based on the calculated axial displacement voltage; and
      a vertical displacement voltage (vdz) is calculated by subtracting both the calculated vertical offset voltage and the calculated vertical correction voltage from the acquired second envelope.

### [Thirty-first Configuration]

A program applicable to the detection apparatus according to the eleventh configuration, wherein
the two reception coils are a first reception coil (110, 130) and a second reception coil (120, 140),
the program being configured to cause a computer provided in the detection apparatus to execute:
   a signal acquisition process to acquire both a first envelope (ENV1) that is an envelope of a first voltage signal (v1) outputted from the first reception coil and a second envelope (ENV2) that is an envelope of a second voltage signal (v2) outputted from the second reception coil;
   an offset voltage calculation process to calculate, based on rotation angle information of the rotating part for detection, both an axial offset voltage (vofty) that represents the first envelope in a reference state and a forward/backward offset voltage (voftx) that represents the second envelope in the reference state; and
   a displacement voltage calculation process,
   wherein
   in the displacement voltage calculation process:
      an axial displacement voltage (vdy) is calculated by subtracting the calculated axial offset voltage from the acquired first envelope;
      a forward/backward correction voltage (vcx), which quantifies an effect of the displacement of the rotating part for detection in the axial direction on the second envelope, is calculated based on the calculated axial displacement voltage; and
      a forward/backward displacement voltage (vdx) is calculated by subtracting both the calculated forward/backward offset voltage and the calculated forward/backward correction voltage from the acquired second envelope.

### [Thirty-second Configuration]

A program applicable to the detection apparatus according to any one of the third, fourth and eleventh configurations, the program being configured to cause a computer provided in the detection apparatus to execute:
a signal acquisition process to acquire an envelope (ENV1) of the voltage signal (v1) outputted from one of the reception coils;
an amplitude information calculation process to calculate, based on rotation angle information of the rotating part for detection and the acquired envelope, an amplitude information voltage (vmaxy) of the envelope; and
a displacement voltage calculation process to calculate an axial displacement voltage (vdy) by subtracting a reference voltage (vmaxofty), which represents the amplitude information voltage in a reference state, from the calculated amplitude information voltage.

While the present disclosure has been described pursuant to the above embodiments, it should be appreciated that the present disclosure is not limited to the embodiments and the structures, i.e. various modifications and changes can be made within the scope of the present invention as defined by the appended claims.

## Claims

1. A detection apparatus comprising:
a base part (42); and
a bearing (50) configured to support a rotating object rotatably with respect to the base part (42), the bearing (50) having an outer ring member (51), an inner ring member (52), and rolling elements (53) provided between the outer ring member (51) and the inner ring member (52),
wherein
a first bearing member (52), which is one of the outer ring member (51) and the inner ring member (52), is fixed to the rotating object, and
a second bearing member (51), which is the other of the outer ring member (42) and the inner ring member (52), is fixed to the base part (42),
the detection apparatus further comprising:
a discoid rotating part (80, 83, 86) for detection provided in such a manner as to rotate together with the first bearing member (52), the rotating part (80, 83, 86) for detection extending radially outward of the bearing (50) with respect to the first bearing member (52); and
a displacement detection unit (90) which faces the rotating part (80, 83, 86) for detection in an axial direction of the bearing (50), the displacement detection unit (90) being configured to output a voltage signal according to displacement of the rotating part (80, 83, 86) for detection in the axial direction and displacement of the rotating part (80, 83, 86) for detection in a direction perpendicular to the axial direction,
**characterized in that**
the displacement detection unit (90) is provided at a position in the base part (42) which is radially away from the bearing (50),
in the rotating part (80, 83, 86) for detection, there is formed, at a position radially away from the bearing (50), an annular detection target part (81, 82, 84, 85, 87, 88) that extends in a circumferential direction of the bearing (50),
the displacement detection unit (90) includes:
two planar reception coils (110, 120, 130, 140) fixed to the base part (42), located at a position facing an upper end or a lower end of the detection target part (81, 82, 84, 85, 87, 88) in the axial direction, and extending in a direction intersecting the axial direction; and
an excitation coil (100) to which an AC excitation voltage is supplied,
when the excitation voltage is supplied to the excitation coil (100), voltages are induced in the reception coils (110, 120, 130, 140),
in plan view of the reception coils (110, 120, 130, 140), a radially outer end of one (120, 140) of the reception coils (110, 120, 130, 140) protrudes from a radially outer end (81a) of the detection target part (81, 82, 84, 85, 87, 88),
radial positions of the radially outer ends of the reception coils (110, 120, 130, 140) are different from each other, and
each of the reception coils (110, 120, 130, 140) is configured to output a voltage signal according to the displacement of the rotating part (80, 83, 86) for detection in the axial direction and the displacement of the rotating part (80, 83, 86) for detection in the direction perpendicular to the axial direction.

2. The detection apparatus as set forth in Claim 1, wherein
each of the reception coils (110, 120) has:
a first part (110A, 120A) that generates a voltage of a first polarity between two ends of the reception coil (110, 120) when the excitation voltage is supplied to the excitation coil (100); and
a second part (110B, 120B) that generates a voltage of a second polarity, which is opposite to the first polarity, between the two ends of the reception coil (110, 120) when the excitation voltage is supplied to the excitation coil (100),
each of the reception coils (110, 120) has:
a configuration such that in plan view of the reception coil (110, 120), the first part (120A) is located on one side of a circumferential center of the reception coil (110, 120), the second part (120B) is located on the other side of the circumferential center, and the first part (120A) and the second part (120B) are aligned in the circumferential direction; or
a configuration such that in plan view of the reception coil (110, 120), shapes of the first part (110A) and the second part (110B) on one side of the circumferential center of the reception coil (110, 120) and shapes of the first part (120A) and the second part (120B) on the other side of the circumferential center are symmetrical with respect to the circumferential center,
circumferential dimensions of the reception coils (110, 120) are equal to each other, and
a radial dimension of the one (120) of the reception coils (110, 120) which has the radially outer end thereof protruding from the radially outer end (81a) of the detection target part (81, 82, 84, 85, 87, 88) is greater than a radial dimension of the other of the reception coils (110, 120).

3. The detection apparatus as set forth in Claim 1, wherein
each of the reception coils (130, 140) has:
a first part (130A, 140A) that generates a voltage of a first polarity between two ends of the reception coil (130, 140) when the excitation voltage is supplied to the excitation coil (100); and
a second part (130B, 140B) that generates a voltage of a second polarity, which is opposite to the first polarity, between the two ends of the reception coil (130, 140) when the excitation voltage is supplied to the excitation coil (100),
each of the reception coils (130, 140) has:
a configuration such that in plan view of the reception coil (130, 140), the first part (130A, 140A) is located on one side of a circumferential center of the reception coil (130, 140), the second part (130B, 140B) is located on the other side of the circumferential center, and the first part (130A, 140A) and the second part (130B, 140B) are aligned in the circumferential direction; or
a configuration such that in plan view of the reception coil (130, 140), shapes of the first part (130A, 140A) and the second part (130B, 140B) on one side of the circumferential center of the reception coil (130, 140) and shapes of the first part (130A, 140A) and the second part (130B, 140B) on the other side of the circumferential center are symmetrical with respect to the circumferential center,
circumferential dimensions of the reception coils (130, 140) are equal to each other, and
radial dimensions of the reception coils (130, 140) are also equal to each other.

4. A detection apparatus comprising:
a base part (42); and
a bearing (50) configured to support a rotating object rotatably with respect to the base part (42), the bearing (50) having an outer ring member (51), an inner ring member (52), and rolling elements (53) provided between the outer ring member (51) and the inner ring member (52),
wherein
a first bearing member (52), which is one of the outer ring member (51) and the inner ring member (52), is fixed to the rotating object, and
a second bearing member (51), which is the other of the outer ring member (42) and the inner ring member (52), is fixed to the base part (42),
the detection apparatus further comprising:
a discoid rotating part (80, 83, 86) for detection provided in such a manner as to rotate together with the first bearing member (52), the rotating part (80, 83, 86) for detection extending radially outward of the bearing (50) with respect to the first bearing member (52); and
a displacement detection unit (90) which faces the rotating part (80, 83, 86) for detection in an axial direction of the bearing (50), the displacement detection unit (90) being configured to output a voltage signal according to displacement of the rotating part (80, 83, 86) for detection in the axial direction and displacement of the rotating part (80, 83, 86) for detection in a direction perpendicular to the axial direction,
**characterized in that**
the displacement detection unit (90) is provided at a position in the base part (42) which is radially away from the bearing (50),
in the rotating part (80, 83, 86) for detection, there is formed, at a position radially away from the bearing (50), an annular detection target part (81, 82, 84, 85, 87, 88) that extends in a circumferential direction of the bearing (50),
the displacement detection unit (90) includes:
a planar reception coil (150) fixed to the base part (42), located at a position facing an end of the detection target part (81, 82, 84, 85, 87, 88) in the axial direction, and extending in a direction intersecting the axial direction; and
an excitation coil (100) to which an AC excitation voltage is supplied,
the reception coil (150) has:
a first part (150A) that generates a voltage of a first polarity between two ends of the reception coil (150) when the excitation voltage is supplied to the excitation coil (100); and
a second part (150B) that generates a voltage of a second polarity, which is opposite to the first polarity, between the two ends of the reception coil (150) when the excitation voltage is supplied to the excitation coil (100),
the reception coil (150) has:
a configuration such that in plan view of the reception coil (150), the first part (150A) is located on one side of a circumferential center of the reception coil (150), the second part (150B) is located on the other side of the circumferential center, and the first part (150A) and the second part (150B) are aligned in the circumferential direction; or
a configuration such that in plan view of the reception coil (150), shapes of the first part (150A) and the second part (150B) on one side of the circumferential center of the reception coil (150) and shapes of the first part (150A) and the second part (150B) on the other side of the circumferential center are symmetrical with respect to the circumferential center,
a circumferential dimension of the first part (150A) is equal to a circumferential dimension of the second part (150B),
a radial dimension of one of the first and second parts (150A, 150B) is greater than a radial dimension of the other of the first and second parts (150A, 150B),
in plan view of the reception coil (150), a radially outer end of that one of the first and second parts (150A, 150B) which has the greater radial dimension protrudes from a radially outer end (81a) of the detection target part (81, 82, 84, 85, 87, 88),
radial positions of the radially outer ends of the first and second parts (150A, 150B) are different from each other, and
the reception coil (150) is configured to output a voltage signal according to the displacement of the rotating part (80, 83, 86) for detection in the axial direction and the displacement of the rotating part (80, 83, 86) for detection in the direction perpendicular to the axial direction.

5. The detection apparatus as set forth in any one of Claims 1 to 4, wherein
the rotating object is arranged so that a center of rotation thereof is in a horizontal state, and
the detection apparatus further comprises a displacement calculation unit (71) configured to calculate, based on the voltage signal outputted from each reception coil (110, 120, 130, 140, 150), both the displacement of the rotating part (80, 83, 86) for detection in the axial direction and the displacement of the rotating part (80, 83, 86) for detection in a vertical direction that is the direction perpendicular to the axial direction.

6. The detection apparatus as set forth in Claim 5, further comprising a force calculation unit (72) configured to:
calculate, based on the calculated displacement in the axial direction, an axial force (Fy) acting on the rotating object; and
calculate, based on the calculated displacement in the vertical direction, a vertical load (Fz) acting on the rotating object.

7. A detection apparatus comprising:
a base part (42); and
a bearing (50) configured to support a rotating object rotatably with respect to the base part (42), the bearing (50) having an outer ring member (51), an inner ring member (52), and rolling elements (53) provided between the outer ring member (51) and the inner ring member (52),
wherein
a first bearing member (52), which is one of the outer ring member (51) and the inner ring member (52), is fixed to the rotating object, and
a second bearing member (51), which is the other of the outer ring member (42) and the inner ring member (52), is fixed to the base part (42),
the detection apparatus further comprising:
a discoid rotating part (80, 83, 86) for detection provided in such a manner as to rotate together with the first bearing member (52), the rotating part (80, 83, 86) for detection extending radially outward of the bearing (50) with respect to the first bearing member (52); and
a displacement detection unit (90) which faces the rotating part (80, 83, 86) for detection in an axial direction of the bearing (50), the displacement detection unit (90) being configured to output a voltage signal according to displacement of the rotating part (80, 83, 86) for detection in the axial direction and displacement of the rotating part (80, 83, 86) for detection in a direction perpendicular to the axial direction,
**characterized in that**
the displacement detection unit (90) is provided at a position in the base part (42) which is radially away from the bearing (50),
in the rotating part (80, 83, 86) for detection, there is formed, at a position radially away from the bearing (50), an annular detection target part (81, 82, 84, 85, 87, 88) that extends in a circumferential direction of the bearing (50),
the displacement detection unit (90) includes:
a planar reception coil (110, 120, 130, 140, 150) fixed to the base part (42), located at a position facing the detection target part (81, 82, 84, 85, 87, 88) in the axial direction, and extending in a direction intersecting the axial direction; and
an excitation coil (100) to which an AC excitation voltage is supplied,
the reception coil (110, 120, 130, 140, 150) has:
a first part (110A, 120A, 130A, 140A, 150A) that generates a voltage of a first polarity between two ends of the reception coil (110, 120, 130, 140, 150) when the excitation voltage is supplied to the excitation coil (100); and
a second part (110B, 120B, 130B, 140B, 150B) that generates a voltage of a second polarity, which is opposite to the first polarity, between the two ends of the reception coil (110, 120, 130, 140, 150) when the excitation voltage is supplied to the excitation coil (100),
the reception coil (110, 120, 130, 140, 150) has:
a configuration such that in plan view of the reception coil (110, 120, 130, 140, 150), the first part (110A, 120A, 130A, 140A, 150A) is located on one side of a circumferential center of the reception coil (110, 120, 130, 140, 150), the second part (110B, 120B, 130B, 140B, 150B) is located on the other side of the circumferential center, and the first part (110A, 120A, 130A, 140A, 150A) and the second part (110B, 120B, 130B, 140B, 150B) are aligned in the circumferential direction; or
a configuration such that in plan view of the reception coil (110, 120, 130, 140, 150), shapes of the first part (110A, 120A, 130A, 140A, 150A) and the second part (110B, 120B, 130B, 140B, 150B) on one side of the circumferential center of the reception coil (110, 120, 130, 140, 150) and shapes of the first part (110A, 120A, 130A, 140A, 150A) and the second part (110B, 120B, 130B, 140B, 150B) on the other side of the circumferential center are symmetrical with respect to the circumferential center,
the reception coil (110, 120, 130, 140, 150) is provided astride a horizontal axis that passes through a central axis of rotation of the rotating part (80, 83, 86) for detection, and
the reception coil (110, 120, 130, 140, 150) is configured to output a voltage signal according to the displacement of the rotating part (80, 83, 86) for detection in the axial direction and the displacement of the rotating part (80, 83, 86) for detection in the direction perpendicular to the axial direction.

8. The detection apparatus as set forth in Claim 7, wherein
the rotating object is arranged so that a center of rotation thereof is in a horizontal state, and
the detection apparatus further comprises a displacement calculation unit (71) configured to calculate, based on the voltage signal outputted from the reception coil (110, 120, 130, 140, 150), both the displacement of the rotating part (80, 83, 86) for detection in the axial direction and the displacement of the rotating part (80, 83, 86) for detection in a forward/backward direction that is perpendicular to both the axial direction and a vertical direction.

9. The detection apparatus as set forth in Claim 8, further comprising a force calculation unit (72) configured to:
calculate, based on the calculated displacement in the axial direction, an axial force (Fy) acting on the rotating object; and
calculate, based on the calculated displacement in the forward/backward direction, a forward/backward force (Fx) acting on the rotating object.

10. A detection apparatus comprising:
a base part (42); and
a bearing (50) configured to support a rotating object rotatably with respect to the base part (42), the bearing (50) having an outer ring member (51), an inner ring member (52), and rolling elements (53) provided between the outer ring member (51) and the inner ring member (52),
wherein
a first bearing member (52), which is one of the outer ring member (51) and the inner ring member (52), is fixed to the rotating object, and
a second bearing member (51), which is the other of the outer ring member (42) and the inner ring member (52), is fixed to the base part (42),
the detection apparatus further comprising:
a discoid rotating part (80, 83, 86) for detection provided in such a manner as to rotate together with the first bearing member (52), the rotating part (80, 83, 86) for detection extending radially outward of the bearing (50) with respect to the first bearing member (52); and
a displacement detection unit (90) which faces the rotating part (80, 83, 86) for detection in an axial direction of the bearing (50), the displacement detection unit (90) being configured to output a voltage signal according to displacement of the rotating part (80, 83, 86) for detection in the axial direction and displacement of the rotating part (80, 83, 86) for detection in a direction perpendicular to the axial direction,
**characterized in that**
the displacement detection unit (90) is provided at a position in the base part (42) which is radially away from the bearing (50),
the rotating object is arranged so that a center of rotation thereof is in a horizontal state,
in the rotating part (80, 83, 86) for detection, there is formed, at a position radially away from the bearing (50), an annular detection target part (81, 82, 84, 85, 87, 88) that extends in a circumferential direction of the bearing (50),
the displacement detection unit (90) includes:
two planar reception coils (110, 120, 130, 140) fixed to the base part (42), located at a position facing the detection target part (81, 82, 84, 85, 87, 88) in the axial direction, and extending in a direction intersecting the axial direction; and
an excitation coil (100) to which an AC excitation voltage is supplied,
each of the reception coils (110, 120, 130, 140) has:
a first part (110A, 120A, 130A, 140A) that generates a voltage of a first polarity between two ends of the reception coil (110, 120, 130, 140) when the excitation voltage is supplied to the excitation coil (100); and
a second part (110B, 120B, 130B, 140B) that generates a voltage of a second polarity, which is opposite to the first polarity, between the two ends of the reception coil (110, 120, 130, 140) when the excitation voltage is supplied to the excitation coil (100),
each of the reception coils (110, 120, 130, 140) has:
a configuration such that in plan view of the reception coil (110, 120, 130, 140), the first part (110A, 120A, 130A, 140A) is located on one side of a circumferential center of the reception coil (110, 120, 130, 140), the second part (110B, 120B, 130B, 140B) is located on the other side of the circumferential center, and the first part (110A, 120A, 130A, 140A) and the second part (110B, 120B, 130B, 140B) are aligned in the circumferential direction; or
a configuration such that in plan view of the reception coil (110, 120, 130, 140), shapes of the first part (110A, 120A, 130A, 140A) and the second part (110B, 120B, 130B, 140B) on one side of the circumferential center of the reception coil (110, 120, 130, 140) and shapes of the first part (110A, 120A, 130A, 140A) and the second part (110B, 120B, 130B, 140B) on the other side of the circumferential center are symmetrical with respect to the circumferential center,
each of the reception coils (110, 120, 130, 140) is provided astride a horizontal axis that passes through a central axis of rotation of the rotating part (80, 83, 86) for detection, and
each of the reception coils (110, 120, 130, 140) is configured to output a voltage signal according to the displacement of the rotating part (80, 83, 86) for detection in the axial direction and a voltage signal according to the displacement of the rotating part (80, 83, 86) for detection in a forward/backward direction that is perpendicular to both the axial direction and a vertical direction.

11. The detection apparatus as set forth in any one of Claims 2, 3 and 10, further comprising:
a signal acquisition unit (161) configured to acquire an envelope (ENV1) of the voltage signal (v1) outputted from one of the reception coils (110, 120, 130, 140, 150);
an offset voltage calculation unit (160) configured to calculate, based on rotation angle information of the rotating part (80, 83, 86) for detection, an axial offset voltage (vofty) that represents the envelope (ENV1) in a reference state; and
a displacement voltage calculation unit (161) configured to calculate an axial displacement voltage (vdy) by subtracting the calculated axial offset voltage (vofty) from the acquired envelope (ENV1).

12. The detection apparatus as set forth in Claim 11, further comprising a force calculation unit (72) configured to calculate, based on the calculated axial displacement voltage (vdy), an axial force (Fy) acting on the rotating object.

13. The detection apparatus as set forth in any one of Claims 2, 3 and 10, wherein
the two reception coils (110, 120, 130, 140, 150) are a first reception coil (110, 130) and a second reception coil (120, 140),
the detection apparatus further comprising:
a signal acquisition unit (163) configured to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation unit (162) configured to calculate, based on rotation angle information of the rotating part (80, 83, 86) for detection, both a first axial offset voltage (vofty1) that represents the first envelope (ENV1) in a reference state and a second axial offset voltage (vofty2) that represents the second envelope (ENV2) in the reference state;
a displacement voltage calculation unit (163) configured to calculate a first axial displacement voltage (vdy1) by subtracting the calculated first axial offset voltage (vofty1) from the acquired first envelope (ENV1) and calculate a second axial displacement voltage (vdy2) by subtracting the calculated second axial offset voltage (vofty2) from the acquired second envelope (ENV2); and
a total voltage calculation unit (164) configured to calculate a total voltage (vdty) by adding together an absolute value of the calculated first axial displacement voltage (vdy1) and an absolute value of the calculated second axial displacement voltage (vdy2).

14. The detection apparatus as set forth in Claim 13, further comprising a force calculation unit (72) configured to calculate, based on the calculated total voltage (vdty), an axial force (Fy) acting on the rotating object.

15. The detection apparatus as set forth in any one of Claims 2, 3 and 10, wherein
the two reception coils (110, 120, 130, 140, 150) are a first reception coil (110, 130) and a second reception coil (120, 140),
the detection apparatus further comprising:
a signal acquisition unit (163) configured to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation unit (162) configured to calculate, based on rotation angle information of the rotating part (80, 83, 86) for detection, both a first axial offset voltage (vofty1) that represents the first envelope (ENV1) in a reference state and a second axial offset voltage (vofty2) that represents the second envelope (ENV2) in the reference state;
a displacement voltage calculation unit (163) configured to calculate a first axial displacement voltage (vdy1) by subtracting the calculated first axial offset voltage (vofty1) from the acquired first envelope (ENV1) and calculate a second axial displacement voltage (vdy2) by subtracting the calculated second axial offset voltage (vofty2) from the acquired second envelope (ENV2); and
a force calculation unit (72) configured to calculate, based on the calculated first axial displacement voltage (vdy1), a first axial force (Fy1) that represents an axial force (Fy) acting on the rotating object and calculate, based on the calculated second axial displacement voltage (vdy2), a second axial force (Fy2) that also represents the axial force (Fy) acting on the rotating object,
wherein
the force calculation unit (72) calculates the first axial force (Fy1) as the axial force (Fy) acting on the rotating object during a period when the first axial offset voltage (vofty1) is higher than the second axial offset voltage, and calculates the second axial force (Fy2) as the axial force (Fy) acting on the rotating object during a period when the second axial offset voltage (vofty2) is higher than the first axial offset voltage.

16. The detection apparatus as set forth in any one of Claims 2, 3 and 10, wherein
the two reception coils (110, 120, 130, 140, 150) are a first reception coil (110, 130) and a second reception coil (120, 140),
the detection apparatus further comprising:
a signal acquisition unit (163) configured to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation unit (162) configured to calculate, based on rotation angle information of the rotating part (80, 83, 86) for detection, both a first axial offset voltage (vofty1) that represents the first envelope (ENV1) in a reference state and a second axial offset voltage (vofty2) that represents the second envelope (ENV2) in the reference state;
a displacement voltage calculation unit (163) configured to calculate a first axial displacement voltage (vdy1) by subtracting the calculated first axial offset voltage (vofty1) from the acquired first envelope (ENV1) and calculate a second axial displacement voltage (vdy2) by subtracting the calculated second axial offset voltage (vofty2) from the acquired second envelope (ENV2); and
a force calculation unit (72) configured to calculate, during a period when the first axial offset voltage (vofty1) is higher than the second axial offset voltage (vofty2), an axial force (Fy) acting on the rotating object based on the first axial displacement voltage (vdy1) and calculate, during a period when the second axial offset voltage (vofty2) is higher than the first axial offset voltage, the axial force (Fy) acting on the rotating object based on the second axial displacement voltage (vdy2).

17. The detection apparatus as set forth in Claim 2 or 3, wherein
the two reception coils (110, 120, 130, 140, 150) are a first reception coil (110, 130) and a second reception coil (120, 140),
the detection apparatus further comprising:
a signal acquisition unit (169) configured to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation unit (168) configured to calculate, based on rotation angle information of the rotating part (80, 83, 86) for detection, both an axial offset voltage (vofty) that represents the first envelope (ENV1) in a reference state and a vertical offset voltage (voftz) that represents the second envelope (ENV2) in the reference state; and
a displacement voltage calculation unit (169),
wherein
the displacement voltage calculation unit (169) is configured to:
calculate an axial displacement voltage (vdy) by subtracting the calculated axial offset voltage (vofty) from the acquired first envelope (ENV2);
calculate, based on the calculated axial displacement voltage (vdy), a vertical correction voltage (vcz) that quantifies an effect of the displacement of the rotating part (80, 83, 86) for detection in the axial direction on the second envelope (ENV2); and
calculate a vertical displacement voltage (vdz) by subtracting both the calculated vertical offset voltage (voftz) and the calculated vertical correction voltage (vcz) from the acquired second envelope (ENV2).

18. The detection apparatus as set forth in Claim 17, further comprising a force calculation unit (72) configured to:
calculate, based on the calculated axial displacement voltage (vdy), an axial force (Fy) acting on the rotating object; and
calculate, based on the calculated vertical displacement voltage (vdz), a vertical load (Fz) acting on the rotating object.

19. The detection apparatus as set forth in Claim 10, wherein
the two reception coils (110, 120, 130, 140, 150) are a first reception coil (110, 130) and a second reception coil (120, 140),
the detection apparatus further comprising:
a signal acquisition unit (171) configured to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation unit (170) configured to calculate, based on rotation angle information of the rotating part (80, 83, 86) for detection, both an axial offset voltage (vofty) that represents the first envelope (ENV1) in a reference state and a forward/backward offset voltage (voftx) that represents the second envelope (ENV2) in the reference state; and
a displacement voltage calculation unit (171),
wherein
the displacement voltage calculation unit (171) is configured to:
calculate an axial displacement voltage (vdy) by subtracting the calculated axial offset voltage (vofty) from the acquired first envelope (ENV1);
calculate, based on the calculated axial displacement voltage (vdy), a forward/backward correction voltage (vcx) that quantifies an effect of the displacement of the rotating part (80, 83, 86) for detection in the axial direction on the second envelope (ENV2); and
calculate a forward/backward displacement voltage (vdx) by subtracting both the calculated forward/backward offset voltage (voftx) and the calculated forward/backward correction voltage (vcx) from the acquired second envelope (ENV2).

20. The detection apparatus as set forth in Claim 19, further comprising a force calculation unit (72) configured to:
calculate, based on the calculated axial displacement voltage (vdy), an axial force (Fy) acting on the rotating object; and
calculate, based on the calculated forward/backward displacement voltage (vdx), a forward/backward force (Fx) acting on the rotating object.

21. The detection apparatus as set forth in Claim 11, further comprising a filter unit (172) configured to perform a low-pass filter process on the acquired envelope (ENV1),
wherein
to the displacement voltage calculation unit, there is inputted the envelope (ENV1) that has been subjected to the low-pass filter process.

22. The detection apparatus as set forth in any one of Claims 2, 3 and 10, further comprising:
a signal acquisition unit (172) configured to acquire an envelope (ENV1) of the voltage signal (v1) outputted from one of the reception coils (110, 120, 130, 140, 150);
an amplitude information calculation unit (174) configured to calculate, based on rotation angle information of the rotating part (80, 83, 86) for detection and the acquired envelope (ENV1), an amplitude information voltage (vmaxy) of the envelope (ENV1); and
a displacement voltage calculation unit (175) configured to calculate an axial displacement voltage (vdy) by subtracting a reference voltage (vmaxofty), which represents the amplitude information voltage (vmaxy) in a reference state, from the calculated amplitude information voltage (vmaxy).

23. The detection apparatus as set forth in Claim 22, further comprising a force calculation unit (72) configured to calculate, based on the calculated axial displacement voltage (vdy), an axial force (Fy) acting on the rotating object.

24. The detection apparatus as set forth in any one of Claims 1 to 4 and 7 to 10, wherein
the detection target part (81, 82, 84, 85, 87, 88) has:
a configuration in which metal portions (81) and portions (82) penetrated in the axial direction are provided alternately in the circumferential direction;
a configuration in which recessed portions (88) that are recessed in the axial direction and protruding portions (87) that protrude in the axial direction with respect to the recessed portions (88) are provided alternately in the circumferential direction; or
a configuration in which metal portions (81) and nonmetal portions (82, 84) are provided alternately in the circumferential direction,
the detection apparatus further comprises an angle calculation unit (73) configured to calculate, based on the voltage signal outputted from each reception coil (110, 120, 130, 140, 150), a rotation angle of the rotating part (80, 83, 86) for detection.

25. A program applicable to the detection apparatus as set forth in any one of Claims 2, 3 and 10, the program being configured to cause a computer (70) provided in the detection apparatus to execute:
a signal acquisition process to acquire an envelope (ENV1) of the voltage signal (v1) outputted from one of the reception coils (110, 120, 130, 140, 150);
an offset voltage calculation process to calculate, based on rotation angle information of the rotating part (80, 83, 86) for detection, an axial offset voltage (vofty) that represents the envelope (ENV1) in a reference state; and
a displacement voltage calculation process to calculate an axial displacement voltage (vdy) by subtracting the calculated axial offset voltage (vofty) from the acquired envelope (ENV1).

26. A program applicable to the detection apparatus as set forth in any one of Claims 2, 3 and 10, wherein
the two reception coils (110, 120, 130, 140, 150) are a first reception coil (110, 130) and a second reception coil (120, 140),
the program being configured to cause a computer (70) provided in the detection apparatus to execute:
a signal acquisition process to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation process to calculate, based on rotation angle information of the rotating part (80, 83, 86) for detection, both a first axial offset voltage (vofty1) that represents the first envelope (ENV1) in a reference state and a second axial offset voltage (vofty2) that represents the second envelope (ENV2) in the reference state;
a displacement voltage calculation process to calculate a first axial displacement voltage (vdy1) by subtracting the calculated first axial offset voltage (vofty1) from the acquired first envelope (ENV1) and calculate a second axial displacement voltage (vdy2) by subtracting the calculated second axial offset voltage (vofty2) from the acquired second envelope (ENV2); and
a total voltage calculation process to calculate a total voltage (vdty) by adding together an absolute value of the calculated first axial displacement voltage (vdy1) and an absolute value of the calculated second axial displacement voltage (vdy2).

27. A program applicable to the detection apparatus as set forth in any one of Claims 2, 3 and 10, wherein
the two reception coils (110, 120, 130, 140, 150) are a first reception coil (110, 130) and a second reception coil (120, 140),
the program being configured to cause a computer (70) provided in the detection apparatus to execute:
a signal acquisition process to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation process to calculate, based on rotation angle information of the rotating part (80, 83, 86) for detection, both a first axial offset voltage (vofty1) that represents the first envelope (ENV1) in a reference state and a second axial offset voltage (vofty2) that represents the second envelope (ENV2) in the reference state;
a displacement voltage calculation process to calculate a first axial displacement voltage (vdy1) by subtracting the calculated first axial offset voltage (vofty1) from the acquired first envelope (ENV1) and calculate a second axial displacement voltage (vdy2) by subtracting the calculated second axial offset voltage (vofty2) from the acquired second envelope (ENV2); and
a force calculation process to calculate, based on the calculated first axial displacement voltage (vdy1), a first axial force (Fy1) that represents an axial force (Fy) acting on the rotating object and calculate, based on the calculated second axial displacement voltage (vdy2), a second axial force (Fy2) that also represents the axial force (Fy) acting on the rotating object,
wherein
in the force calculation process:
the first axial force (Fy1) is calculated, as the axial force (Fy) acting on the rotating object, during a period when the first axial offset voltage (vofty1) is higher than the second axial offset voltage (vofty2); and
the second axial force (Fy2) is calculated, as the axial force (Fy) acting on the rotating object, during a period when the second axial offset voltage (vofty2) is higher than the first axial offset voltage (vofty1).

28. A program applicable to the detection apparatus as set forth in any one of Claims 2, 3 and 10, wherein
the two reception coils (110, 120, 130, 140, 150) are a first reception coil (110, 130) and a second reception coil (120, 140),
the program being configured to cause a computer (70) provided in the detection apparatus to execute:
a signal acquisition process to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation process to calculate, based on rotation angle information of the rotating part (80, 83, 86) for detection, both a first axial offset voltage (vofty1) that represents the first envelope (ENV1) in a reference state and a second axial offset voltage (vofty2) that represents the second envelope (ENV2) in the reference state;
a displacement voltage calculation process to calculate a first axial displacement voltage (vdy1) by subtracting the calculated first axial offset voltage (vofty1) from the acquired first envelope (ENV1) and calculate a second axial displacement voltage (vdy2) by subtracting the calculated second axial offset voltage (vofty2) from the acquired second envelope (ENV2); and
a force calculation process to calculate, during a period when the first axial offset voltage (vofty1) is higher than the second axial offset voltage (vofty2), an axial force (Fy) acting on the rotating object based on the first axial displacement voltage (vdy1) and calculate, during a period when the second axial offset voltage (vofty2) is higher than the first axial offset voltage (vofty1), the axial force (Fy) acting on the rotating object based on the second axial displacement voltage (vdy2).

29. A program applicable to the detection apparatus as set forth in Claim 2 or 3, wherein
the two reception coils (110, 120, 130, 140, 150) are a first reception coil (110, 130) and a second reception coil (120, 140),
the program being configured to cause a computer (70) provided in the detection apparatus to execute:
a signal acquisition process to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation process to calculate, based on rotation angle information of the rotating part (80, 83, 86) for detection, both an axial offset voltage (vofty) that represents the first envelope (ENV1) in a reference state and a vertical offset voltage (voftz) that represents the second envelope (ENV2) in the reference state; and
a displacement voltage calculation process,
wherein
in the displacement voltage calculation process:
an axial displacement voltage (vdy) is calculated by subtracting the calculated axial offset voltage (vofty) from the acquired first envelope (ENV1);
a vertical correction voltage (vcz), which quantifies an effect of the displacement of the rotating part (80, 83, 86) for detection in the axial direction on the second envelope (ENV2), is calculated based on the calculated axial displacement voltage (vdy); and
a vertical displacement voltage (vdz) is calculated by subtracting both the calculated vertical offset voltage (voftz) and the calculated vertical correction voltage (vcz) from the acquired second envelope (ENV2).

30. A program applicable to the detection apparatus as set forth in Claim 10, wherein
the two reception coils (110, 120, 130, 140, 150) are a first reception coil (110, 130) and a second reception coil (120, 140),
the program being configured to cause a computer (70) provided in the detection apparatus to execute:
a signal acquisition process to acquire both a first envelope (ENV1) that is an envelope of a first voltage signal (v1) outputted from the first reception coil (110, 130) and a second envelope (ENV2) that is an envelope of a second voltage signal (v2) outputted from the second reception coil (120, 140);
an offset voltage calculation process to calculate, based on rotation angle information of the rotating part (80, 83, 86) for detection, both an axial offset voltage (vofty) that represents the first envelope (ENV1) in a reference state and a forward/backward offset voltage (voftx) that represents the second envelope (ENV2) in the reference state; and
a displacement voltage calculation process,
wherein
in the displacement voltage calculation process:
an axial displacement voltage (vdy) is calculated by subtracting the calculated axial offset voltage (vofty) from the acquired first envelope (ENV1);
a forward/backward correction voltage (vcx), which quantifies an effect of the displacement of the rotating part (80, 83, 86) for detection in the axial direction on the second envelope (ENV2), is calculated based on the calculated axial displacement voltage (vdy); and
a forward/backward displacement voltage (vdx) is calculated by subtracting both the calculated forward/backward offset voltage (voftx) and the calculated forward/backward correction voltage (vcx) from the acquired second envelope (ENV2).

31. A program applicable to the detection apparatus as set forth in any one of Claims 2, 3 and 10, the program being configured to cause a computer (70) provided in the detection apparatus to execute:
a signal acquisition process to acquire an envelope (ENV1) of the voltage signal (v1) outputted from one of the reception coils (110, 120, 130, 140, 150);
an amplitude information calculation process to calculate, based on rotation angle information of the rotating part (80, 83, 86) for detection and the acquired envelope (EVN1), an amplitude information voltage (vmaxy) of the envelope (110, 120, 130, 140, 150); and
a displacement voltage calculation process to calculate an axial displacement voltage (vdy) by subtracting a reference voltage (vmaxofty), which represents the amplitude information voltage (vmaxy) in a reference state, from the calculated amplitude information voltage (vmaxy).

## Patentansprüche

1. Detektionsgerät, das Folgendes aufweist:
einen Basisteil (42); und
ein Lager (50), das gestaltet ist, um einen Drehgegenstand in Bezug auf den Basisteil (42) drehbar zu stützen, wobei das Lager (50) ein Außenringbauteil (51), ein Innenringbauteil (52) und Wälzelemente (53) hat, die zwischen dem Außenringbauteil (51) und dem Innenringbauteil (52) vorgesehen sind,
wobei
ein erstes Lagerbauteil (52), das entweder das Außenringbauteil (51) oder das Innenringbauteil (52) ist, an dem Drehgegenstand befestigt ist, und
ein zweites Lagerbauteil (51), das das andere von dem Außenringbauteil (42) und dem Innenringbauteil (52) ist, an dem Basisteil (42) befestigt ist,
das Detektionsgerät des Weiteren Folgendes aufweist:
einen Scheibendrehteil (80, 83, 86) zur Erfassung, der derart vorgesehen ist, dass er sich zusammen mit dem ersten Lagerbauteil (52) dreht, wobei sich der Scheibendrehteil (80, 83, 86) zur Erfassung in Bezug auf das erste Lagerbauteil (52) radial nach außen aus dem Lager (50) erstreckt; und
eine Verlagerungserfassungseinheit (90), die dem Drehteil (80, 83, 86) zur Erfassung in einer axialen Richtung des Lagers (50) zugewandt ist, wobei die Verlagerungserfassungseinheit (90) gestaltet ist, um ein Spannungssignal gemäß einer Verlagerung des Drehteils (80, 83, 86) zur Erfassung in der axialen Richtung und einer Verlagerung des Drehteils (80, 83, 86) zur Erfassung in einer Richtung senkrecht zu der axialen Richtung auszugeben,
**dadurch gekennzeichnet, dass**
die Verlagerungserfassungseinheit (90) an einer Position in dem Basisteil (42) vorgesehen ist, die radial von dem Lager (50) entfernt ist,
in dem Drehteil (80, 83, 86) zur Erfassung an einer von dem Lager (50) radial entfernt gelegenen Position ein ringförmiger Erfassungszielteil (81, 82, 84, 85, 87, 88) ausgebildet ist, der sich in einer Umfangsrichtung des Lagers (50) erstreckt,
die Verlagerungserfassungseinheit (90) Folgendes aufweist:
zwei Planarempfangsspulen (110, 120, 130, 140), die an dem Basisteil (42) befestigt sind, an einer Position angeordnet sind, die einem oberen Ende oder unteren Ende des Erfassungszielabschnitts (81, 82, 84, 85, 87, 88) in der axialen Richtung zugewandt sind, und sich in einer Richtung erstrecken, die die axiale Richtung schneidet; und
eine Erregungsspule (100), an die eine Wechselstrom-Erregungsspannung angelegt wird, wobei
wenn die Erregungsspannung an die Erregungsspule (100) angelegt wird, in den Empfangsspulen (110, 120, 130, 140) Spannungen induziert werden,
in einer Draufsicht der Empfangsspulen (110, 120, 130, 140) ein radial äußeres Ende einer (120, 140) der Empfangsspulen (110, 120, 130, 140) von einem radial äußeren Ende (81a) des Zielerfassungsteils (81, 82, 84, 85, 87, 88) vorsteht,
Radialpositionen der radial äußeren Enden der Empfangsspulen (110, 120, 130, 140) sich voneinander unterscheiden, und
jede der Empfangsspulen (110, 120, 130, 140) gestaltet ist, um ein Spannungssignal gemäß der Verlagerung des Drehteils (80, 83, 86) zur Erfassung in der axialen Richtung und der Verlagerung des Drehteils (80, 83, 86) zur Erfassung in der zu der axialen Richtung senkrechten Richtung auszugeben.

2. Detektionsgerät nach Anspruch 1, wobei
jede der Empfangsspulen (110, 120) Folgendes hat:
einen ersten Teil (110A, 120A), der eine Spannung einer ersten Polarität zwischen zwei Enden der Empfangsspule (110, 120) erzeugt, wenn die Erregungsspannung an die Erregungsspule (100) angelegt wird; und
einen zweiten Teil (110B, 120B), der zwischen den zwei Enden der Empfangsspule (110, 120) eine Spannung einer zweiten Polarität erzeugt, die zu der ersten Polarität entgegengesetzt ist, wenn die Erregungsspannung an die Erregungsspule (100) angelegt wird,
jede der Empfangsspulen (110, 120) Folgendes hat:
eine derartige Gestaltung, dass in einer Draufsicht der Empfangsspule (110, 120) der erste Teil (120A) an einer Seite eines Umfangszentrums der Empfangsspule (110, 120) angeordnet ist, der zweite Teil (120B) an der anderen Seite des Umfangszentrums angeordnet ist, und der erste Teil (120A) und der zweite Teil (120B) in der Umfangsrichtung ausgerichtet sind; oder
eine derartige Gestaltung, dass in einer Draufsicht der Empfangsspule (110, 120) Formen des ersten Teils (110A) und des zweiten Teils (110B) an einer Seite des Umfangszentrums der Empfangsspule (110, 120) und Formen des ersten Teils (120A) und des zweiten Teils (120B) an der anderen Seite des Umfangszentrums symmetrisch in Bezug auf das Umfangszentrum sind,
Umfangsabmessungen der Empfangsspulen (110, 120) zueinander gleich sind, und
eine Radialabmessung der einen (120) der Empfangsspulen (110, 120), die das radial äußere Ende hat, das von dem radial äußeren Ende (81a) des Erfassungszielteils (81, 82, 84, 85, 87, 88) vorsteht, größer ist als eine Radialabmessung der anderen der Empfangsspulen (110, 120).

3. Detektionsgerät nach Anspruch 1, wobei
jede der Empfangsspulen (130, 140) Folgendes hat:
einen ersten Teil (130A, 140A), der eine Spannung einer ersten Polarität zwischen zwei Enden der Empfangsspule (130, 140) erzeugt, wenn die Erregungsspannung an die Erregungsspule (100) angelegt wird; und
einen zweiten Teil (130B, 140B), der eine Spannung einer zweiten Polarität, die zu der ersten Polarität entgegengesetzt ist, zwischen den zwei Enden der Empfangsspule (130, 140) erzeugt, wenn die Erregungsspannung an die Erregungsspule (100) angelegt wird,
jede der Empfangsspulen (130, 140) Folgendes hat:
eine derartige Gestaltung, dass in einer Draufsicht der Empfangsspule (130, 140) der erste Teil (130A, 140A) an einer Seite des Umfangszentrums der Empfangsspule (130, 140) angeordnet ist, der zweite Teil (130B, 140B) an der anderen Seite des Umfangszentrums angeordnet ist, und der erste Teil (130A, 140A) und der zweite Teil (130B, 140B) in der Umfangsrichtung ausgerichtet sind; oder
eine derartige Gestaltung, dass in einer Draufsicht der Empfangsspule (130, 140) Formen des ersten Teils (130A, 140A) und des zweiten Teils (130B, 140B) an einer Seite des Umfangszentrums der Empfangsspule (130, 140) und Formen des ersten Teils (130A, 140A) und des zweiten Teils (130B, 140B) an der anderen Seite des Umfangszentrums symmetrisch in Bezug auf das Umfangszentrum sind,
Umfangsabmessungen der Empfangsspulen (130, 140) zueinander gleich sind, und
Radialabmessungen der Empfangsspulen (130, 140) ebenfalls zueinander gleich sind.

4. Detektionsgerät, das Folgendes aufweist:
einen Basisteil (42); und
ein Lager (50), das gestaltet ist, um einen Drehgegenstand in Bezug auf den Basisteil (42) drehbar zu stützen, wobei das Lager (50) ein Außenringbauteil (51), ein Innenringbauteil (52) und Wälzelemente (53) hat, die zwischen dem Außenringbauteil (51) und dem Innenringbauteil (52) vorgesehen sind,
wobei
ein erstes Lagerbauteil (52), das entweder das Außenringbauteil (51) oder das Innenringbauteil (52) ist, an dem Drehgegenstand befestigt ist, und
ein zweites Lagerbauteil (51), das das andere von dem Außenringbauteil (42) und dem Innenringbauteil (52) ist, an dem Basisteil (42) befestigt ist,
das Detektionsgerät des Weiteren Folgendes aufweist:
einen Scheibendrehteil (80, 83, 86) zur Erfassung, der derart vorgesehen ist, dass er sich zusammen mit dem ersten Lagerbauteil (52) dreht, wobei sich der Scheibendrehteil (80, 83, 86) zur Erfassung in Bezug auf das erste Lagerbauteil (52) radial nach außen aus dem Lager (50) erstreckt; und
eine Verlagerungserfassungseinheit (90), die dem Drehteil (80, 83, 86) zur Erfassung in einer axialen Richtung des Lagers (50) zugewandt ist, wobei die Verlagerungserfassungseinheit (90) gestaltet ist, um ein Spannungssignal gemäß einer Verlagerung des Drehteils (80, 83, 86) zur Erfassung in der axialen Richtung und einer Verlagerung des Drehteils (80, 83, 86) zur Erfassung in einer Richtung senkrecht zu der axialen Richtung auszugeben,
**dadurch gekennzeichnet, dass**
die Verlagerungserfassungseinheit (90) an einer Position in dem Basisteil (42) vorgesehen ist, die radial von dem Lager (50) entfernt ist,
in dem Drehteil (80, 83, 86) zur Erfassung an einer von dem Lager (50) radial entfernt gelegenen Position ein ringförmiger Erfassungszielteil (81, 82, 84, 85, 87, 88) ausgebildet ist, der sich in einer Umfangsrichtung des Lagers (50) erstreckt,
die Verlagerungserfassungseinheit (90) Folgendes aufweist:
eine Planarempfangsspule (150), die an dem Basisteil (42) befestigt ist, an einer Position angeordnet ist, die einem Ende des Erfassungszielteils (81, 82, 84, 85, 87, 88) in der axialen Richtung zugewandt ist, und sich in einer Richtung erstreckt, die die axiale Richtung schneidet; und
eine Erregungsspule (100), an die eine Wechselstrom-Erregungsspannung angelegt wird,
die Empfangsspule (150) Folgendes hat:
einen ersten Teil (150A), der eine Spannung einer ersten Polarität zwischen zwei Enden der Empfangsspule (150) erzeugt, wenn die Erregungsspannung an die Erregungsspule (100) angelegt wird; und
einen zweiten Teil (150B), der eine Spannung einer zweiten Polarität, die zu der ersten Polarität entgegengesetzt ist, zwischen den zwei Enden der Empfangsspule (150) erzeugt, wenn die Erregungsspannung an die Erregungsspule (100) angelegt wird,
die Empfangsspule (150) Folgendes hat:
eine derartige Gestaltung, dass in einer Draufsicht der Empfangsspule (150) der erste Teil (150A) an einer Seite des Umfangszentrums der Empfangsspule (150) angeordnet ist, der zweite Teil (150B) an der anderen Seite des Umfangszentrums angeordnet ist, und der erste Teil (150A) und der zweite Teil (150B) in der Umfangsrichtung ausgerichtet sind; oder
eine derartige Gestaltung, dass in einer Draufsicht der Empfangsspule (150) Formen des ersten Teils (150A) und des zweiten Teils (150B) an der einen Seite des Umfangszentrums der Empfangsspule (150) und Formen des ersten Teils (150A) und des zweiten Teils (150B) an der anderen Seite des Umfangszentrums symmetrisch in Bezug auf das Umfangszentrum sind,
eine Umfangsabmessung des ersten Teils (150A) gleich einer Umfangsabmessung des zweiten Teils (150B) ist,
eine Radialabmessung eines von dem ersten und dem zweiten Teil (150A, 150B) größer ist als eine Radialabmessung des anderen von dem ersten und dem zweiten Teil (150A, 150B),
in einer Draufsicht der Empfangsspule (150) ein radial äußeres Ende des einen von dem ersten und dem zweiten Teil (150A, 150B), das die größere Radialabmessung hat, von einem radial äußeren Ende (81a) des Erfassungszielteils (81, 82, 84, 85, 87, 88) vorsteht,
Radialpositionen der radial äußeren Enden des ersten und des zweiten Teils (150A, 150B) sich voneinander unterscheiden, und
die Empfangsspule (150) gestaltet ist, um ein Spannungssignal gemäß der Verlagerung des Drehteils (80, 83, 86) zur Erfassung in der axialen Richtung und gemäß der Verlagerung des Drehteils (80, 83, 86) zur Erfassung in der zu der axialen Richtung senkrechten Richtung auszugeben.

5. Detektionsgerät nach einem der Ansprüche 1 bis 4, wobei
der Drehgegenstand so angeordnet ist, dass sich sein Drehpunkt in einem horizontalen Zustand befindet, und
das Detektionsgerät des Weiteren eine Verlagerungsberechnungseinheit (71) aufweist, die gestaltet ist, um auf der Grundlage des Spannungssignals, das von jeder Empfangsspule (110, 120, 130, 140, 150) ausgegeben wird, sowohl die Verlagerung des Drehteils (80, 83, 86) zur Erfassung in der axialen Richtung als auch die Verlagerung des Drehteils (80, 83, 86) zur Erfassung in einer vertikalen Richtung, die die Richtung senkrecht zu der axialen Richtung ist, zu berechnen.

6. Detektionsgerät nach Anspruch 5, das des Weiteren eine Kraftberechnungseinheit (72) aufweist, die gestaltet ist, um:
auf der Grundlage der berechneten Verlagerung in der axialen Richtung eine auf den Drehgegenstand wirkende Axialkraft (Fy) zu berechnen; und
auf der Grundlage der berechneten Verlagerung in der vertikalen Richtung eine auf den Drehgegenstand wirkende vertikale Last (Fz) zu berechnen.

7. Detektionsgerät, das Folgendes aufweist:
einen Basisteil (42); und
ein Lager (50), das gestaltet ist, um einen Drehgegenstand drehbar in Bezug auf den Basisteil (42) zu stützen, wobei das Lager (50) ein Außenringbauteil (51), ein Innenringbauteil (52) und Wälzelemente (53) hat, die zwischen dem Außenringbauteil (51) und dem Innenringbauteil (52) angeordnet sind,
wobei
ein erstes Lagerbauteil (52), das entweder das Außenringbauteil (51) oder das Innenringbauteil (52) ist, an dem Drehgegenstand befestigt ist, und
ein zweites Lagerbauteil (51), das das andere von dem Außenringbauteil (42) und dem Innenringbauteil (52) ist, an dem Basisteil (42) befestigt ist,
das Detektionsgerät des Weiteren Folgendes aufweist:
einen Scheibendrehteil (80, 83, 86) zur Erfassung, der derart vorgesehen ist, dass er sich zusammen mit dem ersten Lagerbauteil (52) dreht, wobei sich der Scheibendrehteil (80, 83, 86) zur Erfassung in Bezug auf das erste Lagerbauteil (52) radial nach außen aus dem Lager (50) erstreckt; und
eine Verlagerungserfassungseinheit (90), die dem Drehteil (80, 83, 86) zur Erfassung in einer axialen Richtung des Lagers (50) zugewandt ist, wobei die Verlagerungserfassungseinheit (90) gestaltet ist, um ein Spannungssignal gemäß einer Verlagerung des Drehteils (80, 83, 86) zur Erfassung in der axialen Richtung und einer Verlagerung des Drehteils (80, 83, 86) zur Erfassung in einer Richtung senkrecht zu der axialen Richtung auszugeben,
**dadurch gekennzeichnet, dass**
die Verlagerungserfassungseinheit (90) an einer Position in dem Basisteil (42) vorgesehen ist, die radial von dem Lager (50) entfernt ist,
in dem Drehteil (80, 83, 86) zur Erfassung an einer von dem Lager (50) radial entfernt gelegenen Position ein ringförmiger Erfassungszielteil (81, 82, 84, 85, 87, 88) ausgebildet ist, der sich in einer Umfangsrichtung des Lagers (50) erstreckt,
die Verlagerungserfassungseinheit (90) Folgendes aufweist:
eine Planarempfangsspule (110, 120, 130, 140, 150), die an dem Basisteil (42) befestigt ist, an einer Position angeordnet ist, die dem Erfassungszielteil (81, 82, 84, 85, 87, 88) in der axialen Richtung zugewandt ist, und sich in einer Richtung erstreckt, die die axiale Richtung schneidet; und
eine Erregungsspule (100), an die eine Wechselstrom-Erregungsspannung angelegt wird,
die Empfangsspule (110, 120, 130, 140, 150) Folgendes hat:
einen ersten Teil (110A, 120A, 130A, 140A, 150A), der zwischen zwei Enden der Empfangsspule (110, 120, 130, 140, 150) eine Spannung einer ersten Polarität erzeugt, wenn die Erregungsspannung an die Erregungsspule (100) angelegt wird; und
einen zweiten Teil (110B, 120B, 130B, 140B, 150B), der eine Spannung einer zweiten Polarität, die zu der ersten Polarität entgegengesetzt ist, zwischen den zwei Enden der Empfangsspule (110, 120, 130, 140, 150) erzeugt, wenn die Erregungsspannung an die Erregungsspule (100) angelegt wird,
die Empfangsspule (110, 120, 130, 140, 150) Folgendes hat:
eine derartige Gestaltung, dass in einer Draufsicht der Empfangsspule (110, 120, 130, 140, 150) der erste Teil (110A, 120A, 130A, 140A, 150A) an einer Seite eines Umfangszentrums der Empfangsspule (110, 120, 130, 140, 150) angeordnet ist, der zweite Teil (110B, 120B, 130B, 140B, 150B) an der anderen Seite des Umfangszentrums angeordnet ist, und der erste Teil (110A, 120A, 130A, 140A, 150A) und der zweite Teil (110B, 120B, 130B, 140B, 150B) in der Umfangsrichtung ausgerichtet sind; oder
eine derartige Gestaltung, dass in einer Draufsicht der Empfangsspule (110, 120, 130, 140, 150) Formen des ersten Teils (110A, 120A, 130A, 140A, 150A) und des zweiten Teils (110B, 120B, 130B, 140B, 150B) an einer Seite des Umfangszentrums der Empfangsspule (110, 120, 130, 140, 150) und Formen des ersten Teils (110A, 120A, 130A, 140A, 150A) und des zweiten Teils (110B, 120B, 130B, 140B, 150B) an der anderen Seite des Umfangszentrums in Bezug auf das Umfangszentrum symmetrisch sind,
die Empfangsspule (110, 120, 130, 140, 150) rittlings einer horizontalen Achse vorgesehen ist, die durch eine Drehmittelachse des Drehteils (80, 83, 86) zur Erfassung verläuft, und
die Empfangsspule (110, 120, 130, 140, 150) gestaltet ist, um ein Spannungssignal gemäß der Verlagerung des Drehteils (80, 83, 86) zur Erfassung in der axialen Richtung und der Verlagerung des Drehteils (80, 83, 86) zur Erfassung in der zu der axialen Richtung senkrechten Richtung auszugeben.

8. Detektionsgerät nach Anspruch 7, wobei
der Drehgegenstand so angeordnet ist, dass sich sein Drehpunkt in einem horizontalen Zustand befindet, und
das Detektionsgerät des Weiteren eine Verlagerungsberechnungseinheit (71) aufweist, die gestaltet ist, um auf der Grundlage des Spannungssignals, das von der Empfangsspule (110, 120, 130, 140, 150) ausgegeben wird, sowohl die Verlagerung des Drehteils (80, 83, 86) zur Erfassung in der axialen Richtung als auch die Verlagerung des Drehteils (80, 83, 86) zur Erfassung in einer Vorwärts-/Rückwärtsrichtung zu berechnen, die sowohl zu der axialen Richtung als auch zu einer vertikalen Richtung senkrecht ist.

9. Detektionsgerät nach Anspruch 8, das des Weiteren eine Kraftberechnungseinheit (72) aufweist, die gestaltet ist, um:
auf der Grundlage der berechneten Verlagerung in der axialen Richtung eine auf den Drehgegenstand wirkende Axialkraft (Fy) zu berechnen; und
auf der Grundlage der berechneten Verlagerung in der Vorwärts-/Rückwärtsrichtung eine auf den Drehgegenstand wirkende Vorwärts-/Rückwärtskraft (Fx) zu berechnen.

10. Detektionsgerät, das Folgendes aufweist:
einen Basisteil (42); und
ein Lager (50), das gestaltet ist, um einen Drehgegenstand in Bezug auf den Basisteil (42) drehbar zu stützen, wobei das Lager (50) ein Außenringbauteil (51), ein Innenringbauteil (52) und Wälzelemente (53) hat, die zwischen dem Außenringbauteil (51) und dem Innenringbauteil (52) vorgesehen sind,
wobei
ein erstes Lagerbauteil (52), das entweder das Außenringbauteil (51) oder das Innenringbauteil (52) ist, an dem Drehgegenstand befestigt ist, und
ein zweites Lagerbauteil (51), das das andere von dem Außenringbauteil (42) und Innenringbauteil (52) ist, an dem Basisteil (42) befestigt ist,
das Detektionsgerät des Weiteren Folgendes aufweist:
einen Scheibendrehteil (80, 83, 86) zur Erfassung, der derart vorgesehen ist, dass er sich zusammen mit dem ersten Lagerbauteil (52) dreht, wobei sich der Drehteil (80, 83, 86) zur Erfassung in Bezug auf das erste Lagerbauteil (52) radial nach außen aus dem Lager (50) erstreckt; und
eine Verlagerungserfassungseinheit (90), die dem Drehteil (80, 83, 86) zur Erfassung in einer axialen Richtung des Lagers (50) zugewandt ist, wobei die Verlagerungserfassungseinheit (90) gestaltet ist, um ein Spannungssignal gemäß einer Verlagerung des Drehteils (80, 83, 86) zur Erfassung in der axialen Richtung und einer Verlagerung des Drehteils (80, 83, 86) zur Erfassung in einer Richtung senkrecht zu der axialen Richtung auszugeben,
**dadurch gekennzeichnet, dass**
die Verlagerungserfassungseinheit (90) an einer Position in dem Basisteil (42) vorgesehen ist, die radial von dem Lager (50) entfernt ist,
der Drehgegenstand so angeordnet ist, dass sich sein Drehpunkt in horizontalem Zustand befindet,
in dem Drehteil (80, 83, 86) zur Erfassung an einer von dem Lager (50) radial entfernt gelegenen Position ein ringförmiger Erfassungszielteil (81, 82, 84, 85, 87, 88) ausgebildet ist, der sich in einer Umfangsrichtung des Lagers (50) erstreckt,
die Verlagerungserfassungseinheit (90) Folgendes aufweist:
zwei Planarempfangsspulen (110, 120, 130, 140), die an dem Basisteil (42) befestigt sind, an einer Position angeordnet sind, die dem Erfassungszielteil (81, 82, 84, 85, 87, 88) in der axialen Richtung zugewandt sind, und sich in einer Richtung erstrecken, die die axiale Richtung schneidet; und
eine Erregungsspule (100), an die eine Wechselstrom-Erregungsspannung angelegt wird,
jede der Empfangsspulen (110, 120, 130, 140) Folgendes hat:
einen ersten Teil (110A, 120A, 130A, 140A), der zwischen zwei Enden der Empfangsspule (110, 120, 130, 140) eine Spannung einer ersten Polarität erzeugt, wenn die Erregungsspannung an die Erregungsspule (100) angelegt wird; und
einen zweiten Teil (110B, 120B, 130B, 140B), der eine Spannung einer zweiten Polarität, die zu der ersten Polarität entgegengesetzt ist, zwischen den zwei Enden der Empfangsspule (110, 120, 130, 140) erzeugt, wenn die Erregungsspannung an die Erregungsspule (100) angelegt wird,
jede der Empfangsspulen (110, 120, 130, 140) Folgendes hat:
eine derartige Gestaltung, dass in einer Draufsicht der Empfangsspule (110, 120, 130, 140) der erste Teil (110A, 120A, 130A, 140A) an einer Seite eines Umfangszentrums der Empfangsspule (110, 120, 130, 140) angeordnet ist, der zweite Teil (110B, 120B, 130B, 140B) an der anderen Seite des Umfangszentrums angeordnet ist, und der erste Teil (110A, 120A, 130A, 140A) und der zweite Teil (110B, 120B, 130B, 140B) in der Umfangsrichtung ausgerichtet sind; oder
eine derartige Gestaltung, dass in einer Draufsicht der Empfangsspule (110, 120, 130, 140) Formen des ersten Teils (110A, 120A, 130A, 140A) und des zweiten Teils (110B, 120B, 130B, 140B) an einer Seite des Umfangszentrums der Empfangsspule (110, 120, 130, 140) und Formen des ersten Teils (110A, 120A, 130A, 140A) und des zweiten Teils (110B, 120B, 130B, 140B) an der anderen Seite des Umfangszentrums in Bezug auf das Umfangszentrum symmetrisch sind,
jede der Empfangsspulen (110, 120, 130, 140) rittlings einer horizontalen Achse vorgesehen ist, die durch eine Drehmittelachse des Drehteils (80, 83, 86) zur Erfassung verläuft, und
jede der Empfangsspulen (110, 120, 130, 140) gestaltet ist, um ein Spannungssignal gemäß der Verlagerung des Drehteils (80, 83, 86) zur Erfassung in der axialen Richtung und ein Spannungssignal gemäß der Verlagerung des Drehteils (80, 83, 86) zur Erfassung in einer Vorwärts-/Rückwärtsrichtung, die sowohl zu der axialen Richtung als auch zu einer vertikalen Richtung senkrecht ist, auszugeben.

11. Detektionsgerät nach einem der Ansprüche 2, 3 und 10, das des Weiteren Folgendes aufweist:
eine Signalermittlungsseinheit (161), die gestaltet ist, um eine Hüllkurve (ENV1) des von einer der Empfangsspulen (110, 120, 130, 140, 150) ausgegebenen Spannungssignals (v1) zu ermitteln;
eine Offsetspannungsberechnungseinheit (160), die gestaltet ist, um auf der Grundlage von Drehwinkelinformationen des Drehteils (80, 83, 86) zur Erfassung eine axiale Offsetspannung (vofty) zu berechnen, die die Hüllkurve (ENV1) in einem Referenzzustand darstellt; und
eine Verlagerungsspannungsberechnungseinheit (161), die gestaltet ist, um eine axiale Verlagerungsspannung (vdy) zu berechnen, indem die berechnete axiale Offsetspannung (vofty) von der ermittelten Hüllkurve (ENV1) subtrahiert wird.

12. Detektionsgerät nach Anspruch 11, das des Weiteren eine Kraftberechnungseinheit (72) aufweist, die gestaltet ist, um auf der Grundlage der berechneten axialen Verlagerungsspannung (vdy) eine auf den Drehgegenstand wirkende Axialkraft (Fy) zu berechnen.

13. Detektionsgerät nach einem der Ansprüche 2, 3 und 10, wobei
die zwei Empfangsspulen (110, 120, 130, 140, 150) eine erste Empfangsspule (110, 130) und eine zweite Empfangsspule (120, 140) sind,
das Detektionsgerät des Weiteren Folgendes aufweist:
eine Signalermittlungsseinheit (163), die gestaltet ist, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die ein Hüllkurve eines von der zweiten Empfangsspule (120, 140) ausgegebenen zweiten Spannungssignals (v2) ist, zu ermitteln;
eine Offsetspannungsberechnungseinheit (162), die gestaltet ist, um auf der Grundlage von Drehwinkelinformationen des Drehteils (80, 83, 86) zur Erfassung sowohl eine erste axiale Offsetspannung (vofty1), die die erste Hüllkurve (ENV1) in einem Referenzzustand darstellt, als auch eine zweite axiale Offsetspannung (vofty2), die die zweite Hüllkurve (ENV2) in dem Referenzzustand darstellt, zu berechnen;
eine Verlagerungsspannungsberechnungseinheit (163), die gestaltet ist, um eine erste axiale Verlagerungsspannung (vdy1) zu berechnen, indem die berechnete erste axiale Offsetspannung (vofty1) von der ermittelten ersten Hüllkurve (ENV1) subtrahiert wird, und um eine zweite axiale Verlagerungsspannung (vdy2) zu berechnen, indem die berechnete zweite axiale Offsetspannung (vofty2) von der ermittelten zweiten Hüllkurve (ENV2) subtrahiert wird; und
eine Gesamtspannungsberechnungseinheit (164), die gestaltet ist, um eine Gesamtspannung (vdty) zu berechnen, indem ein Absolutwert der berechneten ersten axialen Verlagerungsspannung (vdy1) und ein Absolutwert der berechneten zweiten axialen Verlagerungsspannung (vdy2) addiert werden.

14. Detektionsgerät nach Anspruch 13, das des Weiteren eine Kraftberechnungseinheit (72) aufweist, die gestaltet ist, um auf der Grundlage der berechneten Gesamtspannung (vdty) eine auf den Drehgegenstand wirkende Axialkraft (Fy) zu berechnen.

15. Detektionsgerät nach einem der Ansprüche 2, 3 und 10, wobei
die zwei Empfangsspulen (110, 120, 130, 140, 150) eine erste Empfangsspule (110, 130) und eine zweite Empfangsspule (120, 140) sind,
das Detektionsgerät des Weiteren Folgendes aufweist:
eine Signalermittlungsseinheit (163), die gestaltet ist, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu ermitteln;
eine Offsetspannungsberechnungseinheit (162), die gestaltet ist, um auf der Grundlage von Drehwinkelinformationen des Drehteils (80, 83, 86) zur Erfassung sowohl eine erste axiale Offsetspannung (vofty1), die die erste Hüllkurve (ENV1) in einem Referenzzustand darstellt, als auch eine zweite axiale Offsetspannung (vofty2), die die zweite Hüllkurve (ENV2) in dem Referenzzustand darstellt, zu berechnen;
eine Verlagerungsspannungsberechnungseinheit (163), die gestaltet ist, um eine erste axiale Verlagerungsspannung (vdy1) zu berechnen, indem die berechnete erste axiale Offsetspannung (vofty1) von der ermittelten ersten Hüllkurve (ENV1) subtrahiert wird, und um eine zweite axiale Verlagerungsspannung (vdy2) zu berechnen, indem die berechnete zweite axiale Offsetspannung (vofty2) von der ermittelten zweiten Hüllkurve (ENV2) subtrahiert wird; und
eine Kraftberechnungseinheit (72), die gestaltet ist, um auf der Grundlage der berechneten ersten axialen Verlagerungsspannung (vdy1) eine erste Axialkraft (Fy1) zu berechnen, die eine auf den Drehgegenstand wirkende Axialkraft (Fy) darstellt, und um auf der Grundlage der berechneten zweiten axialen Verlagerungsspannung (vdy2) eine zweite Axialkraft (Fy2) zu berechnen, die ebenfalls die auf den Drehgegenstand wirkende Axialkraft (Fy) darstellt,
wobei
die Kraftberechnungseinheit (72) die erste Axialkraft (Fy1) als die auf den Drehgegenstand wirkende Axialkraft (Fy) während eines Zeitraums berechnet, in dem die erste axiale Offsetspannung (vofty1) höher ist als die zweite axiale Offsetspannung, und die zweite Axialkraft (Fy2) als die auf den Drehgegenstand wirkende Axialkraft (Fy) während eines Zeitraums berechnet, in dem die zweite axiale Offsetspannung (vofty2) höher ist als die erste axiale Offsetspannung.

16. Detektionsgerät nach einem der Ansprüche 2, 3 und 10, wobei
die zwei Empfangsspulen (110, 120, 130, 140, 150) eine erste Empfangsspule (110, 130) und eine zweite Empfangsspule (120, 140) sind,
das Detektionsgerät des Weiteren Folgendes aufweist:
eine Signalermittlungsseinheit (163), die gestaltet ist, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu ermitteln;
eine Offsetspannungsberechnungseinheit (162), die gestaltet ist, um auf der Grundlage von Drehwinkelinformationen des Drehteils (80, 83, 86) zur Erfassung sowohl eine erste axiale Offsetspannung (vofty1), die die erste Hüllkurve (ENV1) in einem Referenzzustand darstellt, als auch eine zweite axiale Offsetspannung (vofty2), die die zweite Hüllkurve (ENV2) in dem Referenzzustand darstellt, zu berechnen;
eine Verlagerungsspannungsberechnungseinheit (163), die gestaltet ist, um eine erste axiale Verlagerungsspannung (vdy1) zu berechnen, indem die berechnete erste axiale Offsetspannung (vofty1) von der ermittelten ersten Hüllkurve (ENV1) subtrahiert wird, und um eine zweite axiale Verlagerungsspannung (vdy2) zu berechnen, indem die berechnete zweite axiale Offsetspannung (vofty2) von der ermittelten zweiten Hüllkurve (ENV2) subtrahiert wird; und
eine Kraftberechnungseinheit (72), die gestaltet ist, um während eines Zeitraums, in dem die erste axiale Offsetspannung (vofty1) höher ist als die zweite axiale Offsetspannung (vofty2), eine auf den Drehgegenstand wirkende Axialkraft (Fy) auf der Grundlage der ersten axialen Verlagerungsspannung (vdy1) zu berechnen, und um während eines Zeitraums, in dem die zweite axiale Offsetspannung (vofty2) höher ist als die erste axiale Offsetspannung, die auf den Drehgegenstand wirkende Axialkraft (Fy) auf der Grundlage der zweiten axialen Verlagerungsspannung (vdy2) zu berechnen.

17. Detektionsgerät nach Anspruch 2 oder 3, wobei
die zwei Empfangsspulen (110, 120, 130, 140, 150) eine erste Empfangsspule (110, 130) und eine zweite Empfangsspule (120, 140) sind,
das Detektionsgerät des Weiteren Folgendes aufweist:
eine Signalermittlungsseinheit (169), die gestaltet ist, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu ermitteln;
eine Offsetspannungsberechnungseinheit (168), die gestaltet ist, um auf der Grundlage von Drehwinkelinformationen des Drehteils (80, 83, 86) zur Erfassung sowohl eine axiale Offsetspannung (vofty), die die erste Hüllkurve (ENV1) in einem Referenzzustand darstellt, als auch eine vertikale Offsetspannung (voftz), die die zweite Hüllkurve (ENV2) in dem Referenzzustand darstellt, zu berechnen; und
eine Verlagerungsspannungsberechnungseinheit (169),
wobei
die Verlagerungsspannungsberechnungseinheit (169) gestaltet ist, um:
eine axiale Verlagerungsspannung (vdy) zu berechnen, indem die berechnete axiale Offsetspannung (vofty) von der ermittelten ersten Hüllkurve (ENV2) subtrahiert wird;
auf der Grundlage der berechneten axialen Verlagerungsspannung (vdy) eine vertikale Korrekturspannung (vcz) zu berechnen, die eine Wirkung der Verlagerung des Drehteils (80, 83, 86) zur Erfassung in der axialen Richtung auf die zweite Hüllkurve (ENV2) quantifiziert; und
eine vertikale Verlagerungsspannung (vdz) zu berechnen, indem sowohl die berechnete vertikale Offsetspannung (voftz) als auch die berechnete vertikale Korrekturspannung (vcz) von der ermittelten zweiten Hüllkurve (ENV2) subtrahiert werden.

18. Detektionsgerät nach Anspruch 17, das des Weiteren eine Kraftberechnungseinheit (72) aufweist, die gestaltet ist, um:
auf der Grundlage der berechneten axialen Verlagerungsspannung (vdy) eine auf den Drehgegenstand wirkende Axialkraft (Fy) zu berechnen; und
auf der Grundlage der berechneten vertikalen Verlagerungsspannung (vdz) eine auf den Drehgegenstand wirkende vertikale Last (Fz) zu berechnen.

19. Detektionsgerät nach Anspruch 10, wobei
die zwei Empfangsspulen (110, 120, 130, 140, 150) eine erste Empfangsspule (110, 130) und eine zweite Empfangsspule (120, 140) sind,
das Detektionsgerät des Weiteren Folgendes aufweist:
eine Signalermittlungsseinheit (171), die gestaltet ist, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu ermitteln;
eine Offsetspannungsberechnungseinheit (170), die gestaltet ist, um auf der Grundlage von Drehwinkelinformationen des Drehteils (80, 83, 86) zur Erfassung sowohl eine axiale Offsetspannung (vofty), die die erste Hüllkurve (ENV1) in einem Referenzzustand darstellt, als auch eine Vorwärts-/Rückwärts-Offsetspannung (voftx), die die zweite Hüllkurve (ENV2) in dem Referenzzustand darstellt, zu berechnen; und
eine Verlagerungsspannungsberechnungseinheit (171),
wobei
die Verlagerungsspannungsberechnungseinheit (171) gestaltet ist, um:
eine axiale Verlagerungsspannung (vdy) zu berechnen, indem die berechnete axiale Offsetspannung (vofty) von der ermittelten ersten Hüllkurve (ENV1) subtrahiert wird;
auf der Grundlage der berechneten axialen Verlagerungsspannung (vdy) eine Vorwärts-/Rückwärts-Korrekturspannung (vcx) zu berechnen, die eine Wirkung der Verlagerung des Drehteils (80, 83, 86) zur Erfassung in der axialen Richtung auf die zweite Hüllkurve (ENV2) quantifiziert; und
eine Vorwärts-/Rückwärts-Verlagerungsspannung (vdx) zu berechnen, indem sowohl die berechnete Vorwärts-/Rückwärts-Offsetspannung (voftx) als auch die berechnete Vorwärts-/Rückwärts-Korrekturspannung (vcx) von der ermittelten zweiten Hüllkurve (ENV2) subtrahiert werden.

20. Detektionsgerät nach Anspruch 19, das des Weiteren eine Kraftberechnungseinheit (72) aufweist, die gestaltet ist, um:
auf der Grundlage der berechneten axialen Verlagerungsspannung (vdy) eine auf den Drehgegenstand wirkende Axialkraft (Fy) zu berechnen; und
auf der Grundlage der berechneten Vorwärts-/Rückwärts-Verlagerungsspannung (vdx) eine auf den Drehgegenstand wirkende Vorwärts-/Rückwärtskraft (Fx) zu berechnen.

21. Detektionsgerät nach Anspruch 11, das des Weiteren eine Filtereinheit (172) aufweist, die gestaltet ist, um einen Tiefpassfilterprozess an der ermittelten Hüllkurve (ENV1) auszuführen,
wobei
an der Verlagerungsspannungsberechnungseinheit die Hüllkurve (ENV1) eingegeben wird, die dem Tiefpassfilterprozess unterzogen wurde.

22. Detektionsgerät nach einem der Ansprüche 2, 3 und 10, das des Weiteren Folgendes aufweist:
eine Signalermittlungsseinheit (172), die gestaltet ist, um eine Hüllkurve (ENV1) des von einer der Empfangsspulen (110, 120, 130, 140, 150) ausgegebenen Spannungssignals (v1) zu ermitteln;
eine Amplitudeninformationsberechnungseinheit (174), die gestaltet ist, um auf der Grundlage von Drehwinkelinformationen des Drehteils (80, 83, 86) zur Erfassung und der ermittelten Hüllkurve (ENV1) eine Amplitudeninformationsspannung (vmaxy) der Hüllkurve (ENV1) zu berechnen; und
eine Verlagerungsspannungsberechnungseinheit (175), die gestaltet ist, um eine axiale Verlagerungsspannung (vdy) zu berechnen, indem eine Referenzspannung (vmaxofty), die die Amplitudeninformationsspannung (vmaxy) in einem Referenzzustand darstellt, von der berechneten Amplitudeninformationsspannung (vmaxy) subtrahiert wird.

23. Detektionsgerät nach Anspruch 22, das des Weiteren eine Kraftberechnungseinheit (72) aufweist, die gestaltet ist, um auf der Grundlage der berechneten axialen Verlagerungsspannung (vdy) eine auf den Drehgegenstand wirkende Axialkraft (Fy) zu berechnen.

24. Detektionsgerät nach einem der Ansprüche 1 bis 4 und 7 bis 10, wobei
der Erfassungszielteil (81, 82, 84, 85, 87, 88) Folgendes hat:
eine Gestaltung, in der Metallabschnitte (81) und in der axialen Richtung durchdrungene Abschnitte (82) in der Umfangsrichtung abwechselnd vorgesehen sind;
eine Gestaltung, in der ausgesparte Abschnitte (88), die in der axialen Richtung ausgespart sind, und Vorsprungsabschnitte (87), die in der axialen Richtung in Bezug auf die ausgesparten Abschnitte (88) vorstehen, abwechselnd in der Umfangsrichtung vorgesehen sind; oder
eine Gestaltung, in der Metallabschnitte (81) und Nichtmetallabschnitte (82, 84) abwechselnd in der Umfangsrichtung vorgesehen sind,
das Detektionsgerät des Weiteren eine Winkelberechnungseinheit (73) aufweist, die gestaltet ist, um auf der Grundlage des von jeder Empfangsspule (110, 120, 130, 140, 150) ausgegebenen Spannungssignals einen Drehwinkel des Drehteils (80, 83, 86) zur Erfassung zu berechnen.

25. Programm, das bei dem Detektionsgerät nach einem der Ansprüche 2, 3 und 10 anwendbar ist, wobei das Programm gestaltet ist, um zu bewirken, dass ein in dem Detektionsgerät vorgesehener Computer (70) Folgendes ausführt:
einen Signalermittlungsprozess, um eine Hüllkurve (ENV1) des von einer der Empfangsspulen (110, 120, 130, 140, 150) ausgegebenen Spannungssignals (v1) zu ermitteln;
einen Offsetspannungsberechnungsprozess, um auf der Grundlage von Drehwinkelinformationen des Drehteils (80, 83, 86) zur Erfassung eine axiale Offsetspannung (vofty) zu berechnen, die die Hüllkurve (ENV1) in einem Referenzzustand darstellt; und
einen Verlagerungsspannungsberechnungsprozess, um eine axiale Verlagerungsspannung (vdy) zu berechnen, indem die berechnete axiale Offsetspannung (vofty) von der ermittelten Hüllkurve (ENV1) subtrahiert wird.

26. Programm, das bei dem Detektionsgerät nach einem der Ansprüche 2, 3 und 10 anwendbar ist, wobei
die zwei Empfangsspulen (110, 120, 130, 140, 150) eine erste Empfangsspule (110, 130) und eine zweite Empfangsspule (120, 140) sind,
das Programm gestaltet ist, um zu bewirken, dass ein in dem Detektionsgerät vorgesehener Computer (70) Folgendes ausführt:
einen Signalermittlungsprozess, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu ermitteln;
einen Offsetspannungsberechnungsprozess, um auf der Grundlage von Drehwinkelinformationen des Drehteils (80, 83, 86) zur Erfassung sowohl eine erste axiale Offsetspannung (vofty1), die die erste Hüllkurve (ENV1) in einem Referenzzustand darstellt, als auch eine zweite axiale Offsetspannung (vofty2), die die zweite Hüllkurve (ENV2) in dem Referenzzustand darstellt, zu berechnen;
einen Verlagerungsspannungsberechnungsprozess, um eine erste axiale Verlagerungsspannung (vdy1) zu berechnen, indem die berechnete erste axiale Offsetspannung (vofty1) von der ermittelten ersten Hüllkurve (ENV1) subtrahiert wird, und um eine zweite axiale Verlagerungsspannung (vdy2) zu berechnen, indem die berechnete zweite axiale Offsetspannung (vofty2) von der ermittelten zweiten Hüllkurve (ENV2) subtrahiert wird; und
einen Gesamtspannungsberechnungsprozess, um eine Gesamtspannung (vdty) zu berechnen, indem ein Absolutwert der berechneten ersten axialen Verlagerungsspannung (vdy1) und ein Absolutwert der berechneten zweiten axialen Verlagerungsspannung (vdy2) addiert werden.

27. Programm, das bei dem Detektionsgerät nach einem der Ansprüche 2, 3 und 10 anwendbar ist, wobei
die zwei Empfangsspulen (110, 120, 130, 140, 150) eine erste Empfangsspule (110, 130) und eine zweite Empfangsspule (120, 140) sind,
das Programm gestaltet ist, um zu bewirken, dass ein in dem Detektionsgerät vorgesehener Computer (70) Folgendes ausführt:
einen Signalermittlungsprozess, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu berechnen;
einen Offsetspannungsberechnungsprozess, um auf der Grundlage von Drehwinkelinformationen des Drehteils (80, 83, 86) zur Erfassung sowohl eine erste axiale Offsetspannung (vofty1), die die erste Hüllkurve (ENV1) in einem Referenzzustand darstellt, als auch eine zweite axiale Offsetspannung (vofty2), die die zweite Hüllkurve (ENV2) in dem Referenzzustand darstellt, zu berechnen;
einen Verlagerungsspannungsberechnungsprozess, um eine erste axiale Verlagerungsspannung (vdy1) zu berechnen, indem die berechnete erste axiale Offsetspannung (vofty1) von der ermittelten ersten Hüllkurve (ENV1) subtrahiert wird, und um eine zweite axiale Verlagerungsspannung (vdy2) zu berechnen, indem die berechnete zweite axiale Offsetspannung (vofty2) von der ermittelten zweiten Hüllkurve (ENV2) subtrahiert wird; und
einen Kraftberechnungsprozess, um auf der Grundlage der berechneten ersten axialen Verlagerungsspannung (vdy1) eine erste Axialkraft (Fy1) zu berechnen, die eine auf den Drehgegenstand wirkende Axialkraft (Fy) darstellt, und um auf der Grundlage der berechneten zweiten axialen Verlagerungsspannung (vdy2) eine zweite Axialkraft (Fy2) zu berechnen, die ebenfalls die auf den Drehgegenstand wirkende Axialkraft (Fy) darstellt,
wobei
in dem Kraftberechnungsprozess:
die erste Axialkraft (Fy1) als die auf den Drehgegenstand wirkende Axialkraft (Fy) während eines Zeitraums berechnet wird, in dem die erste axiale Offsetspannung (vofty1) höher ist als die zweite axiale Offsetspannung (vofty2); und
die zweite Axialkraft (Fy2) als die auf den Drehgegenstand wirkende Axialkraft (Fy) während eines Zeitraums berechnet wird, in dem die zweite axiale Offsetspannung (vofty2) höher ist als die erste axiale Offsetspannung (vofty1).

28. Programm, das bei dem Detektionsgerät nach einem der Ansprüche 2, 3 und 10 anwendbar ist, wobei
die zwei Empfangsspulen (110, 120, 130, 140, 150) eine erste Empfangsspule (110, 130) und eine zweite Empfangsspule (120, 140) sind,
das Programm gestaltet ist, um zu bewirken, dass ein in dem Detektionsgerät vorgesehener Computer (70) Folgendes ausführt:
einen Signalermittlungsprozess, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu ermitteln;
einen Offsetspannungsberechnungsprozess, um auf der Grundlage von Drehwinkelinformationen des Drehteils (80, 83, 86) zur Erfassung sowohl eine erste axiale Offsetspannung (vofty1), die die erste Hüllkurve (ENV1) in einem Referenzzustand darstellt, als auch eine zweite axiale Offsetspannung (vofty2), die die zweite Hüllkurve (ENV2) in dem Referenzzustand darstellt, zu berechnen;
einen Verlagerungsspannungsberechnungsprozess, um eine erste axiale Verlagerungsspannung (vdy1) zu berechnen, indem die berechnete erste axiale Offsetspannung (vofty1) von der ermittelten ersten Hüllkurve (ENV1) subtrahiert wird, und um eine zweite axiale Verlagerungsspannung (vdy2) zu berechnen, indem die berechnete zweite axiale Offsetspannung (vofty2) von der ermittelten zweiten Hüllkurve (ENV2) subtrahiert wird; und
einen Kraftberechnungsprozess, um während eines Zeitraums, in dem die erste axiale Offsetspannung (vofty1) höher ist als die zweite axiale Offsetspannung (vofty2), eine auf den Drehgegenstand wirkende Axialkraft (Fy) auf der Grundlage der ersten axialen Verlagerungsspannung (vdy1) zu berechnen, und um während eines Zeitraums, in dem die zweite axiale Offsetspannung (vofty2) höher ist als die erste axiale Offsetspannung (vofty1), die auf den Drehgegenstand wirkende Axialkraft (Fy) auf der Grundlage der zweiten axialen Verlagerungsspannung (vdy2) zu berechnen.

29. Programm, das bei dem Detektionsgerät nach Anspruch 2 oder 3 anwendbar ist, wobei
die zwei Empfangsspulen (110, 120, 130, 140, 150) eine erste Empfangsspule (110, 130) und eine zweite Empfangsspule (120, 140) sind,
das Programm gestaltet ist, um zu bewirken, dass ein in dem Detektionsgerät vorgesehener Computer (70) Folgendes ausführt:
einen Signalermittlungsprozess, um sowohl eine erste Hüllkurve (ENV1), die eine Hüllkurve eines ersten Spannungssignals (v1) ist, das von der ersten Empfangsspule (110, 130) ausgegeben wird, als auch eine zweite Hüllkurve (ENV2), die eine Hüllkurve eines zweiten Spannungssignals (v2) ist, das von der zweiten Empfangsspule (120, 140) ausgegeben wird, zu ermitteln;
einen Offsetspannungsberechnungsprozess, um auf der Grundlage von Drehwinkelinformationen des Drehteils (80, 83, 86) zur Erfassung sowohl eine axiale Offsetspannung (vofty), die die erste Hüllkurve (ENV1) in einem Referenzzustand darstellt, als auch eine vertikale Offsetspannung (voftz), die die zweite Hüllkurve (ENV2) in dem Referenzzustand darstellt, zu berechnen; und
einen Verlagerungsspannungsberechnungsprozess,
wobei
in dem Verlagerungsspannungsberechnungsprozess:
eine axiale Verlagerungsspannung (vdy) berechnet wird, indem die berechnete axiale Offsetspannung (vofty) von der ermittelten ersten Hüllkurve (ENV1) subtrahiert wird;
eine vertikale Korrekturspannung (vcz), die eine Wirkung der Verlagerung des Drehteils (80, 83, 86) zur Erfassung in der axialen Richtung auf die zweite Hüllkurve (ENV2) quantifiziert, auf der Grundlage der berechneten axialen Verlagerungsspannung (vdy) berechnet wird; und
eine vertikale Verlagerungsspannung (vdz) berechnet wird, indem sowohl die berechnete vertikale Offsetspannung (voftz) als auch die berechnete vertikale Korrekturspannung (vcz) von der ermittelten zweiten Hüllkurve (ENV2) subtrahiert werden.

30. Programm, das bei dem Detektionsgerät nach Anspruch 10 anwendbar ist, wobei
die zwei Empfangsspulen (110, 120, 130, 140, 150) eine erste Empfangsspule (110, 130) und eine zweite Empfangsspule (120, 140) sind,
das Programm gestaltet ist, um zu bewirken, dass ein in dem Detektionsgerät vorgesehener Computer (70) Folgendes ausführt:
einen Signalermittlungsprozess, um sowohl eine erste Hüllkurve (ENV1), die eine Hüllkurve eines von der ersten Empfangsspule (110, 130) ausgegebenen ersten Spannungssignals (v1) ist, als auch eine zweite Hüllkurve (ENV2), die eine Hüllkurve eines von der zweiten Empfangsspule (120, 140) ausgegebenen zweiten Spannungssignals (v2) ist, zu ermitteln;
einen Offsetspannungsberechnungsprozess, um auf der Grundlage von Drehwinkelinformationen des Drehteils (80, 83, 86) zur Erfassung sowohl eine axiale Offsetspannung, die die erste Hüllkurve (ENV1) in einem Referenzzustand darstellt, als auch eine Vorwärts-/Rückwärts-Offsetspannung (voftx), die die zweite Hüllkurve (ENV2) in dem Referenzzustand darstellt, zu berechnen; und
einen Verlagerungsspannungsberechnungsprozess,
wobei
in dem Verlagerungsspannungsberechnungsprozess:
eine axiale Verlagerungsspannung (vdy) berechnet wird, indem die berechnete axiale Offsetspannung (vofty) von der ermittelten ersten Hüllkurve (ENV1) subtrahiert wird;
eine Vorwärts-/Rückwärts-Korrekturspannung (vcx), die eine Wirkung der Verlagerung des Drehteils (80, 83, 86) zur Erfassung in der axialen Richtung auf die zweite Hüllkurve (ENV2) quantifiziert, auf der Grundlage der berechneten Verlagerungsspannung (vdy) berechnet wird; und
eine Vorwärts-/Rückwärts-Verlagerungsspannung (vdx) berechnet wird, indem sowohl die berechnete Vorwärts-/Rückwärts-Offsetspannung (voftx) als auch die berechnete Vorwärts-/Rückwärts-Korrekturspannung (vcx) von der ermittelten zweiten Hüllkurve (ENV2) subtrahiert werden.

31. Programm, das bei dem Detektionsgerät nach einem der Ansprüche 2, 3 und 10 anwendbar ist, wobei das Programm gestaltet ist, um zu bewirken, dass ein in dem Detektionsgerät vorgesehener Computer (70) Folgendes auszuführt:
einen Signalermittlungsprozess, um eine Hüllkurve (ENV1) des von einer der Empfangsspulen (110, 120, 130, 140, 150) ausgegebenen Spannungssignals (v1) zu ermitteln;
einen Amplitudeninformationsberechnungsprozess, um auf der Grundlage von Drehwinkelinformationen des Drehteils (80, 83, 86) zur Erfassung und der ermittelten Hüllkurve (ENV1) eine Amplitudeninformationsspannung (vmaxy) der Hüllkurve (110, 120, 130, 140, 150) zu berechnen; und
einen Verlagerungsspannungsberechnungsprozess, um eine axiale Verlagerungsspannung (vdy) zu berechnen, indem eine Referenzspannung (vmaxofty), die die Amplitudeninformationsspannung (vmaxy) in einem Referenzzustand darstellt, von der berechneten Amplitudeninformationsspannung (vmaxy) subtrahiert wird.

## Revendications

1. Appareil de détection comprenant :
une partie de base (42) ; et
un roulement (50) configuré pour supporter un objet rotatif de manière à ce qu'il puisse tourner par rapport à la partie de base (42), le roulement (50) comportant un élément de bague extérieur (51), un élément de bague intérieur (52) et des éléments roulants (53) disposés entre l'élément de bague extérieur (51) et l'élément de bague intérieur (52),
dans lequel
un premier élément de roulement (52), qui est soit l'élément de bague extérieure (51), soit l'élément de bague intérieure (52), est fixé à l'objet rotatif, et
un second élément de roulement (51), qui est l'autre de l'élément de bague extérieur (42) et de l'élément de bague intérieur (52), est fixé à la partie de base (42),
l'appareil de détection comprenant en outre :
une pièce rotative discoïde (80, 83, 86) pour la détection, prévue de manière à tourner conjointement avec le premier élément de roulement (52), la pièce rotative (80, 83, 86) pour la détection s'étendant radialement vers l'extérieur du roulement (50) par rapport au premier élément de roulement (52) ; et
une unité de détection de déplacement (90) qui fait face à la pièce rotative (80, 83, 86) pour la détection dans une direction axiale du roulement (50), l'unité de détection de déplacement (90) étant configurée pour émettre un signal de tension selon le déplacement de la pièce rotative (80, 83, 86) pour la détection dans la direction axiale et le déplacement de la pièce rotative (80, 83, 86) pour la détection dans une direction perpendiculaire à la direction axiale,
**caractérisé en ce que**
l'unité de détection de déplacement (90) est prévue dans la partie de base (42) à une position située radialement à l'écart du roulement (50),
dans la pièce rotative (80, 83, 86) pour la détection est formée, à une position située radialement à l'écart du roulement (50), une pièce annulaire cible de détection (81, 82, 84, 85, 87, 88) qui s'étend dans une direction circonférentielle du roulement (50),
l'unité de détection de déplacement (90) comprend :
deux bobines de réception planes (110, 120, 130, 140) fixées à la partie de base (42), situées à une position faisant face à une extrémité supérieure ou à une extrémité inférieure de la pièce cible de détection (81, 82, 84, 85, 87, 88) dans la direction axiale, et s'étendant dans une direction coupant la direction axiale ; et
une bobine d'excitation (100) à laquelle une tension d'excitation CA est fournie,
lorsque la tension d'excitation est fournie à la bobine d'excitation (100), des tensions sont induites dans les bobines de réception (110, 120, 130, 140),
dans une vue en plan des bobines de réception (110, 120, 130, 140), une extrémité radialement extérieure de l'une (120, 140) des bobines de réception (110, 120, 130, 140) fait saillie à partir d'une extrémité radialement extérieure (81a) de la pièce cible de détection (81, 82, 84, 85, 87, 88),
des positions radiales des extrémités radialement extérieures des bobines de réception (110, 120, 130, 140) sont différentes les unes des autres, et
chacune des bobines de réception (110, 120, 130, 140) est configurée pour émettre un signal de tension selon le déplacement de la pièce rotative (80, 83, 86) pour la détection dans la direction axiale et le déplacement de la pièce rotative (80, 83, 86) pour la détection dans la direction perpendiculaire à la direction axiale.

2. Appareil de détection selon la revendication 1, dans lequel
chacune des bobines de réception (110, 120) comporte :
une première partie (110A, 120A) qui génère une tension d'une première polarité entre deux extrémités de la bobine de réception (110, 120) lorsque la tension d'excitation est fournie à la bobine d'excitation (100) ; et
une seconde partie (110B, 120B) qui génère une tension d'une seconde polarité, qui est opposée à la première polarité, entre les deux extrémités de la bobine de réception (110, 120) lorsque la tension d'excitation est fournie à la bobine d'excitation (100),
chacune des bobines de réception (110, 120) comporte :
une configuration telle que, dans une vue en plan de la bobine de réception (110, 120), la première partie (120A) est située d'un côté d'un centre circonférentiel de la bobine de réception (110, 120), la seconde partie (120B) est située de l'autre côté du centre circonférentiel, et la première partie (120A) et la seconde partie (120B) sont alignées dans la direction circonférentielle ; ou
une configuration telle que, dans une vue en plan de la bobine de réception (110, 120), des formes de la première partie (110A) et de la seconde partie (110B) situées d'un côté du centre circonférentiel de la bobine de réception (110, 120) et des formes de la première partie (120A) et de la seconde partie (120B) situées de l'autre côté du centre circonférentiel sont symétriques par rapport au centre circonférentiel,
des dimensions circonférentielles des bobines de réception (110, 120) sont égales les unes aux autres, et
une dimension radiale de l'une (120) des bobines de réception (110, 120) dont l'extrémité radialement extérieure faisant saillie depuis l'extrémité radialement extérieure (81a) de la pièce cible de détection (81, 82, 84, 85, 87, 88) est supérieure à une dimension radiale de l'autre des bobines de réception (110, 120).

3. Appareil de détection selon la revendication 1, dans lequel
chacune des bobines de réception (130, 140) comporte :
une première partie (130A, 140A) qui génère une tension d'une première polarité entre deux extrémités de la bobine de réception (130, 140) lorsque la tension d'excitation est fournie à la bobine d'excitation (100) ; et
une seconde partie (130B, 140B) qui génère une tension d'une seconde polarité, qui est opposée à la première polarité, entre les deux extrémités de la bobine de réception (130, 140) lorsque la tension d'excitation est fournie à la bobine d'excitation (100),
chacune des bobines de réception (130, 140) comporte :
une configuration telle que, dans une vue en plan de la bobine de réception (130, 140), la première partie (130A, 140A) est située d'un côté d'un centre circonférentiel de la bobine de réception (130, 140), la seconde partie (130B, 140B) est située de l'autre côté du centre circonférentiel, et la première partie (130A, 140A) et la seconde partie (130B, 140B) sont alignées dans la direction circonférentielle ; ou
une configuration telle que, dans une vue en plan de la bobine de réception (130, 140), des formes de la première partie (130A, 140A) et de la seconde partie (130B, 140B) situées d'un côté du centre circonférentiel de la bobine de réception (130, 140) et des formes de la première partie (130A, 140A) et de la seconde partie (130B, 140B) situées de l'autre côté du centre circonférentiel sont symétriques par rapport au centre circonférentiel,
des dimensions circonférentielles des bobines de réception (130, 140) sont égales les unes aux autres, et
des dimensions radiales des bobines de réception (130, 140) sont aussi égales les unes aux autres.

4. Appareil de détection comprenant :
une partie de base (42) ; et
un roulement (50) configuré pour supporter un objet rotatif de manière à ce qu'il puisse tourner par rapport à la partie de base (42), le roulement (50) comportant un élément de bague extérieur (51), un élément de bague intérieur (52) et des éléments roulants (53) disposés entre l'élément de bague extérieur (51) et l'élément de bague intérieur (52),
dans lequel
un premier élément de roulement (52), qui est soit l'élément de bague extérieure (51), soit l'élément de bague intérieure (52), est fixé à l'objet rotatif, et
un second élément de roulement (51), qui est l'autre de l'élément de bague extérieur (42) et de l'élément de bague intérieur (52), est fixé à la partie de base (42),
l'appareil de détection comprenant en outre :
une pièce rotative discoïde (80, 83, 86) pour la détection, prévue de manière à tourner conjointement avec le premier élément de roulement (52), la pièce rotative (80, 83, 86) pour la détection s'étendant radialement vers l'extérieur du roulement (50) par rapport au premier élément de roulement (52) ; et
une unité de détection de déplacement (90) qui fait face à la pièce rotative (80, 83, 86) pour la détection dans une direction axiale du roulement (50), l'unité de détection de déplacement (90) étant configurée pour émettre un signal de tension selon le déplacement de la pièce rotative (80, 83, 86) pour la détection dans la direction axiale et le déplacement de la pièce rotative (80, 83, 86) pour la détection dans une direction perpendiculaire à la direction axiale,
**caractérisé en ce que**
l'unité de détection de déplacement (90) est prévue dans la partie de base (42) à une position située radialement à l'écart du roulement (50),
dans la pièce rotative (80, 83, 86) pour la détection est formée, à une position située radialement à l'écart du roulement (50), une pièce annulaire cible de détection (81, 82, 84, 85, 87, 88) qui s'étend dans une direction circonférentielle du roulement (50),
l'unité de détection de déplacement (90) comprend :
une bobine de réception plane (150) fixée à la partie de base (42), située à une position faisant face à une extrémité de la pièce cible de détection (81, 82, 84, 85, 87, 88) dans la direction axiale, et s'étendant dans une direction coupant la direction axiale ; et
une bobine d'excitation (100) à laquelle une tension d'excitation CA est fournie,
la bobine de réception (150) comporte :
une première partie (150A) qui génère une tension d'une première polarité entre deux extrémités de la bobine de réception (150) lorsque la tension d'excitation est fournie à la bobine d'excitation (100) ; et
une seconde partie (150B) qui génère une tension d'une seconde polarité, qui est opposée à la première polarité, entre les deux extrémités de la bobine de réception (150) lorsque la tension d'excitation est fournie à la bobine d'excitation (100),
la bobine de réception (150) comporte :
une configuration telle que, dans une vue en plan de la bobine de réception (150), la première partie (150A) est située d'un côté d'un centre circonférentiel de la bobine de réception (150), la seconde partie (150B) est située de l'autre côté du centre circonférentiel, et la première partie (150A) et la seconde partie (150B) sont alignées dans la direction circonférentielle ; ou
une configuration telle que, dans une vue en plan de la bobine de réception (150), des formes de la première partie (150A) et de la seconde partie (150B) situées d'un côté du centre circonférentiel de la bobine de réception (150) et des formes de la première partie (150A) et de la seconde partie (150B) situées de l'autre côté du centre circonférentiel sont symétriques par rapport au centre circonférentiel,
une dimension circonférentielle de la première partie (150A) est égale à une dimension circonférentielle de la seconde partie (150B),
une dimension radiale de l'une des première et seconde parties (150A, 150B) est supérieure à une dimension radiale de l'autre des première et seconde parties (150A, 150B),
dans une vue en plan de la bobine de réception (150), une extrémité radialement extérieure de celle des première et seconde parties (150A, 150B) qui présente la dimension radiale la plus grande fait saillie depuis une extrémité radialement extérieure (81a) de la pièce cible de détection (81, 82, 84, 85, 87, 88),
des positions radiales des extrémités radialement extérieures des première et seconde parties (150A, 150B) sont différentes l'une de l'autre, et
la bobine de réception (150) est configurée pour émettre un signal de tension selon le déplacement de la pièce rotative (80, 83, 86) pour la détection dans la direction axiale et le déplacement de la pièce rotative (80, 83, 86) pour la détection dans la direction perpendiculaire à la direction axiale.

5. Appareil de détection selon l'une des revendications 1 à 4, dans lequel
l'objet rotatif est disposé de telle sorte que son centre de rotation se trouve en position horizontale, et
l'appareil de détection comprend en outre une unité de calcul de déplacement (71) configurée pour calculer, sur la base du signal de tension émis par chacune des bobines de réception (110, 120, 130, 140, 150), à la fois le déplacement de la pièce rotative (80, 83, 86) pour la détection dans la direction axiale et le déplacement de la pièce rotative (80, 83, 86) pour la détection dans une direction verticale qui est la direction perpendiculaire à la direction axiale.

6. Appareil de détection selon la revendication 5, comprenant en outre une unité de calcul de force (72) configurée pour :
calculer, sur la base du déplacement calculé dans la direction axiale, une force axiale (Fy) agissant sur l'objet rotatif ; et
calculer, sur la base du déplacement calculé dans la direction verticale, une charge verticale (Fz) agissant sur l'objet rotatif.

7. Appareil de détection comprenant :
une partie de base (42) ; et
un roulement (50) configuré pour supporter un objet rotatif de manière à ce qu'il puisse tourner par rapport à la partie de base (42), le roulement (50) comportant un élément de bague extérieur (51), un élément de bague intérieur (52) et des éléments roulants (53) disposés entre l'élément de bague extérieur (51) et l'élément de bague intérieur (52),
dans lequel
un premier élément de roulement (52), qui est soit l'élément de bague extérieure (51), soit l'élément de bague intérieure (52), est fixé à l'objet rotatif, et
un second élément de roulement (51), qui est l'autre de l'élément de bague extérieur (42) et de l'élément de bague intérieur (52), est fixé à la partie de base (42),
l'appareil de détection comprenant en outre :
une pièce rotative discoïde (80, 83, 86) pour la détection, prévue de manière à tourner conjointement avec le premier élément de roulement (52), la pièce rotative (80, 83, 86) pour la détection s'étendant radialement vers l'extérieur du roulement (50) par rapport au premier élément de roulement (52) ; et
une unité de détection de déplacement (90) qui fait face à la pièce rotative (80, 83, 86) pour la détection dans une direction axiale du roulement (50), l'unité de détection de déplacement (90) étant configurée pour émettre un signal de tension selon le déplacement de la pièce rotative (80, 83, 86) pour la détection dans la direction axiale et le déplacement de la pièce rotative (80, 83, 86) pour la détection dans une direction perpendiculaire à la direction axiale,
**caractérisé en ce que**
l'unité de détection de déplacement (90) est prévue dans la partie de base (42) à une position située radialement à l'écart du roulement (50),
dans la pièce rotative (80, 83, 86) pour la détection est formée, à une position située radialement à l'écart du roulement (50), une pièce annulaire cible de détection (81, 82, 84, 85, 87, 88) qui s'étend dans une direction circonférentielle du roulement (50),
l'unité de détection de déplacement (90) comprend :
une bobine de réception plane (110, 120, 130, 140, 150) fixée à la partie de base (42), située à une position faisant face à la pièce cible de détection (81, 82, 84, 85, 87, 88) dans la direction axiale, et s'étendant dans une direction coupant la direction axiale ; et
une bobine d'excitation (100) à laquelle une tension d'excitation CA est fournie,
la bobine de réception (110, 120, 130, 140, 150) comporte :
une première partie (110A, 120A, 130A, 140A, 150A) qui génère une tension d'une première polarité entre deux extrémités de la bobine de réception (110, 120, 130, 140, 150) lorsque la tension d'excitation est fournie à la bobine d'excitation (100) ; et
une seconde partie (110B, 120B, 130B, 140B, 150B) qui génère une tension d'une seconde polarité, qui est opposée à la première polarité, entre les deux extrémités de la bobine de réception (110, 120, 130, 140, 150) lorsque la tension d'excitation est fournie à la bobine d'excitation (100),
la bobine de réception (110, 120, 130, 140, 150) comporte :
une configuration telle que, dans une vue en plan de la bobine de réception (110, 120, 130, 140, 150), la première partie (110A, 120A, 130A, 140A, 150A) est située d'un côté d'un centre circonférentiel de la bobine de réception (110, 120, 130, 140, 150), la seconde partie (110B, 120B, 130B, 140B, 150B) est située de l'autre côté du centre circonférentiel, et la première partie (110A, 120A, 130A, 140A, 150A) et la seconde partie (110B, 120B, 130B, 140B, 150B) sont alignées dans la direction circonférentielle ; ou
une configuration telle que, dans une vue en plan de la bobine de réception (110, 120, 130, 140, 150), des formes de la première partie (110A, 120A, 130A, 140A, 150A) et de la seconde partie (110B, 120B, 130B, 140B, 150B) situées d'un côté du centre circonférentiel de la bobine de réception (110, 120, 130, 140, 150) et des formes de la première partie (110A, 120A, 130A, 140A, 150A) et de la seconde partie (110B, 120B, 130B, 140B, 150B) situées de l'autre côté du centre circonférentiel sont symétriques par rapport au centre circonférentiel,
la bobine de réception (110, 120, 130, 140, 150) est disposée à califourchon sur un axe horizontal passant par un axe central de rotation de la pièce rotative (80, 83, 86) pour la détection, et
la bobine de réception (110, 120, 130, 140, 150) est configurée pour émettre un signal de tension selon le déplacement de la pièce rotative (80, 83, 86) pour la détection dans la direction axiale et le déplacement de la pièce rotative (80, 83, 86) pour la détection dans la direction perpendiculaire à la direction axiale.

8. Appareil de détection selon la revendication 7, dans lequel
l'objet rotatif est disposé de telle sorte que son centre de rotation se trouve en position horizontale, et
l'appareil de détection comprend en outre une unité de calcul de déplacement (71) configurée pour calculer, sur la base du signal de tension émis par la bobine de réception (110, 120, 130, 140, 150), à la fois le déplacement de la pièce rotative (80, 83, 86) pour la détection dans la direction axiale et le déplacement de la pièce rotative (80, 83, 86) pour la détection dans une direction avant/arrière qui est perpendiculaire à la fois à la direction axiale et à une direction verticale.

9. Appareil de détection selon la revendication 8, comprenant en outre une unité de calcul de force (72) configurée pour :
calculer, sur la base du déplacement calculé dans la direction axiale, une force axiale (Fy) agissant sur l'objet rotatif ; et
calculer, sur la base du déplacement calculé dans la direction avant/arrière, une force avant/arrière (Fx) agissant sur l'objet rotatif.

10. Appareil de détection comprenant :
une partie de base (42) ; et
un roulement (50) configuré pour supporter un objet rotatif de manière à ce qu'il puisse tourner par rapport à la partie de base (42), le roulement (50) comportant un élément de bague extérieur (51), un élément de bague intérieur (52) et des éléments roulants (53) disposés entre l'élément de bague extérieur (51) et l'élément de bague intérieur (52),
dans lequel
un premier élément de roulement (52), qui est soit l'élément de bague extérieure (51), soit l'élément de bague intérieure (52), est fixé à l'objet rotatif, et
un second élément de roulement (51), qui est l'autre de l'élément de bague extérieur (42) et de l'élément de bague intérieur (52), est fixé à la partie de base (42),
l'appareil de détection comprenant en outre :
une pièce rotative discoïde (80, 83, 86) pour la détection, prévue de manière à tourner conjointement avec le premier élément de roulement (52), la pièce rotative (80, 83, 86) pour la détection s'étendant radialement vers l'extérieur du roulement (50) par rapport au premier élément de roulement (52) ; et
une unité de détection de déplacement (90) qui fait face à la pièce rotative (80, 83, 86) pour la détection dans une direction axiale du roulement (50), l'unité de détection de déplacement (90) étant configurée pour émettre un signal de tension selon le déplacement de la pièce rotative (80, 83, 86) pour la détection dans la direction axiale et le déplacement de la pièce rotative (80, 83, 86) pour la détection dans une direction perpendiculaire à la direction axiale,
**caractérisé en ce que**
l'unité de détection de déplacement (90) est prévue dans la partie de base (42) à une position située radialement à l'écart du roulement (50),
l'objet rotatif est disposé de telle sorte que son centre de rotation se trouve en position horizontale,
dans la pièce rotative (80, 83, 86) pour la détection est formée, à une position située radialement à l'écart du roulement (50), une pièce annulaire cible de détection (81, 82, 84, 85, 87, 88) qui s'étend dans une direction circonférentielle du roulement (50),
l'unité de détection de déplacement (90) comprend :
deux bobines de réception planes (110, 120, 130, 140) fixées à la partie de base (42), situées à une position faisant face à la pièce cible de détection (81, 82, 84, 85, 87, 88) dans la direction axiale, et s'étendant dans une direction coupant la direction axiale ; et
une bobine d'excitation (100) à laquelle une tension d'excitation CA est fournie,
chacune des bobines de réception (110, 120, 130, 140) comporte : une première partie (110A, 120A, 130A, 140A) qui génère une tension d'une première polarité entre deux extrémités de la bobine de réception (110, 120, 130, 140) lorsque la tension d'excitation est fournie à la bobine d'excitation (100) ; et
une seconde partie (110B, 120B, 130B, 140B) qui génère une tension d'une seconde polarité, qui est opposée à la première polarité, entre les deux extrémités de la bobine de réception (110, 120, 130, 140) lorsque la tension d'excitation est fournie à la bobine d'excitation (100),
chacune des bobines de réception (110, 120, 130, 140) comporte :
une configuration telle que, dans une vue en plan de la bobine de réception (110, 120, 130, 140), la première partie (110A, 120A, 130A, 140A) est située d'un côté d'un centre circonférentiel de la bobine de réception (110, 120, 130, 140), la seconde partie (110B, 120B, 130B, 140B) est située de l'autre côté du centre circonférentiel, et la première partie (110A, 120A, 130A, 140A) et la seconde partie (110B, 120B, 130B, 140B) sont alignées dans la direction circonférentielle ; ou
une configuration telle que, dans une vue en plan de la bobine de réception (110, 120, 130, 140), des formes de la première partie (110A, 120A, 130A, 140A) et de la seconde partie (110B, 120B, 130B, 140B) situées d'un côté du centre circonférentiel de la bobine de réception (110, 120, 130, 140) et des formes de la première partie (110A, 120A, 130A, 140A) et de la seconde partie (110B, 120B, 130B, 140B) situées de l'autre côté du centre circonférentiel sont symétriques par rapport au centre circonférentiel,
chacune des bobines de réception (110, 120, 130, 140) est disposée à califourchon sur un axe horizontal passant par un axe central de rotation de la pièce rotative (80, 83, 86) pour la détection, et
chacune des bobines de réception (110, 120, 130, 140) est configurée pour émettre un signal de tension selon le déplacement de la pièce rotative (80, 83, 86) pour la détection dans la direction axiale et un signal de tension selon le déplacement de la pièce rotative (80, 83, 86) pour la détection dans une direction avant/arrière qui est perpendiculaire à la fois à la direction axiale et à une direction verticale.

11. Appareil de détection selon l'une des revendications 2, 3 et 10, comprenant en outre :
une unité d'acquisition de signal (161) configurée pour acquérir une enveloppe (ENV1) du signal de tension (v1) émis par l'une des bobines de réception (110, 120, 130, 140, 150) ;
une unité de calcul de tension de décalage (160) configurée pour calculer, sur la base des informations d'angle de rotation de la pièce rotative (80, 83, 86) pour la détection, une tension de décalage axiale (vofty) qui représente l'enveloppe (ENV1) dans un état de référence ; et
une unité de calcul de tension de déplacement (161) configurée pour calculer une tension de déplacement axiale (vdy) en soustrayant la tension de décalage axiale (vofty) calculée de l'enveloppe (ENV1) acquise.

12. Appareil de détection selon la revendication 11, comprenant en outre une unité de calcul de force (72) configurée pour calculer, sur la base de la tension de déplacement axiale (vdy) calculée, une force axiale (Fy) agissant sur l'objet rotatif.

13. Appareil de détection selon l'une des revendications 2, 3 et 10, dans lequel
les deux bobines de réception (110, 120, 130, 140, 150) sont une première bobine de réception (110, 130) et une seconde bobine de réception (120, 140),
l'appareil de détection comprenant en outre :
une unité d'acquisition de signal (163) configurée pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
une unité de calcul de tension de décalage (162) configurée pour calculer, sur la base des informations d'angle de rotation de la pièce rotative (80, 83, 86) pour la détection, à la fois une première tension de décalage axiale (vofty1) qui représente la première enveloppe (ENV1) dans un état de référence et une seconde tension de décalage axiale (vofty2) qui représente la seconde enveloppe (ENV2) dans l'état de référence ;
une unité de calcul de tension de déplacement (163) configurée pour calculer une première tension de déplacement axiale (vdy1) en soustrayant la première tension de décalage axiale (vofty1) calculée de la première enveloppe (ENV1) acquise et pour calculer une seconde tension de décalage axiale (vdy2) en soustrayant la seconde tension de décalage axiale (vofty2) calculée de la seconde enveloppe (ENV2) acquise ; et
une unité de calcul de tension totale (164) configurée pour calculer une tension totale (vdty) en additionnant une valeur absolue de la première tension de déplacement axiale (vdy1) calculée et une valeur absolue de la seconde tension de déplacement axiale (vdy2) calculée.

14. Appareil de détection selon la revendication 13, comprenant en outre une unité de calcul de force (72) configurée pour calculer, sur la base de la tension total (vdty) calculée, une force axiale (Fy) agissant sur l'objet rotatif.

15. Appareil de détection selon l'une des revendications 2, 3 et 10, dans lequel
les deux bobines de réception (110, 120, 130, 140, 150) sont une première bobine de réception (110, 130) et une seconde bobine de réception (120, 140),
l'appareil de détection comprenant en outre :
une unité d'acquisition de signal (163) configurée pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
une unité de calcul de tension de décalage (162) configurée pour calculer, sur la base des informations d'angle de rotation de la pièce rotative (80, 83, 86) pour la détection, à la fois une première tension de décalage axiale (vofty1) qui représente la première enveloppe (ENV1) dans un état de référence et une seconde tension de décalage axiale (vofty2) qui représente la seconde enveloppe (ENV2) dans l'état de référence ;
une unité de calcul de tension de déplacement (163) configurée pour calculer une première tension de déplacement axiale (vdy1) en soustrayant la première tension de décalage axiale (vofty1) calculée de la première enveloppe (ENV1) acquise et pour calculer une seconde tension de décalage axiale (vdy2) en soustrayant la seconde tension de décalage axiale (vofty2) calculée de la seconde enveloppe (ENV2) acquise ; et
une unité de calcul de force (72) configurée pour calculer, sur la base de la première tension de déplacement axiale (vdy1) calculée, une première force axiale (Fy1) qui représente une force axiale (Fy) agissant sur l'objet rotatif et pour calculer, sur la base de la seconde tension de déplacement axiale (vdy2) calculée, une seconde force axiale (Fy2) qui représente également la force axiale (Fy) agissant sur l'objet rotatif,
dans lequel
l'unité de calcul de force (72) calcule la première force axiale (Fy1) en tant que force axiale (Fy) agissant sur l'objet rotatif pendant une période où la première tension de décalage axiale (vofty1) est supérieure à la seconde tension de décalage axiale, et calcule la seconde force axiale (Fy2) en tant que force axiale (Fy) agissant sur l'objet rotatif pendant une période où la seconde tension de décalage axiale (vofty2) est supérieure à la première tension de décalage axiale.

16. Appareil de détection selon l'une des revendications 2, 3 et 10, dans lequel
les deux bobines de réception (110, 120, 130, 140, 150) sont une première bobine de réception (110, 130) et une seconde bobine de réception (120, 140),
l'appareil de détection comprenant en outre :
une unité d'acquisition de signal (163) configurée pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
une unité de calcul de tension de décalage (162) configurée pour calculer, sur la base des informations d'angle de rotation de la pièce rotative (80, 83, 86) pour la détection, à la fois une première tension de décalage axiale (vofty1) qui représente la première enveloppe (ENV1) dans un état de référence et une seconde tension de décalage axiale (vofty2) qui représente la seconde enveloppe (ENV2) dans l'état de référence ;
une unité de calcul de tension de déplacement (163) configurée pour calculer une première tension de déplacement axiale (vdy1) en soustrayant la première tension de décalage axiale (vofty1) calculée de la première enveloppe (ENV1) acquise et pour calculer une seconde tension de décalage axiale (vdy2) en soustrayant la seconde tension de décalage axiale (vofty2) calculée de la seconde enveloppe (ENV2) acquise ; et
une unité de calcul de force (72) configurée pour calculer, pendant une période où la première tension de décalage axiale (vofty1) est supérieure à la seconde tension de décalage axiale (vofty2), une force axiale (Fy) agissant sur l'objet rotatif sur la base de la première tension de déplacement axiale (vdy1) et pour calculer, pendant une période où la seconde tension de décalage axiale (vofty2) est supérieure à la première tension de décalage axiale, la force axiale (Fy) agissant sur l'objet rotatif sur la base de la seconde tension de déplacement axiale (vdy2).

17. Appareil de détection selon la revendication 2 ou 3, dans lequel
les deux bobines de réception (110, 120, 130, 140, 150) sont une première bobine de réception (110, 130) et une seconde bobine de réception (120, 140),
l'appareil de détection comprenant en outre :
une unité d'acquisition de signal (169) configurée pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
une unité de calcul de tension de décalage (168) configurée pour calculer, sur la base des informations d'angle de rotation de la pièce rotative (80, 83, 86) pour la détection, à la fois une tension de décalage axiale (vofty) qui représente la première enveloppe (ENV1) dans un état de référence et une tension de décalage verticale (voftz) qui représente la seconde enveloppe (ENV2) dans l'état de référence ; et
une unité de calcul de tension de déplacement (169),
dans laquelle
l'unité de calcul de tension de déplacement (169) est configurée pour :
calculer une tension de déplacement axiale (vdy) en soustrayant la tension de décalage axiale (vofty) calculée de la première enveloppe (ENV2) acquise ;
calculer, sur la base de la tension de déplacement axiale (vdy) calculée, une tension de correction verticale (vcz) qui quantifie un effet du déplacement de la pièce rotative (80, 83, 86) pour la détection dans la direction axiale de la seconde enveloppe (ENV2) ; et
calculer une tension de déplacement vertical (vdz) en soustrayant à la fois la tension de décalage vertical (voftz) calculée et la tension de correction verticale (vcz) calculée de la seconde enveloppe (ENV2) acquise.

18. Appareil de détection selon la revendication 17, comprenant en outre une unité de calcul de force (72) configurée pour :
calculer, sur la base de la tension de déplacement axiale (vdy) calculée, une force axiale (Fy) agissant sur l'objet rotatif ; et
calculer, sur la base de la tension de déplacement vertical (vdz) calculée, une charge verticale (Fz) agissant sur l'objet rotatif.

19. Appareil de détection selon la revendication 10, dans lequel
les deux bobines de réception (110, 120, 130, 140, 150) sont une première bobine de réception (110, 130) et une seconde bobine de réception (120, 140),
l'appareil de détection comprenant en outre :
une unité d'acquisition de signal (171) configurée pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
une unité de calcul de tension de décalage (170) configurée pour calculer, sur la base des informations d'angle de rotation de la pièce rotative (80, 83, 86) pour la détection, à la fois une tension de décalage axiale (vofty) qui représente la première enveloppe (ENV1) dans un état de référence et une tension de décalage avant/arrière (voftx) qui représente la seconde enveloppe (ENV2) dans l'état de référence ; et
une unité de calcul de tension de déplacement (171),
dans lequel
l'unité de calcul de tension de déplacement (171) est configurée pour :
calculer une tension de déplacement axiale (vdy) en soustrayant la tension de décalage axiale (vofty) calculée de la première enveloppe (ENV1) acquise ;
calculer, sur la base de la tension de déplacement axiale (vdy) calculée, une tension de correction avant/arrière (vcx) qui quantifie un effet du déplacement de la pièce rotative (80, 83, 86) pour la détection dans la direction axiale de la seconde enveloppe (ENV2) ; et
calculer une tension de décalage avant/arrière (vdx) en soustrayant à la fois la tension de décalage avant/arrière (voftx) calculée et la tension de correction avant/arrière (vcx) calculée de la seconde enveloppe (ENV2) acquise.

20. Appareil de détection selon la revendication 19, comprenant en outre une unité de calcul de force (72) configurée pour :
calculer, sur la base de la tension de déplacement axiale (vdy) calculée, une force axiale (Fy) agissant sur l'objet rotatif ; et
calculer, sur la base de la tension de déplacement avant/arrière (vdx) calculée, une force avant/arrière (Fx) agissant sur l'objet rotatif.

21. Appareil de détection selon la revendication 11, comprenant en outre une unité de filtrage (172) configurée pour effectuer un processus de filtrage passe-bas à l'enveloppe (ENV1) acquise,
dans lequel
l'enveloppe (ENV1), qui a été soumise à un processus de filtrage passe-bas, est transmise à l'unité de calcul de la tension de déplacement.

22. Appareil de détection selon l'une des revendications 2, 3 et 10, comprenant en outre :
une unité d'acquisition de signal (172) configurée pour acquérir une enveloppe (ENV1) du signal de tension (v1) émis par l'une des bobines de réception (110, 120, 130, 140, 150) ;
une unité de calcul d'informations d'amplitude (174) configurée pour calculer, sur la base des informations d'angle de rotation de la pièce rotative (80, 83, 86) pour la détection et de l'enveloppe (ENV1) acquise, une tension d'information d'amplitude (vmaxy) de l'enveloppe (ENV1) ; et
une unité de calcul de tension de déplacement (175) configurée pour calculer une tension de déplacement axiale (vdy) en soustrayant une tension de référence (vmaxofty), qui représente la tension d'information d'amplitude (vmaxy) dans un état de référence, de la tension d'information d'amplitude (vmaxy) calculée.

23. Appareil de détection selon la revendication 22, comprenant en outre une unité de calcul de force (72) configurée pour calculer, sur la base de la tension de déplacement axiale (vdy) calculée, une force axiale (Fy) agissant sur l'objet rotatif.

24. Appareil de détection selon l'une des revendications 1 à 4 et 7 à 10, dans lequel
la pièce cible de détection (81, 82, 84, 85, 87, 88) comporte :
une configuration dans laquelle des parties métalliques (81) et des parties (82) pénétrées dans la direction axiale sont disposées en alternance dans la direction circonférentielle ;
une configuration dans laquelle des parties en retrait (88), qui sont en retrait dans la direction axiale, et des parties en saillie (87), qui font saillie dans la direction axiale par rapport aux parties en retrait (88), sont disposées en alternance dans la direction circonférentielle ; ou
une configuration dans laquelle des parties métalliques (81) et des parties non métalliques (82, 84) sont disposées en alternance dans la direction circonférentiel,
l'appareil de détection comprend en outre une unité de calcul d'angle (73) configurée pour calculer, sur la base du signal de tension émis par chacune des bobines de réception (110, 120, 130, 140, 150), un angle de rotation de la pièce rotative (80, 83, 86) pour la détection.

25. Programme applicable à l'appareil de détection selon l'une des revendications 2, 3 et 10, le programme étant configuré pour amener un ordinateur (70) prévu dans l'appareil de détection à exécuter :
un processus d'acquisition de signal pour acquérir une enveloppe (ENV1) du signal de tension (v1) émis par l'une des bobines de réception (110, 120, 130, 140, 150) ;
un processus de calcul de tension de décalage pour calculer, sur la base des informations d'angle de rotation de la pièce rotative (80, 83, 86) pour la détection, une tension de décalage axiale (vofty) qui représente l'enveloppe (ENV1) dans un état de référence ; et
un processus de calcul de tension de déplacement pour calculer une tension de déplacement axiale (vdy) en soustrayant la tension de décalage axiale (vofty) calculée de l'enveloppe (ENV1) acquise.

26. Programme applicable à l'appareil de détection selon l'une des revendications 2, 3 et 10, dans lequel
les deux bobines de réception (110, 120, 130, 140, 150) sont une première bobine de réception (110, 130) et une seconde bobine de réception (120, 140),
le programme étant configuré pour amener un ordinateur (70) prévu dans l'appareil de détection à exécuter :
un processus d'acquisition de signal pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
un processus de calcul de tension de décalage pour calculer, sur la base des informations d'angle de rotation de la pièce rotative (80, 83, 86) pour la détection, à la fois une première tension de décalage axiale (vofty1) qui représente la première enveloppe (ENV1) dans un état de référence et une seconde tension de décalage axiale (vofty2) qui représente la seconde enveloppe (ENV2) dans l'état de référence ;
un processus de calcul de tension de déplacement pour calculer une première tension de déplacement axiale (vdy1) en soustrayant la première tension de décalage axiale (vofty1) calculée de la première enveloppe (ENV1) acquise et pour calculer une seconde tension de décalage axiale (vdy2) en soustrayant la seconde tension de décalage axiale (vofty2) calculée de la seconde enveloppe (ENV2) acquise ; et
un processus de calcul de tension totale pour calculer une tension totale (vdty) en additionnant une valeur absolue de la première tension de déplacement axiale (vdy1) calculée et une valeur absolue de la seconde tension de déplacement axiale (vdy2) calculée.

27. Programme applicable à l'appareil de détection selon l'une des revendications 2, 3 et 10, dans lequel
les deux bobines de réception (110, 120, 130, 140, 150) sont une première bobine de réception (110, 130) et une seconde bobine de réception (120, 140),
le programme étant configuré pour amener un ordinateur (70) prévu dans l'appareil de détection à exécuter :
un processus d'acquisition de signal pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
un processus de calcul de tension de décalage pour calculer, sur la base des informations d'angle de rotation de la pièce rotative (80, 83, 86) pour la détection, à la fois une première tension de décalage axiale (vofty1) qui représente la première enveloppe (ENV1) dans un état de référence et une seconde tension de décalage axiale (vofty2) qui représente la seconde enveloppe (ENV2) dans l'état de référence ;
un processus de calcul de tension de déplacement pour calculer une première tension de déplacement axiale (vdy1) en soustrayant la première tension de décalage axiale (vofty1) calculée de la première enveloppe (ENV1) acquise et pour calculer une seconde tension de décalage axiale (vdy2) en soustrayant la seconde tension de décalage axiale (vofty2) calculée de la seconde enveloppe (ENV2) acquise ; et
un processus de calcul de force pour calculer, sur la base de la première tension de déplacement axiale (vdy1) calculée, une première force axiale (Fy1) qui représente une force axiale (Fy) agissant sur l'objet rotatif et pour calculer, sur la base de la seconde tension de déplacement axiale (vdy2) calculée, une seconde force axiale (Fy2) qui représente également la force axiale (Fy) agissant sur l'objet rotatif,
dans lequel
dans le processus de calcul de force :
la première force axiale (Fy1) est calculée en tant que force axiale (Fy) agissant sur l'objet rotatif, pendant une période où la première tension de décalage axiale (vofty1) est supérieure à la seconde tension de décalage axiale (vofty2) ; et
la seconde force axiale (Fy2) est calculée en tant que force axiale (Fy) agissant sur l'objet rotatif, pendant une période où la seconde tension de décalage axiale (vofty2) est supérieure à la première tension de décalage axiale (vofty1).

28. Programme applicable à l'appareil de détection selon l'une des revendications 2, 3 et 10, dans lequel
les deux bobines de réception (110, 120, 130, 140, 150) sont une première bobine de réception (110, 130) et une seconde bobine de réception (120, 140),
le programme étant configuré pour amener un ordinateur (70) prévu dans l'appareil de détection à exécuter :
un processus d'acquisition de signal pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
un processus de calcul de tension de décalage pour calculer, sur la base des informations d'angle de rotation de la pièce rotative (80, 83, 86) pour la détection, à la fois une première tension de décalage axiale (vofty1) qui représente la première enveloppe (ENV1) dans un état de référence et une seconde tension de décalage axiale (vofty2) qui représente la seconde enveloppe (ENV2) dans l'état de référence ;
un processus de calcul de tension de déplacement pour calculer une première tension de déplacement axiale (vdy1) en soustrayant la première tension de décalage axiale (vofty1) calculée de la première enveloppe (ENV1) acquise et pour calculer une seconde tension de décalage axiale (vdy2) en soustrayant la seconde tension de décalage axiale (vofty2) calculée de la seconde enveloppe (ENV2) acquise ; et
un processus de calcul de force pour calculer, pendant une période où la première tension de décalage axiale (vofty1) est supérieure à la seconde tension de décalage axiale (vofty2), une force axiale (Fy) agissant sur l'objet rotatif sur la base de la première tension de déplacement axiale (vdy1) et pour calculer, pendant une période où la seconde tension de décalage axiale (vofty2) est supérieure à la première tension de décalage axiale (vofty1), la force axiale (Fy) agissant sur l'objet rotatif sur la base de la seconde tension de déplacement axiale (vdy2).

29. Programme applicable à l'appareil de détection selon la revendication 2 ou 3, dans lequel
les deux bobines de réception (110, 120, 130, 140, 150) sont une première bobine de réception (110, 130) et une seconde bobine de réception (120, 140),
le programme étant configuré pour amener un ordinateur (70) prévu dans l'appareil de détection à exécuter :
un processus d'acquisition de signal pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
un processus de calcul de tension de décalage pour calculer, sur la base des informations d'angle de rotation de la pièce rotative (80, 83, 86) pour la détection, à la fois une tension de décalage axiale (vofty) qui représente la première enveloppe (ENV1) dans un état de référence et une tension de décalage verticale (voftz) qui représente la seconde enveloppe (ENV2) dans l'état de référence ; et
un processus de calcul de tension de déplacement,
dans lequel
dans le processus de calcul de tension de déplacement :
une tension de déplacement axiale (vdy) est calculée en soustrayant la tension de décalage axiale (vofty) calculée de la première enveloppe (ENV1) acquise ;
une tension de correction verticale (vcz) qui quantifie un effet du déplacement de la pièce rotative (80, 83, 86) pour la détection dans la direction axiale de la seconde enveloppe (ENV2) est calculée sur la base de la tension de déplacement axiale (vdy) calculée ; et
une tension de déplacement vertical (vdz) est calculée en soustrayant à la fois la tension de décalage vertical (voftz) calculée et la tension de correction verticale (vcz) calculée de la seconde enveloppe (ENV2) acquise.

30. Programme applicable à l'appareil de détection selon la revendication 10, dans lequel
les deux bobines de réception (110, 120, 130, 140, 150) sont une première bobine de réception (110, 130) et une seconde bobine de réception (120, 140),
le programme étant configuré pour amener un ordinateur (70) prévu dans l'appareil de détection à exécuter :
un processus d'acquisition de signal pour acquérir à la fois une première enveloppe (ENV1), qui est l'enveloppe d'un premier signal de tension (v1) émis par la première bobine de réception (110, 130) et une seconde enveloppe (ENV2) qui est l'enveloppe d'un second signal de tension (v2) émis par la seconde bobine de réception (120, 140) ;
un processus de calcul de tension de décalage pour calculer, sur la base des informations d'angle de rotation de la pièce rotative (80, 83, 86) pour la détection, à la fois une tension de décalage axiale (vofty) qui représente la première enveloppe (ENV1) dans un état de référence et une tension de décalage avant/arrière (voftx) qui représente la seconde enveloppe (ENV2) dans l'état de référence ; et
un processus de calcul de tension de déplacement,
dans lequel
dans le processus de calcul de tension de déplacement :
une tension de déplacement axiale (vdy) est calculée en soustrayant la tension de décalage axiale (vofty) calculée de la première enveloppe (ENV1) acquise ;
une tension de correction avant/arrière (vcx) qui quantifie un effet du déplacement de la pièce rotative (80, 83, 86) pour la détection dans la direction axiale de la seconde enveloppe (ENV2) est calculée sur la base de la tension de déplacement axiale (vdy) calculée ; et
une tension de décalage avant/arrière (vdx) est calculée en soustrayant à la fois la tension de décalage avant/arrière (voftx) calculée et la tension de correction avant/arrière (vcx) calculée de la seconde enveloppe (ENV2) acquise.

31. Programme applicable à l'appareil de détection selon l'une des revendications 2, 3 et 10, le programme étant configuré pour amener un ordinateur (70) prévu dans l'appareil de détection à exécuter :
un processus d'acquisition de signal pour acquérir une enveloppe (ENV1) du signal de tension (v1) émis par l'une des bobines de réception (110, 120, 130, 140, 150) ;
un processus de calcul d'informations d'amplitude pour calculer, sur la base des informations d'angle de rotation de la pièce rotative (80, 83, 86) pour la détection et de l'enveloppe (ENV1) acquise, une tension d'information d'amplitude (vmaxy) de l'enveloppe (110, 120, 130, 140, 150) ; et
un processus de calcul de tension de déplacement pour calculer une tension de déplacement axiale (vdy) en soustrayant une tension de référence (vmaxofty), qui représente la tension d'informations d'amplitude (vmaxy) dans un état de référence, de la tension d'informations d'amplitude (vmaxy) calculée.
